# EUROPEAN PATENT SPECIFICATION

(11) **EP 3 032 379 B1**
(45) Date of publication and mention of the grant of the patent: **17.02.2021**
(21) Application number: 15195320.5
(22) Date of filing: 19.11.2015
(51) Int. Cl.: G06F 3/01, H04M 1/02, H04M 1/03, H04M 1/725, G06F 1/32, H04W 52/02, G06F 1/16, H04R 1/34, H01R 13/62, H01Q 1/24, H04M 1/23, H04R 1/28, H04R 17/02, H04R 17/00, H01Q 1/44

(54) **DEVICE AND METHOD FOR CONTROLLING A PLURALITY OF INPUT/OUTPUT DEVICES BASED ON SITUATION CONTEXT**
VORRICHTUNG UND VERFAHREN ZUR STEUERUNG EINER VIELZAHL VON EINGABE-/AUSGABEVORRICHTUNGEN BASIEREND AUF DEM SITUATIONSKONTEXT
DISPOSITIF ET PROCÉDÉ POUR COMMANDER UNE PLURALITÉ DE DISPOSITIFS D'ENTRÉE/SORTIE BASÉE SUR LE CONTEXTE DE SITUATION

(30) Priority: 20.11.2014 KR 20140162724
(43) Date of publication of application: 15.06.2016
(73) Proprietor: Samsung Electronics Co., Ltd., Gyeonggi-do 16677 (KR)
(72) Inventor: Park, Jung-Sik, Suwon-si (KR); Kim, Seong-Eun, Hwaseong-si (KR); Kim, Ju-Nyun, Yongin-si (KR); Yoon, Byoung-Uk, Hwaseong-si (KR); Cha, Do-Hun, Yongin-si (KR); Hong, Hyun-Ju, Osan-si (KR); Lee, Yo-Han, Seongnam-si (KR); Chung, Jae-Ouk, Seoul (KR)
(74) Representative: Nederlandsch Octrooibureau

(56) References cited:
- WO-A1-2013/093567
- WO-A2-2010/027565
- WO-A2-2014/036558
- CN-A- 103 165 982
- KR-A- 20110 133 373
- US-A1- 2008 074 329
- US-A1- 2012 200 173
- US-A1- 2013 328 820
- US-A1- 2014 044 286
- US-A1- 2014 092 139

## Description

### TECHNICAL FIELD

The present disclosure relates to an electronic device that includes a plurality of input/output (I/O) devices that vary in function according to a peripheral situation of the electronic device, and a method for controlling the plurality of I/O devices.

### BACKGROUND

Due to the advancement of technologies, almost all individuals have a communicable electronic device (e.g., a mobile communication device). In addition, in order to satisfy various users' desires, the electronic devices have been equipped with various functions and the designs of the electronic devices have been diversified. The consumers in the market have desired products that have a function that may provide convenience and a satisfactory design. WO 2013/093567 A1 describes a method and an apparatus for handling the display and audio component based on the orientation of the display for a portable device. US 2013/328820 A1 describes an electronic device that has a panel forming an external appearance and causes the panel to vibrate. WO 2010/027565 A2 describes a minimum Z height handheld electronic device that includes a single seamless housing having a front opening, a cover disposed within the front opening and attached to the seamless housing without a bezel; and methods of the assembly. KR 2011 0133373 A describes a portable electronic apparatus provided to offer 3D sound effects by arranging controllable speakers to plural locations. CN 103165982 A describes a wireless communication equipment comprising a function key arranged on the surface of an equipment shell, a radio-frequency circuit arranged inside the equipment and a metal connecting piece arranged inside the equipment, wherein an antenna feeding point is positioned on the function key; and two ends of the metal connecting piece are connected with the antenna feeding point on the function key and the radio-frequency circuit respectively. US 2008/074329 A1 describes button antennas, handheld electronic devices containing button antennas and methods for using button antennas and handheld electronic devices. US 2012/200173 A1 describes a mobile computing device having a connector that is provided with structure and resources. WO 2014/036558 A2 describes a method and a system for smart contact arrays and stacked devices. US 2014/044286 A1 describes a dynamic speaker selection for mobile computing devices. US 2014/092139 A1 describes adjusting content display orientation on a screen based on user orientation.

The above information is presented as background information only to assist with an understanding of the present disclosure. No determination has been made, and no assertion is made, as to whether any of the above might be applicable as prior art with regard to the present disclosure.

### SUMMARY

The present invention is defined by the independent claims. The dependent claims define advantageous embodiments of the invention. It shall be noted that the references made through this description to an "embodiment", "embodiment of this disclosure", "example", "aspect" or "configuration" may point to alternative aspects related to the invention but do not necessarily correspond to real realisations of it. The actual embodiments of the invention fall within the scope of the appended claims. It is to be understood that other examples can be practiced and various modifications and structural changes can be made to these actual embodiments of the invention without departing from the scope of the claims, as would be understood by one of ordinary skill in the art.

Aspects of the present disclosure show that an electronic device may be configured such that the positions of input/output (I/O) devices included therein are fixed. For example, the electronic device may include one or more components that have an assigned function, such as a receiver, a speaker, and a microphone. In such a case, the components may be exposed to the outside at the designated positions (e.g., may be differentiated in design) such that a user may easily discriminate the position of each of the components. For example, the receiver or the speaker may only be positioned in a first area of the electronic device (e.g., an area to which the user's ear approaches), and the microphone may only be positioned in a second area of the electronic device (e.g., an area to which the user's mouth approaches). The electronic device may include holes that are capable of exposing specific components, respectively, in the exterior that protects various components included in the electronic device. For example, the electronic device may include a speaker hole, a receiver hole, a microphone hole, an external interface connection hole, or a key (e.g., a physical key) hole. Through the holes, the electronic device may perform an input, an output, a connection with an external device, or the like.

Aspects of the present disclosure are to address at least the above-mentioned problems and/or disadvantages and to provide at least the advantages described below. Accordingly, an aspect of the present disclosure is to provide an electronic device that can be flexibly used in various situations without being affected by a disposed orientation of the electronic device through, for example, a plurality of I/O devices having input and output functions, and a method of using the electronic device.

Another aspect of the present disclosure is to provide an electronic device and a method that can control the function of an I/O device according to, for example, how a user uses the electronic device (e.g., based on situation information of the user for the electronic device).

In accordance with an aspect of the present disclosure, a method for controlling a plurality of I/O devices is provided. The method includes determining situation information for the electronic device in response to, for example, an input of a user who handles the electronic device, performing input/output through a first I/O device disposed in a first area of the electronic device when the situation information is first situation information , and performing the input/output through a second I/O device disposed in a second area of the electronic device when the situation information is second situation information.

The electronic device and method according to various embodiments of the present disclosure may simplify a design because the exterior that protects the electronic device does not include a hole that is exposed to the outside (e.g., exposed to the external environment), and thus, may be more esthetically satisfying to the user.

The electronic device and method according to various embodiments of the present disclosure may selectively provide, for example, a plurality of I/O devices with a function that is suitable for situation information of the user of the electronic device so that the electronic device can be used at various orientations. Thus, an improved convenience can be provided in using the electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A to 1C illustrate a configuration of an electronic device 101 according to various embodiments of the present disclosure, which is viewed at various angles, in which FIG. 1A is a perspective view illustrating the front side of the electronic device, FIG. 1B is a perspective view illustrating the rear side of the electronic device, and FIG. 1C is a cross-sectional view taken along line A-A in FIG. 1A;
FIG. 2 is an external interface of an electronic device according to various embodiment of the present disclosure;
FIG. 3 is a view illustrating a circuit diagram of an electronic device according to various embodiments of the present disclosure;
FIG. 4 is a view illustrating various structures of an electronic device according to various embodiments of the present disclosure;
FIG. 5 is a perspective view illustrating an electronic device, according to various embodiments of the present disclosure, in a disassembled state;
FIG. 6 is a view illustrating an electronic device within a network environment according to various embodiments of the present disclosure;
FIG. 7 is a block diagram of an electronic device according to various embodiments of the present disclosure;
FIG. 8 is a view illustrating a use environment of an electronic device according to various embodiments of the present disclosure;
FIG. 9 is a view illustrating user interfaces that correspond to I/O devices of an electronic device, respectively, according to various embodiments of the present disclosure;
FIG. 10 is a view illustrating an user interface of an electronic device according to various embodiments of the present disclosure;
FIG. 11 is a view illustrating an use of an electronic device according to various embodiments of the present disclosure;
FIG. 12 is a view illustrating an user interface according to various embodiments of the present disclosure;
FIG. 13 is a view illustrating an user interface according to various embodiments of the present disclosure;
FIG. 14 is a view illustrating a flowchart for an operation of controlling an I/O device of an electronic device according to various embodiments of the present disclosure;
FIG. 15 is a view illustrating a flowchart for an operation of controlling an I/O device of an electronic device according to various embodiments of the present disclosure;
FIG. 16 is a flowchart illustrating an operation of controlling a sound output device according to various embodiments of the present disclosure;
FIG. 17 is a block diagram of an electronic device according to various embodiments of the present disclosure; and
FIG. 18 is a block diagram of a program module according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

Although specific embodiments of the present disclosure are illustrated in the drawings and relevant detailed descriptions are provided, various changes can be made and various embodiments may be provided. Accordingly, various embodiments of the present disclosure are not limited to the specific embodiments and should be construed as including all changes, substitutes included in the ideas and technological scopes of embodiments of the present disclosure. In the explanation of the drawings, similar reference numerals are used for similar elements.

The terms "include" or "may include" used in the embodiments of the present disclosure indicate the presence of disclosed corresponding functions, operations, elements, and the like, and do not limit additional one or more functions, operations, elements, and the like. In addition, it should be understood that the terms "include" or "have" used in the embodiments of the present disclosure are to indicate the presence of features, numbers, operations, elements, parts, or a combination thereof described in the specifications, and do not preclude the presence or addition of one or more other features, numbers, operations, elements, parts, or a combination thereof.

The term "or" used in the embodiments of the present disclosure includes any and all combinations of words enumerated with it. For example, "A or B" means including A, including B, or including both A and B.

Although the terms such as "first" and "second" used in the various embodiments of the present disclosure may modify various elements of the various embodiments of the present disclosure, these terms do not limit the corresponding elements. For example, these terms do not limit an order and/or importance of the corresponding elements. These terms may be used for the purpose of distinguishing one element from another element. For example, a first user device and a second user device all indicate user devices and may indicate different user devices. For example, a first element may be named a second element without departing from the scope of right of the various embodiments of the present disclosure, and similarly, a second element may be named a first element.

It will be understood that when an element is mentioned as being "connected" or "coupled" to another element, the element may be directly connected or coupled to another element, and there may be an intervening element between the element and another element. To the contrary, it will be understood that when an element is mentioned as being "directly connected" or "directly coupled" to another element, there is no intervening element between the element and another element.

All of the terms used herein including technical or scientific terms have the same meanings as those generally understood by an ordinary skilled person in the related art unless they are defined otherwise. The terms defined in a generally used dictionary should be interpreted as having the same meanings as the contextual meanings of the relevant technology and should not be interpreted as having ideal or exaggerated meanings unless they are clearly defined in the various embodiments.

An electronic device according to various embodiments of the present disclosure may be a device that is equipped with a communication function. For example, the electronic device may include at least one of a smartphone, a tablet personal computer (PC), a mobile phone, a video phone, an electronic book reader, a desktop PC, a laptop PC, a netbook computer, a personal digital assistant (PDA), a portable multimedia player (PMP), an Moving Picture Experts Group phase 1 or phase 2 (MPEG-1 or MPEG-2) audio layer 3(MP3) player, a mobile medical machine, a camera, or a wearable device (e.g., a head-mounted-device (HMD) such as electronic glasses, electronic clothing, an electronic bracelet, an electronic necklace, an electronic appcessory, electronic tattoos, or a smartwatch).

According to an embodiment of the present disclosure, the electronic device may be a smart home appliance that is equipped with a communication function. For example, the smart home appliance may include at least one of a television, a digital versatile disk (DVD) player, a stereo, a refrigerator, an air conditioner, a cleaner, an oven, a microwave oven, a washing machine, an air cleaner, a set-top box, a television (TV) box (for example, Samsung HomeSync™, Apple TV™, or Goggle TV™), a game console, an electronic dictionary, an electronic key, a camcorder, or an electronic album.

According to an embodiment of the present disclosure, the electronic device may include at least one of various medical machines (for example, magnetic resonance angiography (MRA), magnetic resonance imaging (MRI), computerized tomography (CT), a tomography, an ultrasound machine, and the like), a navigation device, a global positioning system (GPS) receiver, an event data recorder (EDR), a flight data recorder (FDR), an automotive infotainment device, electronic equipment for ship (for example, a navigation equipment for ship, a gyro compass, and the like), avionics, a security device, or an industrial or home robot.

According to an embodiment of the present disclosure, the electronic device may include at least one of a part of furniture or a building/a structure including a communication function, an electronic board, an electronic signature receiving device, a projector, and various measurement devices (for example, water, power, gas, radio waves, and the like). The electronic device according to various embodiments of the present disclosure may be one or a combination of one or more of the above-mentioned devices. In addition, it is obvious to an ordinary skilled person in the related art that the electronic device according to various embodiments of the present disclosure is not limited to the above-mentioned devices.

Hereinafter, an electronic device according to various embodiments will be explained with reference to the accompanying drawings. The term "user" used in the various embodiments may refer to a person who uses the electronic device or a device that uses the electronic device (for example, an artificial intelligence electronic device).

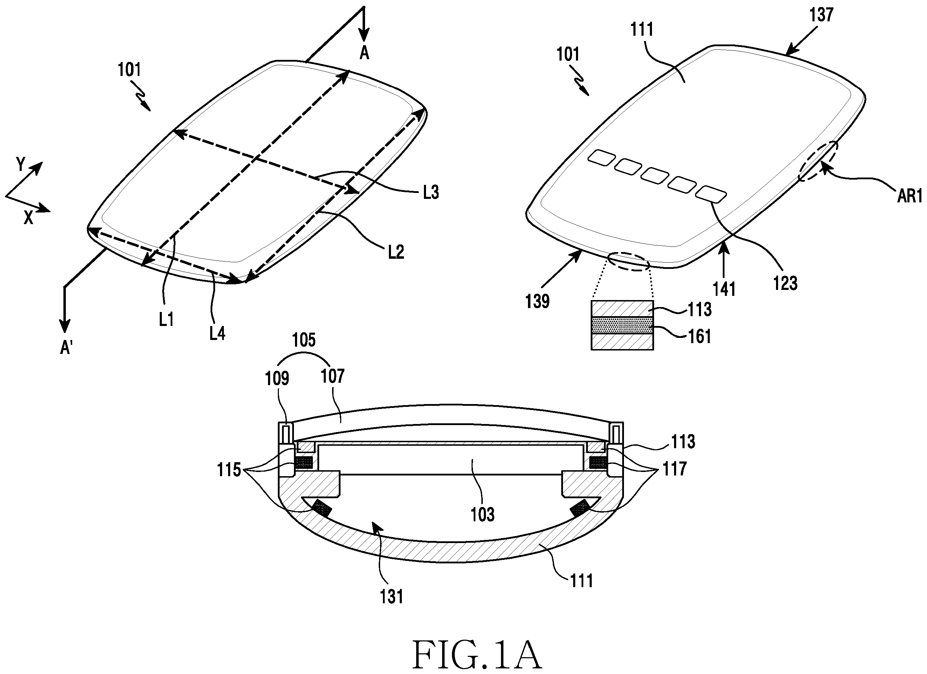

FIGS. 1A to 1C illustrate a configuration, in which an electronic device 101 is viewed at various angles, according to various embodiments of the present disclosure.

Referring to FIG. 1A, an electronic device 101, according to various embodiments of the present disclosure, may include, for example, a display module 103, a front cover 105, a rear cover 111, a frame 113, a first input/output (I/O) device 115, and a second I/O device 117.

According to an embodiment of the present disclosure, the front cover 105, the rear cover 111, and the frame 113 may form an exterior or an outer surface (e.g., a housing) that is visually recognizable by the user in the process of ordinarily using (e.g., distributing, selling, or using by a consumer) of the electronic device 101. The exterior of the electronic device 101 may be formed such that, for example, a perforated portion (e.g., a hole) is not substantially visible. For example, the front cover 105, the rear cover 111, and the frame 113 may not include a substantial hole that is recognizable by the user. For example, the exterior of the electronic device 101 may be formed such that no hole is recognizable when the exterior of the electronic device 101 is viewed by the user. A hole may refer to a portion that is formed on the surface of the electronic device 101 and allows, for example, a component that may be mounted in an inner space 131 of the electronic device 101 (e.g., a speaker, a home button, a power button, a camera, or a connector) through at least a part of the front cover 105, the rear cover 111, or the frame 113 in order to partially expose the component to the external environment of the electronic device 101. According to an embodiment of the present disclosure, the electronic device 101 does not include a hole so that one or more components positioned within the electronic device 101 (e.g., a speaker, a home button, and a connector) may not be directly exposed to the outside of the electronic device 101.

According to an embodiment of the present disclosure, the hole may not include a gap that may be generated naturally in coupling a plurality of components of the electronic device 101 to each other. For example, in the case where the front cover 105 and the frame 113 are coupled to each other, a first gap 133 existing between the front cover 105 and the frame 113 may be excluded from the hole. For example, in the case where the rear cover 111 and the frame 113 are coupled to each other, a second gap 135 existing between the rear cover 111 and the frame 113 may be excluded from the hole.

According to an embodiment of the present disclosure, a specific hole that exposes a specific component (e.g., a camera) to the outside of the electronic device 101 may be excluded from the hole that is defined in various embodiments of the present disclosure. For example, when it is practically difficult to completely mount the specific component within the electronic device 101 according to the performance/function of the specific component, a procedure of a manufacturing process of the electronic device 101, or the like, the electronic device 101 may include a specific hole to expose at least a part of the specific component to the outer surface of the electronic device 101.

The front cover 105 may be positioned on or over a first surface of the display module 103 so as to protect the display module 103. The front cover 105 may include, for example, a display area 107 and a non-display area 109 that surrounds at least a part of the outer periphery of the display area 107. The display area 107 may include a transparent or translucent material that can project an image that is output from, for example, the display module 103.

The non-display area 109 may include a translucent or opaque material that can block the projection of the image that is output from, for example, the display module 103. According to an embodiment of the present disclosure, the front cover 105 may be formed of one window glass. In such a case, the non-display area 109 may be formed by coating the translucent or opaque material along at least a part of the outer peripheral rim of the display area 107.

According to an embodiment of the present disclosure, the front cover 105 may include a window glass and an outer peripheral frame. For example, the display area 107 may be formed of a window glass, and the non-display area 109 may be formed of an outer peripheral frame that is formed of a translucent or opaque plastic material. In such a case, the window glass and the outer peripheral frame may be integrally coupled to each other to form a single surface. According to a certain embodiment of the present disclosure, although not illustrated, the front cover 105 may not include the non-display area 109. For example, the non-display area 109 may be formed very narrowly (e.g., with an area that is 0.5% or less of the front surface of the electronic device 101) so that it may not be recognized by the user. Alternatively, for example, the front surface of the electronic device 101 may be entirely formed as the display area 107.

The rear cover 111 may be positioned on, for example, the rear surface (e.g., below the second surface of the display module 103), which is opposite to the front cover 105 of the electronic device 101, so that a space 131, in which one or more components (e.g., a battery, a printed circuit board (PCB), and a camera) may be mounted, can be formed within the electronic device 101. Although not illustrated, according to a certain embodiment, an additional display module (hereinafter, referred to as a "display module" for the convenience of description) may be disposed on the rear cover 111. According to an embodiment of the present disclosure, like or similar to the front cover 105, the rear cover 111 may include a transparent or translucent material so that an image output from the additional display module can be provided to the user.

According to an embodiment of the present disclosure, the rear cover 111 may include an external interface 123 (e.g., a connector) that may interconnect the electronic device 101 and an external device. The external interface 123 may be positioned on a surface that is recognizable by the user (e.g., the external surface) among a plurality of surfaces that form the rear cover 111 (e.g., an internal surface of that is positioned inside the electronic device 101, and an external surface that is opposite to the internal surface).

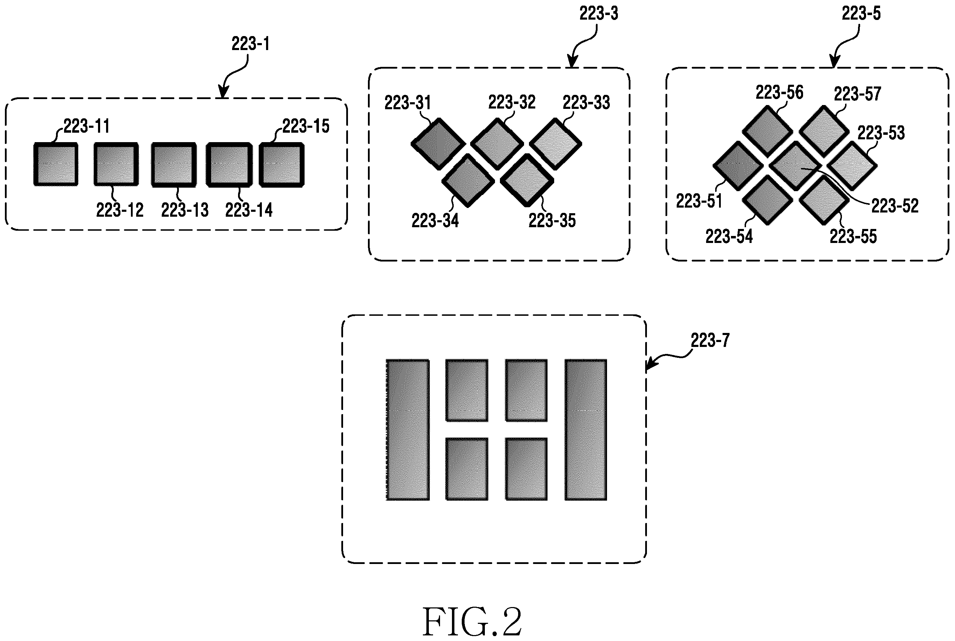

Although not illustrated, the external interface 123 may be positioned on at least one of the surfaces that form the exterior of the electronic device 101. For example, the external interface 123 may be formed of a transparent conductive material on the front cover 105 (e.g., a window glass). In addition, the external interface 123 may be formed by using the portion that is formed of the conductive material that is exposed to the outside of the electronic device 101 in the frame 113. Additional descriptions on the external interface 123 will be described below with reference to FIG. 2.

According to an embodiment of the present disclosure, although not illustrated, the rear cover 111 may include a camera hole that is positioned in at least a part of the rear cover 111. For example, the rear cover 111 may include the camera hole that exposes the camera that is mounted in the inner space 131 of the electronic device (e.g., the electronic device 101) (e.g., on the center of the rear surface).

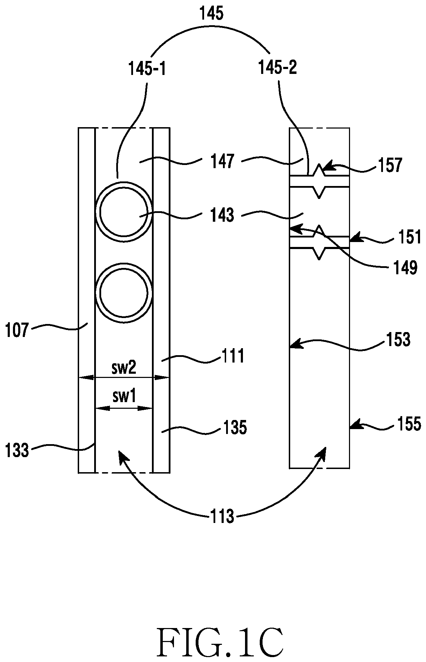

The frame 113 is positioned, for example, between the front cover 105 and the rear cover 111 so as to support the front cover 105 and the rear cover 111. For example, the front cover 105 and the rear cover 111 may be connected with each other through the frame 113. According to an embodiment of the present disclosure, the electronic device 101 may only be configured by the front cover 105 and the rear cover 111. In such a case, according to an embodiment of the present disclosure, the frame 113 may be integrally configured with the rear cover 111. For example, the frame 113 and the rear cover 111 may be manufactured in an integral form through a separate process. According to still another embodiment of the present disclosure, the front cover 105 and the rear cover 111 may be supported by a mechanical product (e.g., a bracket) that is positioned inside not to be visible on the exterior. According to an embodiment of the present disclosure, the frame 113 may be positioned on at least one side surface of the electronic device 101 (e.g., a surface that is positioned between the front surface and the rear surface of the electronic device 101). For example, the frame 113 may be in a form of a strap that surrounds the outer periphery of the electronic device 101 along the side surfaces of the electronic device 101. For example, in the case where the electronic device 101 has substantially four sides, the frame 113 may be positioned on one or more side surfaces among the four side surfaces that correspond to the four sides. Referring to FIG. 1C, the width sw1 of the frame 113 may be smaller than, for example, the width sw2 of the side surfaces of the electronic device 101. Although not illustrated, according to a certain embodiment of the present disclosure, depending on a structure in which the front cover 105 or the rear cover 111 is fastened to the frame 113, the width sw1 of at least a part of the frame 113 may be equal to or larger than the width sw2 of the electronic device 101.

According to an embodiment of the present disclosure, at least a part of the frame 113 (e.g., a cut-off area 145 or a third area AR3) may include a mesoporous material. For example, a mesoporous area 161 formed of a mesoporous material may be included between the third area AR3 and the frame 113. The mesoporous area 161 (or the cut-off area 145) may transmit the sound generated within the electronic device 101 (e.g., the sound generated through the speaker or the microphone) to the outside of the electronic device 101.

For example, the sound generated within the electronic device 101 may reach the mesoporous region 161 of the electronic device 101, which is formed of the mesoporous material, along a sound guide route. For example, in the case of an electronic device 101 that does not include a substantial hole, the sound may be output to the outside of the electronic device 101 through the mesoporous area 161 that includes the mesoporous material.

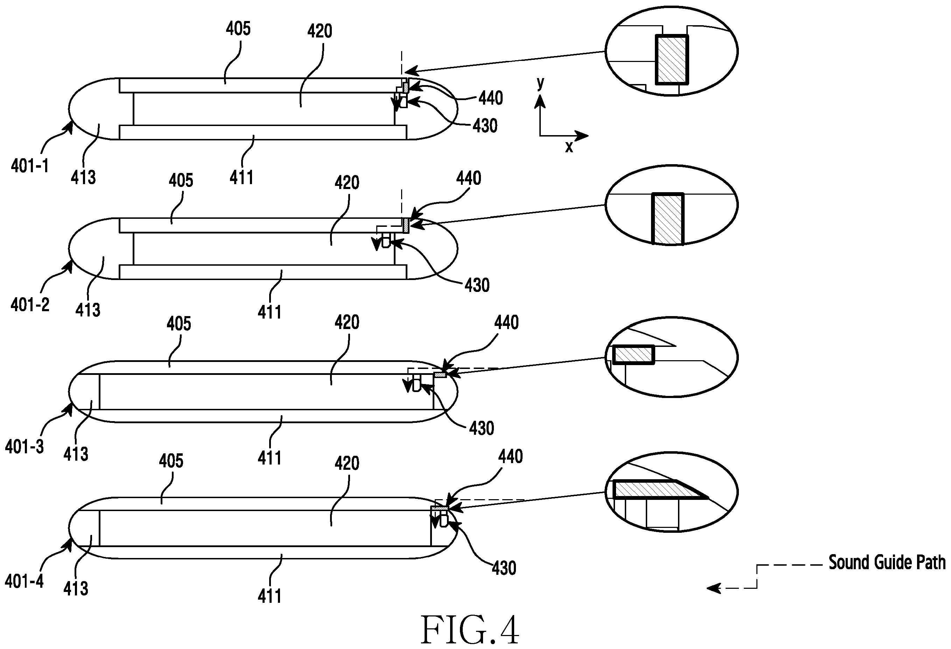

On the contrary, a sound generated from the outside of the electronic device 101 may be transmitted to one or more components (e.g., the microphone or the speaker) that are positioned inside the electronic device 101 through the mesoporous area 161 that includes the mesoporous material. According to an embodiment of the present disclosure, the mesoporous material may also be included in a gap of the electronic device 101 (e.g., a first gap 133 or a second gap 135). Additional information related to the sound guide route will be described below with reference to FIG. 4.

According to an embodiment of the present disclosure, the mesoporous material refers to a material that contains pores therein, and may include, for example, a crystalline hybrid compound, a cell membrane, cellophane, or a Gore-Tex.

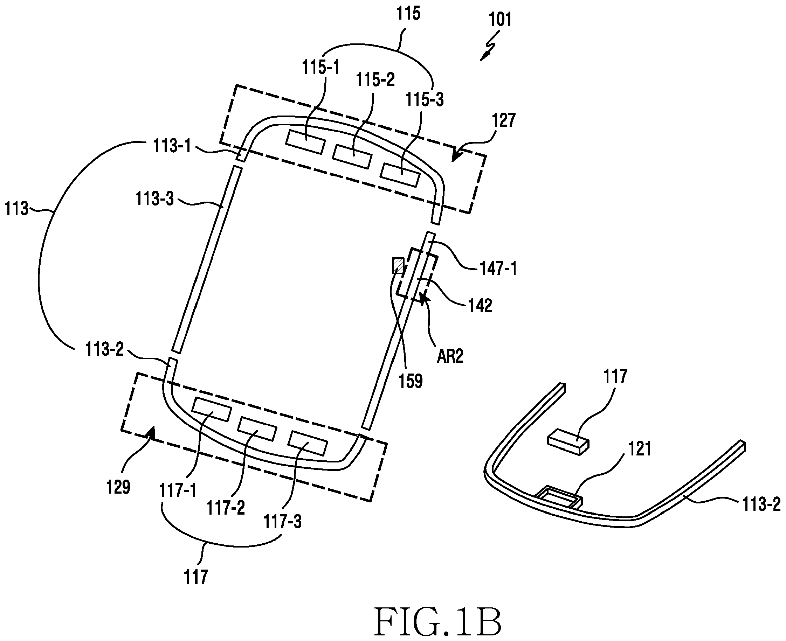

Referring to FIG. 1B, the frame 113 may include, for example, one or more sub-frames 113-1, 113-2, and 113-3. For example, the first sub-frame 113-1 may be positioned at least on a first surface 137 (e.g., the upper side surface) of the electronic device 101, the second sub-frame 113-2 may be positioned at least on a second surface 139 (e.g., the lower side surface) of the electronic device 101, and the third sub-frame 113-3 may be positioned at least one a third surface 141 (e.g., the right or left side surface) of the electronic device 101.

According to an embodiment of the present disclosure, at least one of the first to third sub-frames 113-1, 113-2, and 113-3 may be connected with a first I/O device 115 or a second I/O device 117 electrically (e.g., to be capable of exchanging an electric signal through a wiring or a circuit) or physically (e.g., to be in direct contact or indirect contact through, for example, an instrument). For example, the first sub-frame 113-1 may be connected with the first I/O device 115, and the second sub-frame 113-2 may be connected with the second I/O device 117. In such a case, the vibration generated through, for example, the first I/O device 115 may be transferred to the first sub-frame 113-1, and the vibration generated through the second I/O device 117 may be transmitted through the second sub-frame 113-2.

According to an embodiment of the present disclosure, the vibration generated through the first I/O device 115 may only be felt at the first sub-frame 113-1, and may be felt more strongly at the first sub-frame 113-1 than at the second sub-frame 113-2. On the contrary, the vibration generated through the second I/O device 117 may only be felt at the second sub-frame 113-2 or may be felt more strongly at the second sub-frame 113-2 than at the first sub-frame 113-1. According to an embodiment of the present disclosure, depending on the state or the performance of the electronic device 101 or the kind of the application that is executed in the electronic device 101, the first I/O device 115 or the second I/O device 117 may be vibrated. In such a case, the user may confirm the state or performance of the electronic device 101 or the kind of the executed application based on the sub-frame, of which the vibration is felt by the user.

According to an embodiment of the present disclosure, at least one of the first to third sub-frames 113-1, 113-2, and 113-3 may include an accommodation member 121 that is capable of accommodating at least one of the first I/O device 115 and the second I/O device 117. For example, the second sub-frame 113-2 may include an accommodation member 121 that is capable of accommodating the second I/O device 117. The accommodation member 121 may be positioned on at least one side surface that forms, for example, the second I/O device 117. For example, the accommodation members 121 may enclose at least a part of the outer periphery of the second I/O device 117.

For example, in the case where the second I/O device 117 has a substantially rectangular shape, the accommodation member 121 may be positioned on at least one side surface of the second I/O device 117 such that the second I/O device 117 can be coupled to the accommodation member 121. According to an embodiment of the present disclosure, the shape of the accommodation member 121 may correspond (equal or similar) to the shape of the second I/O device 117. For example, the accommodation member 121 may have a substantially rectangular shape according to the shape of the second I/O device 117 that has a rectangular shape.

Although not illustrated, as an example in which the accommodation member 121 has a rectangular shape, various embodiments of the present disclosure may have a rod shape, a star shape, a circular shape, a triangular shape or a pentagonal shape. According to an embodiment of the present disclosure, the accommodation member 121 may be integrally formed with the second I/O device 117. Alternatively, the accommodation member 121 may be formed separately from the second I/O device 117, and may be assembled and fastened (e.g., by a hook) to the second I/O device 117. According to an embodiment of the present disclosure, the accommodation member 121 may be attached to the second I/O device 117.

According to an embodiment of the present disclosure, the frame 113 may include a conductive material or an insulative material. For example, the frame 113 may only be formed of a conductive material or may only be formed of an insulative material. Alternatively, the frame 113 may include an area formed of a conductive material and an area formed of an insulative material. For example, the first area of the frame 113 may be formed of a conductive material and the second area may be formed of an insulative material.

The first I/O device 115 and the second I/O device 117 may be positioned in, for example, different areas of the electronic device 101, respectively. According to an embodiment of the present disclosure, the first I/O device 115 may be formed in the first area 127 of the electronic device 101, and the second I/O device 117 may be formed in the second area 129 of the electronic device 101. For example, the first area 127 and the second area 129 may be positioned to be substantially symmetric to each other in the electronic device 101. For example, the first I/O device 115 may be positioned in the first area 127 at the upper end of the electronic device 101, and the second I/O device 117 may be positioned in the second area 129 at the lower end of the electronic device 101. Although not illustrated, for example, the first I/O device 115 may be positioned on the right side of the electronic device 101, and the second I/O device 117 may be positioned on the left side of the electronic device 101.

According to an embodiment of the present disclosure, the first I/O device 115 or the second I/O device 117 may be mounted (or disposed) inside the electronic device 101 by using at least one of the front cover 105, the frame 113, and the rear cover 111 as a medium. For example, the first I/O device 115 or the second I/O device 117 may be attached to (or seated on) the front cover 105, may be attached to the inner surface of the frame 113, or may be attached to the inner surface of the rear cover 111. According to an embodiment of the present disclosure, the mediums used by the first I/O device 115 and the second I/O device 117 may be different from each other. For example, the first I/O device 115 may be positioned on the front cover 105 and the second I/O device 117 may be positioned on the rear cover 111 or the frame 113.

According to an embodiment of the present disclosure, the first I/O device 115 or the second I/O device 117 may include one or more sub I/O devices 115-1, 115-2, 115-3, 117-1, 117-2, and 117-3. For example, the first I/O device 115 may include first to third sub I/O devices 115-1, 115-2, and 115-3, and the second I/O device 117 may include fourth to sixth I/O devices 117-1, 117-2, and 117-3. According to an embodiment of the present disclosure, at least one of the first to sixth I/O devices 115-1, 115-2, 115-3, 117-1, 117-2, and 117-3 may be electrically or physically connected to at least a part of the exterior of the electronic device 101 (e.g., the front cover 105, the rear cover 111, or the frame 113) so that at least a part of the electronic device 101 may be used as a speaker (or a receiver), a microphone, or a vibration element.

For example, the electronic device 101 may use the substantially entire electronic device 101 that is physically connected with the first to sixth sub I/O devices 115-1, 115-2, 115-3, 117-1, 117-2, and 117-3, as a vibration element. For example, at least a part (e.g., the entirety) of the exterior of electronic device 101 or at least one of display module 103 may be used as a vibration element. For example, when it is determined that the vibration of the entire electronic device is needed (e.g., reception of a phone call in a vibration mode), all the first to sixth sub I/O devices 115-1, 115-2, 115-3, 117-1, 117-2, and 117-3 may be made to vibrate.

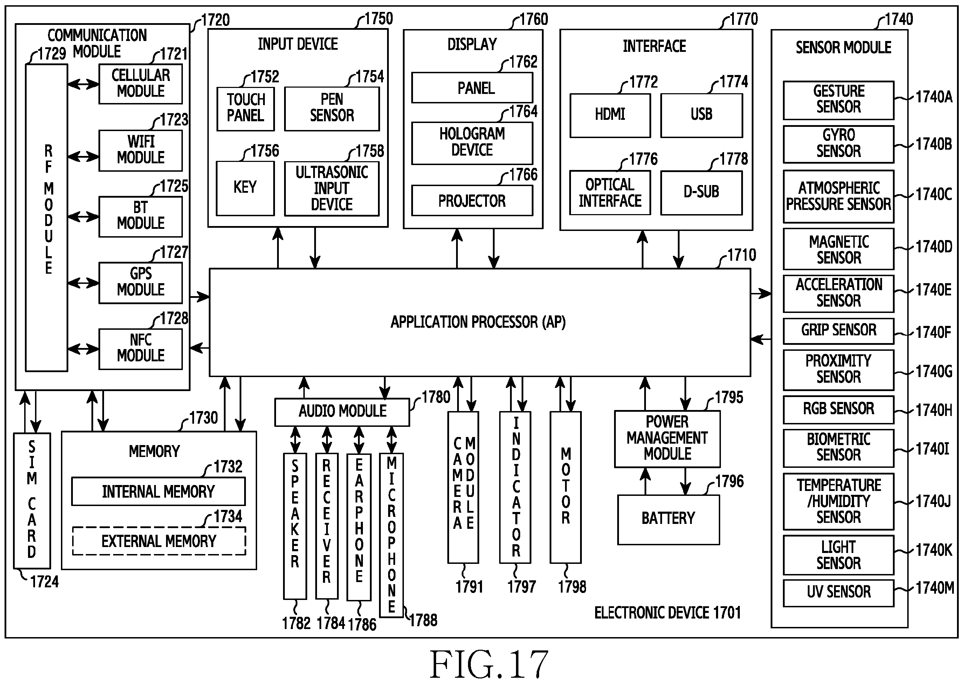

For example, at least one of the first to sixth sub I/O devices 115-1, 115-2, 115-3, 117-1, 117-2, and 117-3 may be operated as at least one function of a microphone to acquire a sound, a speaker (or a receiver) to output a sound, or a vibration element to output a vibration. According to an embodiment of the present disclosure, the first to sixth sub I/O devices 115-1, 115-2, 115-3, 117-1, 117-2, and 117-3 may be connected to an audio signal I/O device (e.g., an audio module 1780 of FIG. 17 such that it can be connected to an audio signal output device or an audio signal input device according to an electric signal transmitted thereto.

For example, at least one of the first to sixth sub I/O devices 115-1, 115-2, 115-3, 117-1, 117-2, and 117-3 may convert an electric signal (e.g., a voltage, a current, or a frequency) transmitted thereto into a physical signal (e.g., a vibration, a sound, or a pressure), or may convert a physical signal transmitted thereto into an electric signal. According to an embodiment of the present disclosure, at least one of the first to sixth sub I/O devices 115-1, 115-2, 115-3, 117-1, 117-2, and 117-3 may be operated as the at least one function depending on the level of an electric signal supplied thereto.

For example, when a first electric signal (e.g., a first voltage) is transmitted to the first sub I/O device 115-1, the first sub I/O device 115-1 may output a sound generated from the electronic device 101 (e.g., the audio signal output device) (e.g., functioning as a speaker). In addition, when the second electric signal (e.g., a second voltage) is transmitted to the first sub I/O device 115-1, the first sub I/O device 115-1 may be connected to the audio signal I/O device (e.g., the audio signal input device) so as to acquire a sound generated from the outside of the electronic device 101 (e.g., functioning as a microphone). According to an embodiment of the present disclosure, upon receiving the second electric signal transmitted thereto, the first sub I/O device 115-1 may function as a microphone that converts the sound acquired by the first I/O device 115-1 into an electric signal and transmits the electric signal to the audio signal I/O device.

For example, when a first electric signal (e.g., a first frequency) is transmitted to the fourth sub I/O device 117-1, the fourth sub I/O device 117-1 may output a vibration that can be sensed by the user of the electronic device 101 (e.g., functioning as a vibration element). Whereas, when a second electric signal (e.g., a second frequency) is transmitted to the fourth sub I/O device 117-1, the fourth sub I/O device 117-1 may function as a microphone.

According to an embodiment of the present disclosure, at least one of the first to sixth sub I/O devices 115-1, 115-2, 115-3, 117-1, 117-2, and 117-3 may include a designated material that is capable of converting an electric signal into a physical signal and vice versa. For example, the designated material may be a material of which the molecules vibrate at a level that varies depending on the intensity of a current that flows in the material.

The designated material may include, for example, a piezo material. The piezo material may generate a vibration as the molecules of the piezo material contract or extend depending on, for example, an electric signal that is transmitted to the piezo material. According to an embodiment of the present disclosure, at least one of the sub I/O devices included in the first and second I/O devices 115 and 117 may include one or more piezo elements. For example, the first to sixth sub I/O devices 115-1, 115-2, 115-3, 117-1, 117-2, and 117-3 may be formed by connecting a plurality of piezo elements in serial or in parallel.

According to an embodiment of the present disclosure, the first I/O device 115 or the second I/O device 117 may execute the same function. For example, according to an electric signal transmitted to the first I/O device 115 or the second I/O device 117, the first I/O device 115 and the second I/O device 117 may provide a function as a microphone, a function as a speaker (or a receiver), or function as a vibration element.

According to an embodiment of the present disclosure, the electronic device 101 may have a pebble shape. For example, the electronic device 101 may have a substantially polygonal shape (e.g., a tetragonal shape, a pentagonal shape, or a hexagonal shape), and one or more corners that form the polygonal shape may be gradually curved. In addition, for example, the areas corresponding to angular points may be formed roundly. For example, the angular points of the electronic device 101 having a substantially tetragonal shape may not completely form about 90 degrees, and may be smoothly formed while having an angle larger than about 90 degrees. According to an embodiment of the present disclosure, one or more surfaces that form the electronic device 101 may be flat, but may be formed roundly. For example, the front cover 105 may be formed to be upwardly convex, and the rear cover 111 may be formed to be downwardly convex.

According to an embodiment of the present disclosure, in a Y-axis direction, a first length L1 that corresponds to the central portion of the electronic device 101 may be longer than a second length L2 that corresponds to the outer peripheral portions of the electronic device 101. First length L1 may be, for example, the longest length of the electronic device 101 in the Y-axis direction, and the second length L2 may be, for example, the smallest length of the electronic device 101 in the Y-axis direction. The first corners of the electronic device 101 (e.g., the corners positioned at the upper side of the electronic device 101) may be formed to be gradually smoothly curved from the central portion of the electronic device 101 toward the outer peripheral portions in the X-axis direction.

According to an embodiment of the present disclosure, in an X-axis direction, a third length L3 that corresponds to the central portion of the electronic device 101 may be longer than a fourth length L4 that corresponds to the outer peripheral portions of the electronic device 101. The third length L3 may be, for example, the longest direction in the X-axis direction, and the fourth length L4 may be, for example the shortest length of the electronic device 101 in the X-axis direction. Second corners of the electronic device 101 (e.g., the corners positioned at the right side of the electronic device 101) may be formed to be gradually smoothly curved from the central portion to the outer peripheral portions in the Y-axis direction.

Although not illustrated, the shape of the electronic device 101 may include various three-dimensional figures that include one or more surfaces. For example, the shape of the electronic device 101 may include a spherical shape, a cylindrical shape, a conical shape, a triangular pyramid shape, a hexagonal pyramid shape, a square pillar shape, a regular tetrahedron shape, or the like. In addition, for example, the shape of the electronic device 101 may have a hollow central area in the various three-dimensional figures. For example, the shape of the electronic device 101 may have a ring shape that includes a star shape, a moon shape, a circular shape, a triangular shape, a quadrangular shape, or the like.

According to an embodiment of the present disclosure, at least one of the surfaces that form the electronic device 101 may include a display module. For example, in the case where the electronic device 101 has a spherical shape, the electronic device 101 may include a display module that encloses the entire outer surface of the spherical shape. For example, even if the user views the electronic device 101 at any angle, the user is capable of watching an image output through the display module of the electronic device 101. In another example, in the case where the electronic device 101 has a square pillar shape, a display module may be formed on at least one of a plurality of surfaces that form the square pillar shape.

Referring to FIG. 1C, the frame 113 may include, for example, a key 143 in at least a part thereof. For example, the frame 113 may include a first key 143 in at least one of the first area AR1 and the second area AR2. The first key 143 that is positioned in the first area AR1 of the frame 113 may be formed by cutting off at least a portion 145 that is formed of, for example, the conductive material of the frame 113 (hereinafter, referred to as a "cut-off area" for the convenience of description). According to an embodiment of the present disclosure, the first key 143 may include, for example, a conductive material, like the peripheral area 147 of the key separated by the cut-off area 145. According to an embodiment of the present disclosure, the cut-off area 145 may include an insulative material or a mesoporous material.

According to an embodiment of the present disclosure, a cut-off area 145 (e.g., a first cut-off area 145-1 or a second cut-off area 145-2) may be positioned in at least a part of the outer periphery of the first key 143. For example, in the case where the first key 143 has a circular shape, the first cut-off area 145-1 may be formed in a circular shape that is formed along the circumference of the first key 143 to surround the first key 143. In such a case, the first key 143 may be spaced apart from a corner of the frame 113 by a designated distance. According to an embodiment of the present disclosure, the second cut-off area 145-2 may be connected with at least one corner of the frame 113. For example, a first end point 149 of the second cut-off area 145-2 may be connected with a first corner 153 of the frame 113, and a second end point 151 of the second cut-off area 145-2 may be connected with second corner 155 of the frame 113. For example, the second cut-off area 145-2 may have a rod shape.

According to an embodiment of the present disclosure, the second cut-off area 145-2 may include a protruding area 157. For example, in the case where the second cut-off area 145-2 is formed in the rod shape, the protruding area 157 may protrude from at least a part of the rod shape to form a polygonal shape, such as a triangular shape, a quadrangular shape, a circular shape, or a pentagonal shape. Although not illustrated, the circular first cut-off area 145-1 may be formed with a protruding area, similar to the second cut-off area 145-2. In addition, the shape of the cut-off area 145 may include, for example, a triangular shape, a pentagonal shape, or a hexagonal shape, and the shape of the first key 143 may be variously changed according to the cut-off area 145.

According to an embodiment of the present disclosure, the first key 143 may provide a function of at least one of a touch input device that is capable of receiving a user's touch (e.g., a touch key) and an antenna. For example, in the case where the first key 143 is operated as a touch key, the first key 143 or a peripheral area 147 of the first key 143 may serve as at least a part of the touch electrodes. For example, the first key 143 may serve as a first electrode (e.g., a reception electrode (Rx electrode)) that receives a signal, and the peripheral area 147 of the first key 143 may serve as a second electrode (e.g., a transmission electrode (Tx electrode) that transmits a signal. According to an embodiment of the present disclosure, on the contrary, the first key 143 may serve as the second electrode that transmits a signal, and the peripheral area 147 may serve as the first electrode. According to another embodiment of the present disclosure, the electronic device 101 may separately include a second electrode that transmits a signal.

According to an embodiment of the present disclosure, the first key 143 may serve as a Tx/Rx electrode that transmits/receives a signal and the peripheral area 147 may be connected to a ground.

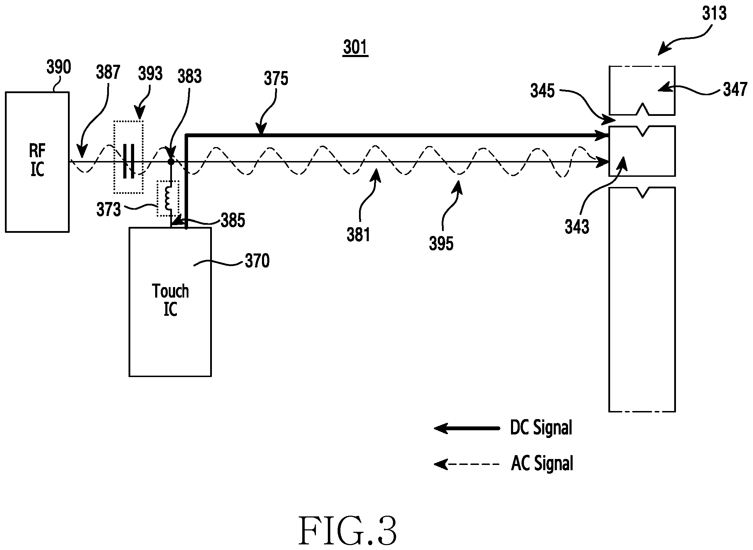

According to an embodiment of the present disclosure, in the case where the first key 143 is operated as a touch key, the electronic device 101 may control the various functions of the electronic device 101 based on the input that is acquired through the first key 143. The various functions designated to the first key 143 may include, for example, a power button of the electronic device 101, volume control, bright control of the display module 103, screen extension/contraction, measurement of a user's biometric signal (e.g., heart rate, pulse rate, blood sugar, finger print, or blood flow rate), mute, information transmission to an external device, or a home button. The case where the first key 143 is operated as a touch key and an antenna will be additionally described below with reference to FIG. 3.

According to an embodiment of the present disclosure, although not illustrated, the frame 113 may include only the peripheral area 147 that is divided through the cut-off area 145, as the first key 143. For example, the frame 113 may include a key 143, in which a first area of the peripheral area 147 (e.g., the upper portion of the frame 113 segmented through the cut-off area 145) is formed as the peripheral area 147, and a second area of the peripheral area 147 (the lower portion of the frame 113 segmented through the cut-off area 145) is formed as the first key 143.

According to an embodiment of the present disclosure, the second key 142 may be formed in the second area AR2 of the frame 113. According to an embodiment of the present disclosure, in the peripheral area 147-1 of the second key 142, the cut-off area 145 may not be formed. The peripheral area 147-1 of the second key 142 may be formed of, for example, a soft material. For example, a touch having a designated pressure (e.g., a pressure of about 150 to 300 gf) may be generated through a specific area (e.g., an area that is formed of a soft material) including at least a part of the second area AR2. In such a case, the specific area may be flexed according to the touch.

According to an embodiment of the present disclosure, as the specific area is flexed, the second key 142 may come in contact with a button 159 that is positioned below the second key 142. As the second key 142 comes in contact with the button 159, the various designated functions may be executed. The button 159 may include, for example, a tact key. According to an embodiment of the present disclosure, the tact key may include, for example, a key that uses a dome, or a switch-push type key, and may include all the keys that may receive a physical input performed by using the user's tactile sense.

FIG. 2 illustrates an external interface (e.g., the external interface 123) of an electronic device (e.g., the electronic device 101) according to various embodiments of the present disclosure.

Referring to FIG. 2, each of the first to third external interfaces 223-1, 223-3, and 223-5 may include, for example, one or more pins. For example, each of the first external interface 223-1 and the second external interface 223-3 may include five pins, and the third external interface 223-5 may include seven pins.

According to an embodiment of the present disclosure, the one or more pins of an external interface (e.g., the external interface 123) may be formed at substantially the same level (e.g., height) as the exterior (e.g., the rear cover 111) of the electronic device. For example, the one or more pins may be formed such that no stepped portion exists between the pins and the exterior of the electronic device. For example, the one or more pins may be formed such that the level difference between the one or more pins and the external appearance is hard to recognize (e.g., about 0.2 mm) or is substantially the same level as the lower tolerance (e.g., about 0.5 mm) when viewed from the outside.

According to an embodiment of the present disclosure, the pins included in the first to third external interfaces 223-1, 223-3, and 223-5 may be symmetrically arranged in the vertical direction or in the horizontal direction such that a signal can be transmitted even if an external interface of an external device (e.g., a universal serial bus (USB) cable, a mobile high-definition link (MHL) cable, a charge cable, a microphone, or an earphone) comes in contact with the first to third external interfaces 223-1, 223-3, and 223-5 in any direction. Hereinafter, the external interface of an external device will be referred to as an "external device interface" for the convenience of description.

For example, in the first external interface 223-1, the five pins may be sequentially arranged in a specific direction (e.g., in one direction). For example, the first external interface 223-1 may be arranged in in a straight line shape. In the second external interface 223-3, the pines may be arranged in, for example, a "W" shape. For example, the first to fifth pins 223-31 to 223-35 may have a diamond shape. According to an embodiment of the present disclosure, the first to third pins 223-31 to 223-33 may be sequentially arranged in a first line. In this case, the right angular point of the first pin 223-31 may be close to (e.g., face) the left angular point of the second pin 223-32. The right angular point of the second point 223-32 may be close to the left angular point of the third pin 223-33.

According to an embodiment of the present disclosure, the fourth pin 223-34 and the fifth pin 223-35 may be sequentially arranged in a second line that is positioned below the first line. In this case, the fourth pin 223-34 and the fifth pin 223-35 may be disposed in empty areas that exist, for example, between the first to third pins 223-31 to 223-33. For example, the upper angular point of the fourth pin 223-34 may be close to the right angular point of the first pin 223-31 and the left angular point of the second pin 223-32. The upper angular point of the fifth pin 223-35 may be close to, for example, the right angular point of the second pin 223-32 and the left angular point of the third pin 223-33.

The third external interface 223-5 may have an "M" shape such that five pins arranged in, for example, a "W" shape, may come in contact with a pin upwardly or downwardly. For example, the third external interface 223-5 may include first to fifth pins 225-51 to 225-55 that correspond to the first to fifth pins 223-31 to 223-35 of the second external interface 223-3, respectively. In addition, in the line above the first to third pins 225-51 to 225-53, the third external interface 223-5 may further include a sixth pin 225-56 and a seventh pin 225-57 that are symmetric to the fourth and fifth pins 225-54 and 225-55. Although not illustrated, according to an embodiment of the present disclosure, the first to third external interfaces 223-1 to 223-5 may be formed to have the same shape as that of an external device interface.

According to an embodiment of the present disclosure, while FIG. 2 illustrates the external interfaces (e.g., the first to third external interfaces 223-1, 223-3, and 223-5 as a straight line shape, a "W" shape, or an "M" shape, the external interfaces may be formed in various shapes (e.g., a fourth external interface 223-7) having a little directivity (e.g., connectable in various directions). For example, the fourth external interface 223-7 may be formed in a shape that is formed by arranging rectangular shapes of various sizes. In this case, each of the rectangular shapes of various sizes may serve as a single pin. In another example, the external interface may be formed in a circular shape (not illustrated) that is formed by one or more concentric circles. In this case, in the external interface, each area between concentric circles may serve as one pin.

According to an embodiment of the present disclosure, an external interface formed in each electronic device and an external interface formed in another electronic device may be formed to have a shape such that they can exchange a signal even if the two external interfaces are in various shapes. For example, in the case where the third external interface 223-5 is formed in the electronic device, the second external interface 223-3 may become the external device of an external device. According to an embodiment of the present disclosure, even if the second external interface 223-3 comes in contact with the third external interface 223-5 in any direction (e.g., in an upper or lower direction), the second external interface 223-3 and the third external interface 223-5 can exchange a signal because the third external interface 223-5 includes the shape of the second external interface 223-3. According to an embodiment of the present disclosure, an earphone may come in contact with the third external interface 223-5 as the external device. In such a case, the first pin of the earphone, which corresponds to the first pin 223-51 included in the third external interface 223-5, may be empty (e.g., no connected terminal exists therein), and the second to fifth pins 223-52 to 223-55 included in the third external interface 223-5 may be used as, for example, an L terminal (e.g., the left terminal of the earphone), an R terminal (e.g., the right terminal of the earphone), a ground (GND) terminal, and an microphone (MIC) terminal of the earphone, respectively.

According to an embodiment, the L terminal, the R terminal, the GND terminal, and the MIC terminal of the external device (e.g., the earphone) may be magnetized to a specific magnetic field intensity (e.g., about 10 gausses) depending on the kind of the external device. According to an embodiment of the present disclosure, the first pin that is empty may not be magnetized.

According to an embodiment of the present disclosure, when the second external interface 223-3 comes in contact with the third external interface 223-5 in a first direction, the first to fifth pins 223-51 to 223-55 of the third external interface 223-5 may serve as, for example, the empty (e.g., float) pin, the L terminal, the R terminal, the GND terminal, and the MIC terminal, respectively. In such a case, the fourth pin 223-54 of the third external interface 223-5 may perform the function of the GND terminal, and the fifth pin 223-55 may perform the function of a virtual bus (VBUS) terminal (e.g., the power terminal).

Whereas, in the case where the second external interface 223-3 comes in contact with the third external interface 223-5 in a second direction, the first to seventh pins 223-51, 223-52, 223-53, 223-54, 223-55, 223-56, and 223-57 of the third external interface 223-5 may serve as, for example, the empty terminal, the L terminal, the R terminal, the GND terminal, and the MIC terminal, respectively. In this case, the fourth pin 223-54 of the third external interface 223-5 may perform the function of the GND terminal, and the fifth pin 223-55 may perform the function of the VBUS terminal.

According to an embodiment of the present disclosure, an electronic device (e.g., the electronic device 101) may discriminate the kind of the external interface based on the position of a pin of the external interface (e.g., the second external interface 223-3) that comes in contact with the third external interface 223-5 that is formed in the electronic device. For example, when second external interface 223-3 only includes the second pin 223-32 and the third pin 223-33, the electronic device may recognize the second external interface 223-3 as an mHL when the second external interface 223-3 come in contact therewith. In this case, the third external interface 223-5 may cause pins that correspond to the second pin 223-32 and the third pin 223-33 (e.g., the second pin 223-52 and the third pin 223-53 of the third external interface 223-5) to execute the function of D+/D- terminals that are used for the function of the mHL.

According to an embodiment of the present disclosure, the electronic device (e.g., the electronic device 101) may determine the first and second directions based on the direction of a pin of the second external interface 223-3 that comes in contact with the third external interface 223-5 that is formed in the electronic device. For example, when the fifth pin 223-35 of the second external interface 223-3 comes in contact with the six pin 223-56 of the third external interface 223-5, the electronic device may determine that the second external interface comes in contact therewith in the first direction. In another example, when the fourth pin 223-34 of the second external interface 223-3 comes in contact with the fourth pin 223-54 of the third external interface 223-5, the electronic device may determine that the second external interface comes in contact therewith in the second direction.

According to an embodiment of the present disclosure, although not illustrated, at least one pin among the pins included in the first to third external interfaces 223-1, 223-3, and 223-5 may be connected with a PCB that is positioned within the electronic device (e.g., the electronic device 101) through a connection member (e.g., a clip). For example, the at least one pin may be selected as to whether to be connected to the PCB through the connection member depending on the kind of the external device interface that is connected to the first to third external interfaces 223-1, 223-3, and 223-5. For example, at least one pin of the external device interface may be magnetized to have an intrinsic magnetic field according to the kind of the corresponding external device, and it is determined whether the at least one pin is connected to the PCB based on the intrinsic magnetic field.

For example, a USB interface as the external device may have a first magnetic field (e.g., about 10 gausses). In this case, for example, the first to first fourth pins 223-11 to 223-14 of the first external interface 223-1 may be connected with the PCB through the connection member, and the fifth pin 223-15 may not be connected with the PCB. In another example, a charge device as the external device may have a second magnetic field (e.g., about 30 gausses).

In this case, for example, the first pin 223-11 and the fourth pin 223-14 of the first external interface 223-1 may be connected to the PCB through the connection member, and the second pin 223-12, the third pin 223-13, and the fifth pin 223-15 may not be connected to the PCB. For example, the pins included in the first to third external interfaces 223-1, 223-3, and 223-5 may be selectively connected to the PCB based on the intensity of the magnetic field of the external device interface. Accordingly, the electronic device may determine the kind (e.g., identification (ID) of the external device).

According to an embodiment of the present disclosure, the electronic device (e.g., the electronic device 101) may include a switching module that is set to connect the pins of an external interface to another terminal based on the contact direction of the external device interface (e.g., first external interface 223-1) that comes in contact with the external interface (e.g., the first external interface 223-1) that is formed in the electronic device. For example, based on the kind of the external device that comes in contact with the external interface (e.g., the first external interface 223-1) or the contact direction of the external device interface (e.g., the first external interface 223-1), the electronic device may use the first pin (e.g., the first pin 223-11) of the external interface as the GND terminal and may use the second pin (e.g., the second pin 223-12) as the VBUS terminal, or may use the first pin as the VBUS terminal, and may connect the second pin to GND ground through the switching module.

According to an embodiment of the present disclosure, an electronic device (e.g., the electronic device 101) may determine the kind of an external device or the contact direction of the external device interface based on the kind of terminal of a pin of the external device interface (e.g., the second external interface 223-3 that comes in contact with the external interface (e.g., the third external interface 223-5) (e.g., the first pin of the external device interface (e.g., in the case where the first pin 223-31 comes in contact with the external interface as a GND terminal and the second pin (e.g., the second pin 223-32) comes in contact with the external device as a VBUS terminal, vice versa, or the like). For example, through the switching module, the electronic device may change the terminal that is connected to a first pin (e.g., the first pin 223-51) or a second pin (e.g., the second pin 223-52) of an external interface (e.g., the third external interface 223-5) or may determine whether to connect the remaining pins (e.g., the third to seventh pins 223-53 to 223-57 to the terminal, based on the kind of the external device or the contact direction of the external device interface.

According to an embodiment of the present disclosure, the electronic device (e.g., the electronic device 101) may determine the kind of the external device according to the intensity of the magnetic field of the external device, and may connect each pin to the PCB through the connection member based on the determination. For example, in the case where the intensity of the magnetic field of the external device is a first magnetic field (e.g., about 10 gausses), the electronic device may confirm the external device by using a USB interface. In this case, because, for example, the fifth pin 223-15 of the first external interface 223-1 is not used in the connection with the USB interface, the electronic device may connect only the first to fourth pins 223-11, 223-12, 223-13, and 223-14 to the PCB through the connection member.

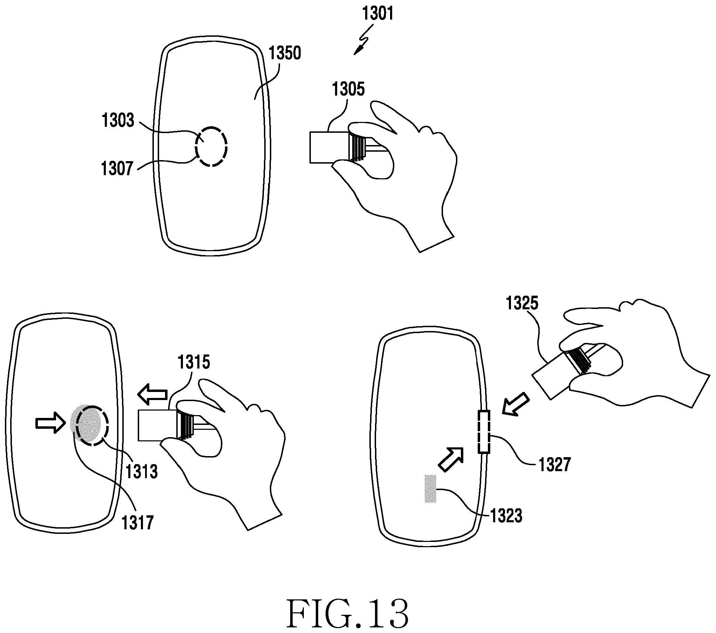

According to an embodiment of the present disclosure, an electronic device (e.g., the electronic device 101) may determine that an external device interface is approaching based on the intensity of the magnetic field of the external device interface. For example, in the case where the intensity of the magnetic field of the external device interface is about 10 gausses, the electronic device may sense the approaching of the external device interface and may display, through the display of the electronic device, the external interface (e.g., the external interface 123), with which the external device interface may come in contact. The display will be described with reference to FIG. 13.

According to an embodiment of the present disclosure, the first to third external interfaces 223-1, 223-3, and 223-5 may be connected with one or more (e.g., a plurality of) external devices. For example, the first external interface 223-1 may be connected with a first external device (e.g., a charge device) and a second external device (e.g., an earphone). According to an embodiment of the present disclosure, the first external interface 223-1 may directly come in contact with the first external device to be connected with the first external device. On the contrary, the first external interface 223-1 may be indirectly connected with the second external device. For example, the second external device may be mounted on the first external device that is connected with the first external interface 223-1 to be connected with the first external interface 223-1.

According to an embodiment of the present disclosure, in the case where the first to third external interfaces 223-1, 223-3, and 223-5 are connected with a plurality of external devices, the first to fifth pins included in each of the first to third external interfaces 223-1, 223-3, and 223-5 may be as shown in Table 1 below. Table 1 represents the roles of the pins included in an external interface (e.g., the first external interface 223-1), according to various embodiments.

**Table 1**

| | USB | mHL | Charge Device | Earphone | Charge Device+Earphone | USB+Earphone | mHL+Earphone |
|---|---|---|---|---|---|---|---|
| 1 | VBUS | - | VBUS | - | VBUS | VBUS | - |
| 2 | D+ | D+ | - | L | L | D+/L | D+/L |
| 3 | D- | D- | - | R | R | D-/R | D-/R |
| 4 | GND | - | GND | GND | GND | GND | GND |
| 5 | - | - | | MIC | MIC | MIC | MIC |
| Magnetic Field (gauss) | 10 | 20 | 30 | 40 | 70 | 50 | 60 |

Referring to Table 1, according to an embodiment of the present disclosure, an electronic device (e.g., the electronic device 101) may use the first to fifth pins 223-11, 223-12, 223-13, 223-14, and 223-15 included in the first external interface 223-1 for different functions according to the intensity of the magnetic field (e.g., the intensity of the magnetic field of the pins of the external device interface). For example, when the intensity of the magnetic field of the pins of the external device is about 10 gauss, the electronic device may recognize (e.g., determine) the external device as a USB interface.

In this case, the electronic device may use, for example, the first pin 223-11 as a VBUS terminal, the second pin 223-12 as a D+ terminal (e.g., a data input terminal), the third pin 223-13 as a D- terminal (e.g., a data output terminal), and the fourth pin 223-14 as a GND terminal. According to an embodiment of the present disclosure, because the USB interface does not use the fifth pin, the fifth pin 223-15 may not be connected.

According to an embodiment of the present disclosure, when the intensity of the magnetic field is about 70 gausses, the electronic device may confirm that a charge device and an earphone are connected to the first external interface 223-1 as the external devices. In this case, for example, the first to fifth pines 223-11 to 223-15 may be used as a VBUS terminal, an L terminal, an R terminal, a GND terminal, and a MIC terminal, respectively.

According to an embodiment of the present disclosure, when the intensity of the magnetic field is about 50 gausses, the electronic device (e.g., the electronic device 101) may determine that a USB interface and an earphone are connected to the first external interface 223-1 as the external devices. In this case, the electronic device may use, for example, the first to fifth pins 223-11 to 223-15 as a VBUS terminal, a D+/L terminal, a D-/R terminal, a GND terminal, and a microphone terminal, respectively.

According to an embodiment of the present disclosure, the electronic device may connect the second pin 223-12 to the L terminal, and the third pin 223-13 to the R terminal. However, the electronic device may connect the second pin 223-12 to the D+ terminal and the third pin 223-13 to the D- terminal for data communication according to a communication state between the electronic device and the external device. According to an embodiment of the present disclosure, the L terminal and D+ terminal may be connected as one terminal, and the R terminal and the D- terminal may be connected as one terminal.

According to an embodiment of the present disclosure, when the intensity of the magnetic field is about 60 gausses, the electronic device may confirm that an MHL and an earphone are connected to the first external interface 223-1 as the external devices. In this case, for example, the first to fifth pins 223-11 to 223-15 may be used as an empty terminal, an L or D+ terminal, an R or D- terminal, a GND terminal, and a MIC terminal, respectively.

According to an embodiment of the present disclosure, when an external device approaches the periphery of the first to third external interfaces 223-1, 223-3, and 223-5, at least one (e.g., the pin 223-11) may be the peripheral areas or pins of the external interfaces 223-1, 223-3, and 223-5 may have a magnetism (e.g., may be magnetized) such that the external device may be naturally positioned (e.g., coupled or fastened) on the external interfaces 223-1, 223-3, and 223-5. According to an embodiment of the present disclosure, the external interface included in the external device (hereinafter, the external interface will be referred to as "external device interface" for the convenience of description), which may be coupled to the external interfaces 223-1, 223-3, and 223-5, may include a conductive material so that it can be attached to an external interface 223-1, 223-3, or 223-5 that has a magnetism.

According to an embodiment of the present disclosure, the magnetism of the first to third external interfaces 223-1, 223-3, and 223-5 may be opposite to the magnetism of the external device interface. For example, when the first to third external interfaces 223-1, 223-3, and 223-5 have an N-pole, the external device interface may have an S-pole. On the contrary, when the first to third external interfaces 223-1, 223-3, and 223-5 have an S-pole, the external device interface may have an N-pole.

FIG. 3 illustrates a circuit diagram of an electronic device (e.g., the electronic device 101) according to various embodiments of the present disclosure.

Referring to FIG. 3, an electronic device 301 may include, for example, a frame 313, a touch integrated chip (IC) 370, and radio frequency integrated chip (RF IC) 390. The frame 313 may include a first key 343 (e.g., the first key 143 that includes a conductive material) that is separated from a peripheral area 347 (e.g., the peripheral area 147) that includes a conductive material through, for example, a cut-off area 345 (e.g., the cut-off area 145) that includes an insulative material.

According to an embodiment of the present disclosure, the key 343 implemented in the frame 313 may be operated as at least one of the touch input device (e.g., a touch key) or an antenna. For this purpose, the key 343 may be connected with the touch IC 370 and the RF IC 390 through, for example, a signal line 381. According to an embodiment of the present disclosure, the signal line 381 may be divided into a first signal line 385 and a second signal line 387 at an intersection 383. The first signal line 385 may be connected to, for example, the touch IC 370, and the second signal line 387 may be connected to, for example, the RF IC 390.

According to an embodiment of the present disclosure, an inductor 373 may be positioned between the key 343 and the touch IC 370. For example, the inductor 373 may be connected to the first signal line 385 that is positioned between the intersection 383 and the touch IC 370. For example, the inductor 373 may be positioned on the first signal line 385 such that the first terminal of the inductor 373 is connected to the intersection 383, and the second terminal of the inductor 373 may be connected to the touch IC 370. According to an embodiment of the present disclosure, a capacitor 393 may be positioned between the key 343 and the RF IC 390. For example, the capacitor 393 may be connected to the second signal line 387 that is positioned between the intersection 383 and the RF IC 390. For example, the capacitor 393 may be positioned on the second signal line 387 such that the first terminal of the capacitor 393 may be connected to the intersection 383, and the second terminal of the capacitor 393 may be connected with the RF IC 390.

According to an embodiment of the present disclosure, through the signal line 381, a direct current (DC) signal 375 and an alternating current (AC) signal 395 may be transmitted or received at least temporarily or simultaneously. For example, in the case where the key 343 is operated as a touch input device (e.g., a touch key), the DC signal 375 may be a signal that corresponds to the touch input device, and, for example, in the case where the key 343 is operated as an antenna, the AC signal 395 may be a signal that corresponds to the antenna.

According to an embodiment of the present disclosure, the touch IC 370 may only receive the DC signal 375 through the inductor 373 among the DC signal 375 and the AC signal 395 that are transmitted through the signal line 381. For example, the inductor 373 is operated with a high impedance in relation to the AC signal 395 so that the AC signal 395 cannot pass through the inductor 373, and thus cannot be transmitted to the touch IC 370. As a result, the touch IC 370 may process a touch signal (e.g., a digital signal) that is acquired through, for example, the key 343, and may provide a function (or information) corresponding to the touch signal to the user.

According to an embodiment of the present disclosure, the RF IC 390 may receive only the AC signal 395 through the capacitor 393 among the DC signal 375 and the AC signal 395 that are transmitted via the signal line 381. For example, the capacitor 393 is operated with a high impedance in relation to the DC signal 375 so that the DC signal 375 cannot pass through the capacitor 393 and thus cannot be transmitted to the RF IC 390. Accordingly, the RF IC 390 may process an antenna signal (e.g., an analog signal) that is acquired through, for example, the key 343, and may provide a function (or information) corresponding to the antenna signal to the user.

According to an embodiment of the present disclosure, for the convenience of description, FIG. 3 illustrates a configuration in which the first signal line 385 and the second signal line 387 are branched from the signal line 381. However, according to various embodiments of the present disclosure, the touch key 143 may be connected to different ICs through a plurality of signal lines that are not connected to each other. For example, the touch key 143 may be connected with the touch IC 370 through any one signal line, and may be connected with the RC IC 390 through any other signal line that is separated from the any one signal line.

According to an embodiment of the present disclosure, in the electronic device, at least a part of the frame 113 (e.g., the touch key 143 or the peripheral area 147) may be connected to different ICs through a plurality of signal lines that are not connected with each other. For example, the touch key 143 may be connected with the touch IC 370 through the first signal line 385, and the peripheral area 147 may be connected with the RF IC 390 through the second signal line 387.

FIG. 4 illustrates various structures of an electronic device (e.g., the electronic device 101) according to various embodiments of the present disclosure. Descriptions for the components that are the same as or similar to those of FIGS. 1A to 1C will be omitted.

Referring to FIG. 4, electronic devices 401-1, 401-2, 401-3, and 401-4 may include, for example, a front cover 405 (e.g., the front cover 105), a rear cover 411 (e.g., the rear cover 111), a frame 413 (e.g., the frame 113), a bracket 420, on which the components positioned within the electronic devices 401-1 to 401-4 may be mounted, and a speaker 430, a microphone (e.g., a microphone 1788 of FIG. 17), or an I/O device (e.g., the I/O device 115) that may perform the microphone function. According to an embodiment of the present disclosure, the electronic devices 401-1 to 401-4 may be a device that may provide two display modules through the front cover 405 and the rear cover 411. For example, the front cover 405 and the rear cover 411 may be formed of a window glass.

In the case of the first electronic device 401-1, the frame 413 may (completely) wrap one side surface for each of, for example, the front cover 405, and the bracket 420, and the rear cover 411. For example, the height of the frame 413 may be the same as or similar to the height of the first electronic device 401-1. The speaker 430 may be mounted, for example, inside the frame 413. In this case, the frame 413 may include a space that is recessed downwardly from a flat portion of the frame 413 in order to mount the speaker 430.

According to an embodiment of the present disclosure, a sound output from the speaker 430 may be output to the outside of the first electronic device 401-1 through a gap that is formed between the front cover 405 and the frame 413. For example, a sound guide path of the first electronic device 401-1 is initiated from the recessed space of the frame 413 and may be connected to a second gap between the front cover 405 and the frame 413, which is formed in the Y-axis direction via a first gap between the front cover 405 and the frame 413, which is formed in the X-axis direction.

According to an embodiment of the present disclosure, at least a portion 440 of the sound guide path (hereinafter, referred to as a "mesoporous area" for the convenience of description) may be filled with a mesoporous material. For example, the mesoporous area 440 may be at least a part of the second gap. According to an embodiment of the present disclosure, the mesoporous area 440 may be directly in contact with the outside of the first electronic device 401-1. For example, the mesoporous area 440 may form at least a part of the exterior of the first electronic device 401-1.

According to an embodiment of the present disclosure, the mesoporous area 440 may have a height that is shorter than the height of the second gap. For example, the mesoporous area 440 may have a height difference with respect to the flat surface of the exterior of the first electronic device 401-1 that is formed by the front cover 405 and the frame 413, and may be formed concavely from the flat surface. For example, when the user successively touches the front cover 405, the mesoporous area 440, and the frame 413, the user may feel that a specific portion (e.g., the mesoporous area 440) is finely recessed rather than feeling that the specific portion is smoothly continuous.

In the case of the second electronic device 401-2, the speaker 430 may be mounted, for example, inside the bracket 420. In this case, the bracket 420 may include a space that is recessed downwardly from a flat portion of the bracket 420 in order to mount the speaker 430. According to an embodiment of the present disclosure, a sound output from the speaker 430 may be output to the outside of the second electronic device 401-2 through a gap that is formed among the front cover 405, the bracket 420, and the frame 413. For example, the sound guide path of the second electronic device 401-2 may be initiated from the recessed portion of the bracket 420 and may be continued to a third gap between the front cover 405 and the frame 413, which is formed in the Y-axis direction via a first gap formed between the bracket 420 and the front cover 405 and a second gap between the front cover 405 and the frame 413, which is formed in the X-axis direction.

According to an embodiment of the present disclosure, the mesoporous area 440 may be at least a part of the third gap. For example, the mesoporous area 440 may have a height that is equal to or smaller than the height of the third gap. For example, the mesoporous area 440 may be formed in the same surface as the flat surface of the exterior of the second electronic device 401-2, which is formed by the front cover 405 and the frame 413. For example, when the user successively touches the front cover 405, the mesoporous area 440, and the frame 413, the user may feel that the front cover 405, the mesoporous area 440, and the frame 413 are smoothly continued.

In the case of the third electronic device 401-3, the front cover 405 or the rear cover 411 may (completely) wrap around at least one side surface of the frame 413. For example, the height of the frame 413 may be smaller than the height of the third electronic device 401-3. The speaker 430 may be mounted, for example, inside the bracket 420. According to an embodiment of the present disclosure, a sound output from the speaker 430 may be output to the outside of the third electronic device 401-3 through a gap that is formed among the front cover 405, the bracket 420, and the frame 413.

For example, the sound guide path of the third electronic device 401-3 may be initiated from the recessed portion of the bracket 420 and may be continued to a second gap between the front cover 405 and the frame 413, which is formed in the X-axis direction via a first gap that is formed between the bracket 420 and the front cover 405. According to an embodiment of the present disclosure, the mesoporous area 440 may have a width that is smaller than the width of the second gap. For example, the mesoporous area 440 may have a height difference in relation to a gently curved surface of the exterior of the third electronic device 401-3, which is formed by the front cover 405 and the frame 413, and may be formed to be recessed from the curved surface. For example, when the user successively touches the front cover 405, the mesoporous area 440, and the frame 413, the user may feel that a specific portion (e.g., the mesoporous area 440) is finely recessed rather than feeling that the specific portion is smoothly continued.

In the case of the fourth electronic device 401-4, the speaker 430 may be mounted, for example, inside the frame 413. According to an embodiment of the present disclosure, a sound output from the speaker 430 may be output to the outside of the fourth electronic device 401-4 through a gap formed between the front cover 405 and the frame 413. For example, the sound guide path of the fourth electronic device 401-4 may be initiated from the recessed portion of the frame 413 and may be continued to the gap between the front cover 405 and the frame 413, which is formed in the X-axis.

According to an embodiment of the present disclosure, the mesoporous area 440 may have a width that is equal to or smaller than the width of the gap. For example, the mesoporous area 440 may have no height difference in relation to the gently curved surface of the exterior of the fourth electronic device 401-4, which is formed by the front cover 405 and the frame 413, and may form a part of the curved surface. For example, when the user successively touches the front cover 405, the mesoporous area 440, and the frame 413, the user may feel that the front cover 405, the mesoporous area 440, and the frame 413 are smoothly continued. Although not illustrated in FIG. 4, the sound guide path may be entirely filled with, for example, a mesoporous material.

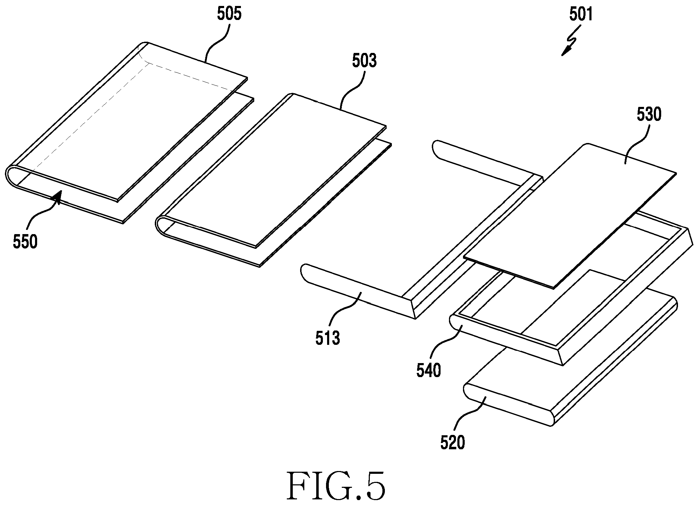

FIG. 5 illustrates a perspective view illustrating an electronic device (e.g., electronic device 101) in a disassembled state according to various embodiments of the present disclosure. Descriptions for the components that are the same as or similar to those of FIGS. 1A to FIG. 4 will be omitted.

Referring to FIG. 5, an electronic device 501 may include, for example, a display module 503, an outer cover 505, a frame 513, a battery 520, a PCB 530, and a bracket 540.

The display module 503 (e.g., the display module 103) may be, for example, flexible. For example, the display module 503 may provide an image through the front surface of the electronic device 501, at least one side surface that is continued from the front surface (e.g., the left side surface), and the rear surface. The display disposed over the front side surface, the left side surface, and the rear surface of the electronic device 501 may be configured, for example, by using one flexible display module 503. Although FIG. 5 exemplifies a display module that is capable of providing an image through three surfaces, various embodiments are not limited thereto. For example, it is possible to use a display module that is capable of providing an image through various numbers of surfaces, such as one surface, two surfaces, or four surfaces.

The outer cover 505 forms, for example, the exterior of the electronic device 501 which is recognized by the user's eyes, and may not include a hole. According to an embodiment of the present disclosure, the outer cover 505 may have a shape that corresponds to that of the display module 503. For example, in the case where the display module 503 includes three surfaces as in the embodiment illustrated in FIG. 3, the outer cover 505 may also include three surfaces.

A first surface of the outer cover 505 (e.g., the front surface of the electronic device 501) may be positioned on, for example, the first surface of the display module 503 to cover the first surface of the display module 503. A second surface of the outer cover 505 (e.g., the left side surface of the electronic device 501) may be positioned on, for example, the second side surface of the display module 503 to cover the second side surface of the display module 503. A third surface of the outer cover 505 (e.g., the rear surface of the electronic device 501) may be positioned below, for example, the third surface of the display module 503 to cover the third surface of display module 503.

A frame 513 (e.g., the frame 113) may cover, for example, the side surfaces on which the outer cover 505 is not positioned, among the plurality of side surfaces of the electronic device 501. For example, when the outer cover 505 does not cover the upper side surface, the right side surface, and the lower side surface of the electronic device 501, the frame 513 may cover the upper side surface, the right side surface, and the lower side surface of the electronic device 501.

According to an embodiment of the present disclosure, at least a part of the frame 513 may be formed of a conductive material. In addition, although not illustrated, an interface to be connected with an external device may be provided on the outer surface of the frame 513. The interface may include, for example, a mechanical interface (e.g., the interface, of which the shape is visually recognized by the user).

The battery 520 and the PCB 530 may be mounted on, for example, the bracket 540, and then may be mounted in the inner space of the electronic device 501. For example, the bracket 540, on which one or more components are mounted, may be seated in the inner space 550 of the electronic device 501 through at least one side surface of the outer cover 505. In this case, the frame 513 is coupled to the outer cover 505, in which the bracket 540 is seated, so that the electronic device 501 that has no hole can be formed.

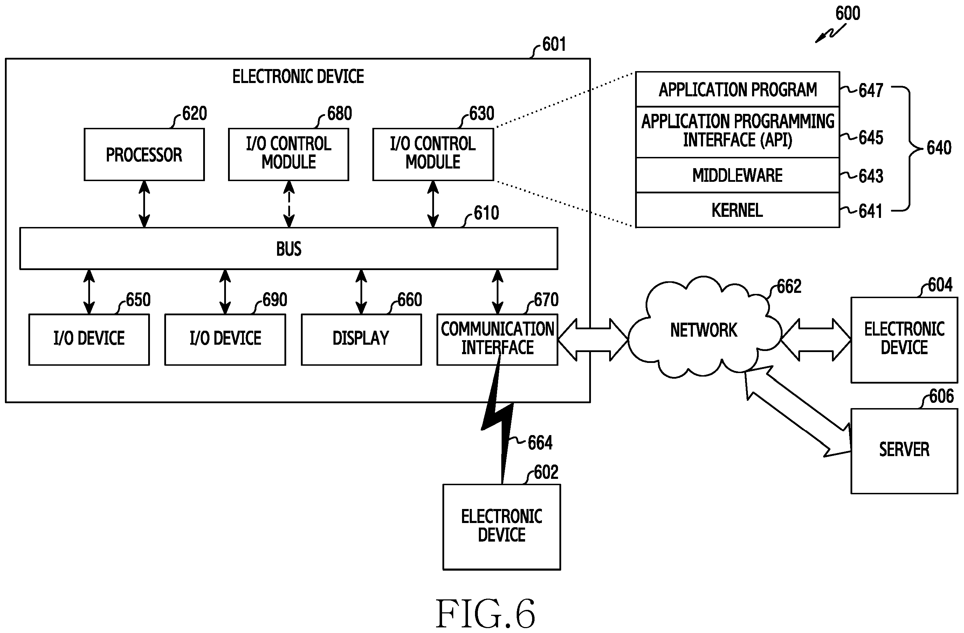

FIG. 6 is a view illustrating an electronic device within a network environment according to various embodiments of the present disclosure.

Referring to FIG. 6, descriptions will be made on an electronic device 601 within a network environment 600 in various embodiments of the present disclosure. The electronic device 601 may include a bus 610, a processor 620, a memory 630, I/O devices 650 and 690, a display 660, a communication interface 670, and an I/O control module 680. In an embodiment of the present disclosure, the electronic device 601 may omit at least one of the above-mentioned components or may additionally include other components.

The bus 610 may include, for example, a circuit that connects the above-mentioned components 620, 630, 650, 660, 670, 680, and 690 and transmits communication (e.g., a control message and/or data) between the components.

The processor 620 may include one or more of a central processing unit (CPU), an application processor (AP), and a communication processor (CP). The processor 620 may execute, for example, an arithmetic operation or data processing related to a control and/or communication of one or more other components of the electronic device 601.

The memory 630 may include a volatile memory and/or a non-volatile memory. The memory 630 may store, for example, commands or data related to one or more other components of the electronic device 601. According to an embodiment of the present disclosure, the memory 630 may store software and/or a program 640. The program 640 may include, for example, a kernel 641, a middleware 643, an application programming interface (API) 645, and/or an application program (or an "application") 647. At least one of the kernel 641, the middleware 643, and the API 645 may be referred to as an operating system (OS).

The kernel 641 may control or manage, for example, system resources (*e.g.,* the bus 610, the processor 620, or the memory 630) that are used for executing operations or functions implemented in the other programs (*e.g.,* the middleware 643, the API 645, or the application programs 647). In addition, the kernel 641 may provide an interface that allows the middleware 643, the API 645, or the application program 647 to access individual components of the electronic device 601 so as to control or manage the system resources.

The middleware 643 may play an intermediary role such that the API 645 or the application programs 647 may communicate with the kernel 641 so as to exchange data.

In addition, the middleware 643 may process one or more task requests received from the application program 647 according to priority. For example, the middleware 643 may assign the priority capable of using a system resource of the electronic device 601 (*e.g.,* the bus 610, the processor 620, or the memory 630) to at least one of the application programs 647. For example, the middleware 643 may process the one or more task requests so as to perform scheduling, load balancing, or the like for the one or more task requests according to the priority assigned to the at least one of the application programs 647.

The API 645 is an interface for allowing the application program 647 to control functions provided by the kernel 641 or the middleware 643 and may include, for example, at least one interface or function (*e.g.,* commands) for a file control, a window control, an image processing, or a character control.

The I/O devices 650 and 690 may serve as interfaces that are capable of delivering commands or data, entered from, for example, a user or an external device to the other component(s) of the electronic device 601. Also, the I/O devices 650 and 690 may output commands or data received from the other component(s) of the electronic device 601 to the user or the external device.

The display 660 may include, for example, a liquid crystal display (LCD), a light emitting diode (LED) display, an organic LED(OLED) display, or a microelectromechanical systems (MEMS) display, or an electronic paper display. The display 660 may display various contents (*e.g.,* text, image, video, icon, or symbol) to, for example, the user. The display 660 may include a touch screen, and may receive a touch input, a gesture input, a proximity input, or a hovering input using, for example, an electronic pen or a part of the user's body.

The communication interface 670 may set, for example, communication between the electronic device 601 and an external electronic device (*e.g.,* a first external electronic device 602, a second external device 604, or a server 606). For example, the communication interface 670 may communicate with the external device (*e.g.,* the second external electronic device 604 or the server 606) by being connected with a network 662 through wired or wireless communication.

The wireless communication may use at least one of, for example, long-term evolution (LTE), LTE advanced (LTE-A), code division multiple access (CDMA), wideband CDMA (WCDMA), universal mobile telecommunication system (UMTS), wireless broadband (WiBro), or global system for mobile communication (GSM). In addition, the wireless communication may include, for example, short distance communication 664. The short distance communication 664 may include at least one of, for example, WiFi, Bluetooth (BT), near field communication (NFC), and GPS. The wired communication may use at least one of, for example, USB, high definition multimedia interface (HDMI), RS-232 recommended standard 232 (RS-232), and plain old telephone service (POTS). The network 662 may include a telecommunication network, for example, at least one of a computer network (*e.g.,* local area network (LAN) or wide area network (WAN)), internet, and a telephone network.

The I/O control module 680 may process at least a part of the information that is acquired from, for example, the other components (e.g., the processor 620, the memory 630, the I/O devices 650 and 690, or the communication interface 670), and may provide this to the user in various methods. For example, the I/O control module 680 may control the I/O device 650 and/or the I/O device 690 according to the user's situation information for the electronic device 601 (e.g., the function that is being currently executed by the electronic device 601 or the orientation of the electronic device 601) by using the processor 620 or independently from the processor 620.

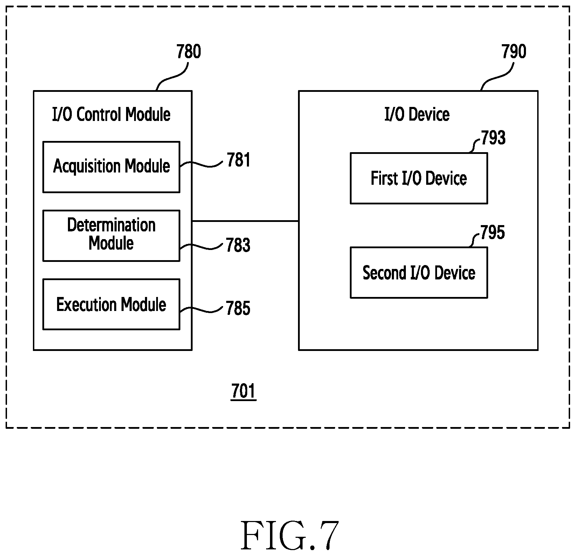

For example, in the case where the situation information is first situation information, the I/O control module 680 may use the I/O device as an output device, and in the case where the situation information is second situation information, the I/O control module 680 may use the I/O device as an input device. The I/O control module 680 may be, for example, stored in the memory 630 to be executed by the processor 620, or in addition to or instead of this, the I/O control module 680 may be at least partially implemented by a hardware circuit. The contents of the I/O control module 680 will be additionally described below with reference to FIG. 7.

At least one of the first and second external electronic devices 602 and 604 may be a type of device that is the same as or different from the electronic device 601. According to an embodiment of the present disclosure, the server 606 may include a group of one or more servers. According to various embodiments of the present disclosure, all or some of the operations to be executed by the electronic device 601 may be executed by another electronic device or a plurality of other electronic devices (e.g., the electronic devices 602 and 604 or the server 606). According to an embodiment of the present disclosure, in the case where the electronic device 601 should perform a certain function or service automatically or by request, the electronic device 601 may request some functions that are associated therewith from the other electronic devices (e.g., the electronic devices 602 and 604 or the server 606) instead of or in addition to executing the function or service by itself. The other electronic devices (e.g., the electronic devices 602 and 604 or the server 606) may execute the requested functions or additional functions, and may transmit the results to the electronic device 601. The electronic device 601 may provide the requested functions or services by processing the received results as they are or additionally. For this purpose, for example, a cloud computing technique, a distributed computing technique, or a client-server computing technique may be used.

FIG. 7 is a block diagram of an electronic device (e.g., the electronic device 601) according to various embodiments of the present disclosure. Descriptions of the components that are the same as or similar to those of FIG. 6 will be omitted.

Referring to FIG. 7, an electronic device 701 may include, for example, an I/O control module 780 (e.g., the I/O control module 680), and an I/O device 790 (e.g., the I/O device 690).

The I/O control module 780 may control the I/O device 790 that includes a first I/O device 793 and a second I/O device 795 based on the user's situation information for the electronic device 701. For example, in the case where the situation information is first situation information, the I/O control module 780 may perform at least one function through the first I/O device 793 in response to the user's input. On the contrary, for example, in the case where situation information is second situation information, the I/O control module 780 may perform the at least one function through the second I/O device 795.

According to an embodiment of the present disclosure, the first I/O device 793 (e.g., the first I/O device 115) may be formed in a first area of the electronic device 701 (e.g., the first area 127 in the upper end of the electronic device 701), and the second I/O device 795 (e.g., the second I/O device 117) may be formed in a second area of the electronic device 701 (e.g., the second area 129 in the lower end of the electronic device 701).

According to an embodiment of the present disclosure, the I/O device 790 may be included in the other electronic device that is functionally connected with (e.g., communicates with) the I/O control module 780. For example, the first I/O device 793 may be formed in a first area of the electronic device (e.g., the left side), and the second I/O device 795 may be formed in a second area of the other electronic device (e.g., the right side).

According to an embodiment of the present disclosure, the first area and the second area may refer to specific areas, such as the upper, lower, left, right sides, the display (e.g., the display 660), or the frame (e.g., the frame 113) of the electronic device 701, which may be determined based on the exterior of the electronic device 701. According to another embodiment of the present disclosure, the first area and the second area may refer to relative areas according to the user's situation for the electronic device 701. For example, the first area of the electronic device 701 (e.g., the upper end) may be the second area (e.g., the lower end) according to the orientation, in which the electronic device is used by the user (e.g., a normal orientation or an inversed orientation).

For example, in the case where the user grips the electronic device 701 in a first orientation, the upper end of the electronic device 701 may be the first area and the lower end of the electronic device 701 may be the second area. Whereas, in the case where the user grips the electronic device 701 in a second orientation, the lower end of the electronic device 701 may be the first area, and the upper end of the electronic device 701 may be the second area. In another example, in the case where the user grips the electronic device 701 in a third orientation, the left side of the electronic device 701 may be the first area, and the right side of the electronic device 701 may be the second area. Whereas, in the case where the user grips the electronic device 701 in a fourth orientation, the right side of the electronic device 701 may be the first area and the left side of the electronic device 701 may be the second area.

The I/O control module 780 may include, for example, an acquisition module 781, a determination module 783, and an execution module 785. According to an embodiment of the present disclosure, the acquisition module 781 may acquire a user's input for the electronic device 701. For example, the acquisition module 781 may be set to acquire at least a part of information related to an application (e.g., the application program 647) or a function of the electronic device 701 as the user's input.

According to embodiment of the present disclosure, the acquisition module 781 may acquire information related to an application (e.g., the application program 647) or a function (e.g., a function of the electronic device that is executed through the processor 620) of the electronic device 701 from the user. For example, the acquisition module 781 may acquire an input that is made by the user by selecting an icon that corresponds to a specific function or by pushing a key that corresponds to the specific function in order to use the electronic device (e.g., a specific application or a function), as the input.

According to an embodiment of the present disclosure, the acquisition module 781 may acquire the information related to the application (e.g., the application program 647) or the function of the electronic device 701 through a communication module (e.g., the communication interface 670). For example, the acquisition module 781 may receive a phone call from the other electronic device (e.g., the electronic device 604) or from the server (606) through a network (e.g., the network 662), or may acquire a command that executes a specific application or function as the input.

According to an embodiment of the present disclosure, the determination module 783 may determine the user's situation information for the electronic device 701. The situation information may include, for example, the orientation of the electronic device 701, the power state of the electronic device 701, the user's line of sight for the electronic device 701, the user's grip state for the electronic device 701, or the orientation of the electronic device 701 for the user.

According to an embodiment of the present disclosure, the determination module 783 may determine the situation information based on various pieces of sensor information that are acquired from a sensor module (e.g., the sensor module 1740 of FIG. 17) that is functionally connected with the electronic device 701. According to an embodiment of the present disclosure, the sensor information may include inclined level information of the electronic device 701, orientation information of the electronic device 701, and movement information of the electronic device 701 that is obtained from at least one of an acceleration sensor, a gyro sensor, and a gesture sensor. In addition, the sensor information may include, for example, information for the orientation of the user's face, the user's look, or the user's line of sight that is acquired through a camera. Or, the sensor information may include, for example, the user's touch information that is acquired through the frame (e.g., the first touch key 143) that forms the exterior housing of the electronic device 701.

According to an embodiment of the present disclosure, the determination module 783 may determine situation information through at least one of the sensor information, the function of the electronic device 701, and the application information. For example, when it is confirmed through the gyro sensor that the electronic device 701 is inclined by about 90 degrees (e.g., the longer sides L1 (see, e.g., FIG. 1A) of the electronic device 701 are arranged in the horizontal direction), the determination module 783 may determine the orientation of the electronic device 701 as the situation information, as the first orientation. Whereas, when it is confirmed through the gyro sensor that the electronic device 701 is inclined by about zero (0) degrees, the determination module 783 may determine the orientation of the electronic device 701 as the situation information, as the second orientation.

According to an embodiment of the present disclosure, when the battery capacity of the electronic device 701 is about 0%, the determination module 783 may determine the power state of the electronic device 701 as the situation information, as a turn-off state. Whereas, in the case where the battery capacity of the electronic device 701 remains to be more than about 0% but an image is not output through the display or a sound is not output from the speaker, the determination module 783 determines the power state of the electronic device 701 as the situation information, as the sleep mode (e.g., the state in which the electronic device 701 is turned on but is deactivated). In another example, when the battery capacity of the electronic device 701 remains to be more than about 0% and an image is being output through the display or a sound is being output from the speaker, the determination module 783 may determine the power state of the electronic device 701 as the situation information, as a turn-on and activation state.

According to an embodiment of the present disclosure, the determination module 783 may determine the direction of the user's line of sight based on the user's face recognized through the camera. For example, when the user's facial image captured through the camera lies on its side (e.g., when the user's head is disposed at the left side and the user's jaw is disposed at the right side), the determination module 783 may determine the user's line of sight as a first direction (e.g., a direction perpendicular to the electronic device 701). On the contrary, when the user's image stands upright (e.g., when the user's head is disposed at the upper side and the user's jaw is disposed at the lower side), the determination module 783 may determine the user's line of sight is as a second direction (e.g., a direction that is parallel to the electronic device 701).

According to an embodiment of the present disclosure, the determination module 783 may determine the user's grip state for the electronic device 701 through one or more touch input devices (e.g., the first touch key 143) that are formed on the housing of the electronic device 701. For example, in the case where a touch input is acquired through a first touch key positioned at a first position (e.g., the right side of the electronic device 701) and a second touch key positioned at a second position (e.g., the left side of the electronic device 701), the determination module 783 may determine that the user holds the electronic device 701 by a hand. On the contrary, in the case where no touch input is acquired through any touch key, or a touch input is acquired from any one positioned touch key, the determination module 783 determines, for example, that the user does not hold the electronic device by a hand.

According to an embodiment of the present disclosure, the determination module 783 may determine whether the user moves toward the electronic device 701 (e.g., the display) more and more as situation information through an image sensor (e.g., a camera) or a heat sensor. For example, the determination module 783 may confirm the distance between the electronic device 701 and the user as the situation information. For example, when the temperature acquired through the heat sensor is finely raised more and more, the determination module 783 may determine that the distance between the user and the electronic device 701 decreases more and more. On the contrary, when the temperature acquired through the heat sensor is finely reduced more and more, the determination module 783 may determine that the distance between the user and the electronic device 701 increases more and more.

According to an embodiment of the present disclosure, when a specific application is being executed, the determination module 783 may determine whether the user's hand moves toward or moves away from the electronic device 701 more and more as the situation information. When a phone application is being executed through the electronic device 701, the determination module 783 may confirm, for example, the distance between the user's hand and the electronic device 701 (e.g., the display) as the situation information.

According to an embodiment of the present disclosure, the determination module 783 may confirm the user's position in relation to the electronic device 701. For example, when the user's finger moves to a specific area of the display that is included in the electronic device 701, the determination module 783 may determine where the specific area is. For example, the electronic device 701 may display, for example, visual information that can be recognized by the user in the specific area through the display.

According to an embodiment of the present disclosure, the determination module 783 may confirm whether an external device moves toward the electronic device 701. For example, the determination module 783 may confirm distance information between the external device and the electronic device 701 as the situation information based on a magnetic field generated from the external device interface that is capable of being connected with the electronic device 701 or a communication intensity between the electronic device 701 and the external device. In this case, the electronic device 701 may display, for example, visual information that can provide information that the external device moves toward the electronic device 701 more and more, as the situation information through the display.

According to an embodiment of the present disclosure, the execution module 785 may control the first I/O device 793 or the second I/O device 795 based on the situation information. For example, the execution module 785 may cause the first I/O device 793 formed in the first area (e.g., the upper end) of the electronic device 701 or the second I/O device 795 formed in the second area (e.g., the lower end) of the electronic device 701, which is positioned symmetrically to the first area, to be executed as at least one function among activation/deactivation, a microphone function, a speaker function, and a vibration based at least a part of the user's situation information for the electronic device 701.

For example, when the situation information is first situation information (e.g., when the electronic device 701 is positioned in the first orientation), the execution module 785 may deactivate the second I/O device 795. On the contrary, when the situation information is second situation information (e.g., when the electronic device 701 is positioned in the second orientation), the execution module 785 may deactivate the first I/O device 793. According to an embodiment of the present disclosure, the execution of a media application may be used as the input through the acquisition module 781.

For example, in response to the user's input, the electronic device 701 may output a video image through the media application. In this case, the first I/O device 793 may be positioned in the left side area of the electronic device 701, which is closer to the user, and the second I/O device 795 may be positioned on the right side area of the electronic device 701, which is spaced farther away from the user. When the battery capacity of the electronic device 701 is in relatively short supply, any one of the first I/O device 793 and the second I/O device 795 may only be activated. According to an embodiment of the present disclosure, the execution module 785 may activate the first I/O device 793 and deactivate the second I/O device 795 in response to the input.

According to an embodiment of the present disclosure, the execution module 785 may perform at least one function through the first I/O device 793 or the second I/O device 795 based on the situation information. For example, the electronic device 701 may be positioned in the first orientation with reference to the user. For example, the first I/O device 793 may be positioned in the upper portion of the electronic device 701 and the second I/O device 795 may be positioned in the lower portion of the electronic device 701. According to an embodiment of the present disclosure, the phone application may be executed as the input through the electronic device 701. In this case, the execution module 785 may use, for example, the first I/O device 793 that is closer to the user's ear as the speaker function among the vibration function, the speaker function, and the microphone function based on the situation information. Whereas, the execution module 785 may use the second I/O device 795 that is closer to the user's mouth as the microphone function.

According to an embodiment of the present disclosure, the electronic device 701 may be positioned in the second orientation with reference to the user. For example, the first I/O device 793 may be disposed in the lower portion of the electronic device 701, and the second I/O device 795 may be positioned in the upper portion of the electronic device 701. In this case, the execution module 785 may use, for example, the second I/O device 795 that is closer to the user's ear as the speaker function among the vibration function, the speaker function, and the microphone function based on the situation information. On the contrary, the execution module 785 may use, for example, the first I/O device 793 that is closer to the user's mouth as the microphone function.

According to an embodiment of the present disclosure, the user may execute the phone application through the electronic device 701. In this case, the user may use (e.g., carry) the electronic device 701 in the first orientation and may hold the lower portion of the electronic device 701. In this case, the execution module 785 may cause at least one of one or more sub I/O devices (e.g., the sub I/O devices 115-1, 115-2, and 115-3), which are included in the first I/O device 793 formed in the upper portion of the electronic device 701), to operate as a receiver that outputs a sound based on the situation information. In addition, the execution module 785 may include at least one of one or more sub I/O devices (e.g., the sub I/O devices 117-1, 117-2, and 117-3), which are included in the second I/O device 795 positioned in the lower portion, to operate as a microphone that receives a sound.

According to an embodiment of the present disclosure, the execution module 785 may display a function (e.g., activation/deactivation, a microphone function, a speaker function, or a vibration function) corresponding to the first I/O device 793 (or the second I/O device 795) or a position (e.g., the position of the I/O device that is being driven among the first I/O device 793 and the second I/O device 795) through the display.

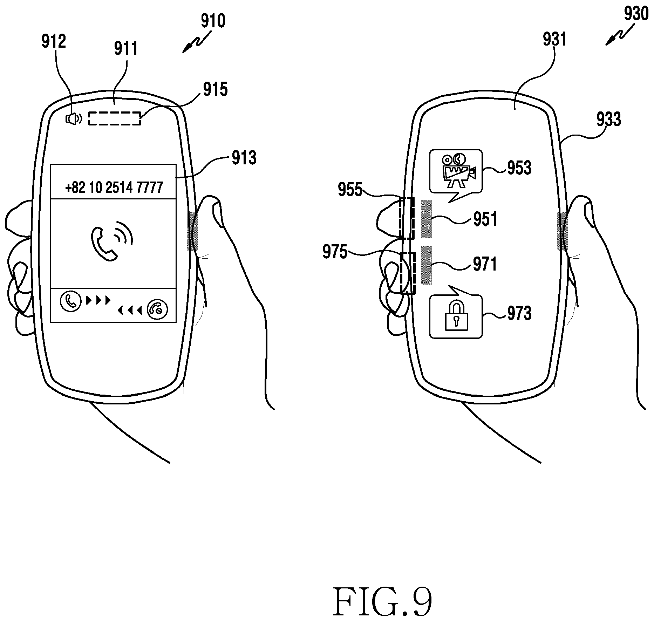

For example, based on the situation information for the electronic device 701, the first I/O device 793 may be operated as a speaker and the second I/O device 795 may be operated as a microphone. According to an embodiment of the present disclosure, the execution module 785 may display an icon or a virtual hole that indicates the speaker function in the area of the display which corresponds to the first I/O device 793 that is being operated as the speaker. Whereas, the execution module 785 may display an icon or a virtual hole that indicates the microphone function in the area of the display which correspond to the second I/O device 795 that is being operated as the microphone. The contents related to the display will be described below with reference to FIG. 9.

According to an embodiment of the present disclosure, based on the situation information, the execution module 785 may control at least one touch input device (e.g., the first touch key 143) that is formed on the exterior of the electronic device 701. For example, the at least one touch input device may include a first touch input device that is positioned in the first area of the exterior of the electronic device 701 (e.g., the frame 113) (e.g., the upper portion of the electronic device 710), and a second touch input device that is positioned in the second area of the exterior of the electronic device 701 (e.g., the lower portion of the electronic device 701).

For example, the user of the electronic device 701 may control the function of the electronic device 701 through the first touch input device that is positioned in the first area while holding the second area of the electronic device 701. In this case, the execution module 785 may activate the first touch input device, and may deactivate the second touch input device. According to embodiment of the present disclosure, the execution module 785 may activate a first portion of the display that corresponds (e.g., in position) to the first area, and a second portion of the display that corresponds second area.

According to an embodiment of the present disclosure, the user may execute a game application while holding both of the left and right sides of the electronic device 701 in a state where the electronic device 701 is disposed laterally (e.g., in a state where the long sides of the electronic device 701 are arranged horizontally). In this case, for example, based on at least a part of the situation information, the execution module 785 may cause the first I/O device 793 positioned in the first area to be operated as a speaker that outputs a sound, and may cause the second sub I/O device 795 to be operated as a vibration element that is used for vibration feedback of the game function.

According to an embodiment of the present disclosure, based on the situation information, the execution module 785 may control at least a part of the exterior of the electronic device 701 (e.g., at least a part of the frame). For example, based on the situation information, the execution module 785 may activate at least a part of the frame (e.g., the frame 113) that is positioned in the first area (e.g., the upper end of the electronic device 701), and may deactivate the remaining area of the frame that is positioned in the second area (e.g., the lower end of the electronic device 701).

According to an embodiment of the present disclosure, the execution module 785 may display a portion that corresponds to the position of the activated appearance as a user interface (e.g., an icon) through the display. For example, the execution module 785 may provide the activated position of the frame of the first area (e.g., the first touch key 143) or a function to the user with sound or visual information. Additional information related to the display will be described below with reference to FIG. 9.

According to an embodiment of the present disclosure, the execution module 785 may receive a user's input through a user interface (e.g., a representation) that indicates a function or a position that corresponds to the first I/O device 793 or the second I/O device 795. For example, in the case where the first I/O device 793 is activated, the execution module 785 may display a user interface that is capable of controlling the first I/O device 793 in at least a part of the display which corresponds to the position of the first I/O device 793.

According to an embodiment of the present disclosure, the execution module 785 may acquire the user's input through the user interface. The execution module 785 may change the position or the function that corresponds to the user's input among the first I/O device 793 and the second I/O device 795 based on, for example, the user's input. For example, when the first I/O device 793 is operated as a speaker, the execution module 785 may display a user interface that is capable of adjusting the volume of the first I/O device 793 in the area that corresponds to the position of the first I/O device 793. When the user moves in the first direction (e.g., leftward) on the user interface, the execution module 785 may reduce the volume of the first I/O device 793. On the contrary, when the user moves in the second direction (e.g., rightward) on the user interface, the execution module 785 may increase the volume of the second I/O device 795.

According to an embodiment of the present disclosure, the user may drag the first user interface, on which a position of the speaker that corresponds to the first sub I/O device included in the first I/O device 793 is indicated, during the use of the communication function through the electronic device 701. In this case, the execution module 785 may display, on the display, the second interface that corresponds to the position of the second sub I/O device included in the first I/O device 793 that performs, for example, the speaker function.

According to an embodiment of the present disclosure, based on the fact that the user transfers the first user interface to the second user interface, the execution module 785 may use the second sub I/O device as the speaker. According to an embodiment of the present disclosure, the first I/O device 793 and the second I/O input device 795 may be operated symmetrically to each other. For example, the first I/O device 793 may include a first sub I/O device that is operated as a microphone, a second sub I/O device that is operated as a speaker, and a third sub I/O device that is operated as a receiver. In this case, the second I/O device 795 may include, for example, a fourth sub I/O device that is operated as a microphone while corresponding to the first sub I/O device, a fifth sub I/O device that is operated as a speaker while corresponding to the second sub I/O device, and a sixth sub I/O device that is operated as a receiver while corresponding to the third sub I/O device.

According to an embodiment of the present disclosure, based on the activation/deactivation of the first I/O device 793 or the second I/O device 795, the execution module 785 may activate/deactivate a first camera that is positioned in an area corresponding to the first I/O device 793 or a second camera that is positioned in an area corresponding to the second I/O device 795. For example, the first I/O device 793 may be activated while the second I/O device 795 may be deactivated. In this case, for example, the execution module 785 may activate the first camera and deactivate the second camera.

According to an embodiment of the present disclosure, the execution module 785 may activate a first area of the display or a first area of frame that corresponds to the first I/O device 793. On the contrary, the execution module 785 may deactivate a second area of the display (e.g., a touch panel) or a second area of the frame that corresponds to the second I/O device 795.

According to an embodiment of the present disclosure, the execution module 785 may display a user interface that corresponds to one or more touch input devices through the display. For example, first to third touch input devices may be positioned on the left of the electronic device 701 and fourth to sixth touch input devices may be positioned on the right of the electronic device 701. In this case, the execution module 785 may display a virtual user interface that corresponds to an activated touch input device among the first to sixth touch input devices. For example, when the first to third touch input devices are activated, the execution module 785 may display a virtual touch button that corresponds to the first to third touch input devices on the left of the electronic device 701 (e.g., one the left of the display).

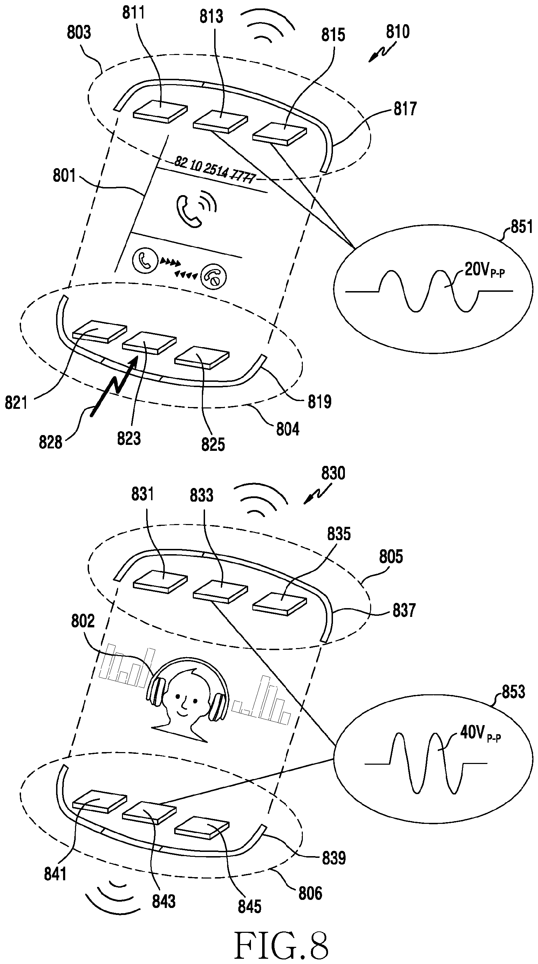

FIG. 8 illustrates a use environment of an electronic device (e.g., the electronic device 601) according to various embodiments of the present disclosure.

Referring to FIG. 8, first and second electronic devices 810 and 830 may control the function of an I/O device (e.g., the first I/O device 693 or a second I/O device (e.g., the second I/O device 695)), according to, for example, a function or an application that is executed in the electronic device. As an example, the first electronic device 810 may execute a phone call function 801 while the second electronic device 830 may execute a music reproduction function 802.

According to an embodiment of the present disclosure, at least partially based on the user's situation information of the user of the electronic device 810, the first electronic device 810 may select I/O devices at least a part of the phone call function 801. For example, the first electronic device 810 may include first to third sub I/O devices 811, 813, and 815 (e.g., the first to third sub I/O device 115-1, 115-2, and 115-3) that are positioned in a first area 803 and fourth to sixth sub I/O devices 821, 823, and 825 (e.g., the fourth to sixth sub I/O devices 117-1, 117-2, and 117-3) that are positioned in a second area 804.

According to an embodiment of the present disclosure, the first electronic device 810 may use at least one of the first to third sub I/O devices 811, 813, and 815 of the first area 803 (e.g., the upper end of the first electronic device 810) for a receiver function. According to an embodiment of the present disclosure, according to the state in which the user uses the electronic device, the first electronic device 810 may use a specific sub I/O device (e.g., the sub I/O devices 813 and 815) for the receiver function, and may not use a sub I/O device other than the specific sub I/O device (e.g., the sub I/O device 811) for the receiver function.

For example, when the user performs a phone call while holding the first electronic device 810 by the left hand, the first electronic device 810 may deactivate the first sub I/O device 811 and may use the second and third sub I/O devices 813 and 815 as the receiver. According to another embodiment of the present disclosure, when the user performs a phone call while holding the first electronic device 810 by the right hand, the first electronic device 810 may operate the first and second sub I/O devices 811 and 813 as the receiver, and may deactivate the third sub I/O device 815. The first electronic device 810 may operate a sub I/O device that is closer to the user among the plurality of sub I/O devices as a receiver, so that power consumption can be reduced and a phone call sound can be more efficiently transmitted to the user.

According to an embodiment of the present disclosure, at least partially based on the user's situation information for the user of the electronic device 810 (e.g., the use of the phone call function), the first electronic device 810 may operate at least one of, for example, the fourth to sixth sub I/O devices 821, 823, 825 of the second I/O device that is formed in the second area 804 (e.g., the lower end of the first electronic device 810 in a microphone function that acquires a sound 828. According to an embodiment, the electronic device may do not operate the sub I/O devices (e.g., the fourth and sixth sub I/O devices 821 and 825) other than the fifth sub I/O device 823 that is operated as the microphone. According to an embodiment of the present disclosure, the fifth sub I/O device may perform the microphone function through at least a part of the frame (e.g., frame 819).

For example, when the user performs a phone call while holding the second area 804 of the electronic device 810, at least a portion of the first touch key 143 of the frame 817 may be activated. For example, the user may require the performing of additional functions related to the phone call function 801 (e.g., phone call volume control, contact number search, or memo draft) while the electronic device conducts the phone call function 801. In this case, the electronic device 810 may activate the frame 817 (e.g., the first touch key 143) to receive the user's input for the additional functions so that the additional functions can be performed. According to an embodiment of the present disclosure, the electronic device may display the icons and positions of the first touch key 143 or the additional functions through at least a part of a display (the display 660) included in the first area.

According to an embodiment of the present disclosure, the electronic device may adaptively provide the input position of the additional functions to the user according to the grip of the user. For example, when the user holds the first area 803 of the electronic device 810 (e.g., the upper end of the electronic device 810), the user may activate at least one of touch keys (e.g., the first touch key 143) formed on the frame 819 of the second area 804 of the electronic device 810 (e.g., the lower end of the electronic device 810).

According to an embodiment of the present disclosure, the second electronic device 830 may perform a music reproduction function 802. The electronic device (e.g., the execution module 785) may operate at least one of the first I/O device (e.g., the first to third sub I/O devices 831, 833, and 835) (e.g., the first to third sub I/O devices 115-1, 115-2, and 115-3) positioned in the first area 805 of the electronic device (e.g., the upper end of the electronic device 830) and the second I/O device (e.g., the fourth to sixth sub I/O devices 841, 843, and 845) (e.g., the first to third sub I/O devices 117-1, 117-2, and 117-3) positioned in the second area 806 of the electronic device (e.g., the lower end of the electronic device 830) as a speaker, based on at least a part of the user's situation information for the second electronic device 830.

According to an embodiment of the present disclosure, depending on the state in which the user holds the electronic device (e.g., the state in which the user holds the upper end or lower end of the electronic device 830), the electronic device 830 may use a specific sub I/O device (e.g., the second sub I/O device 833 or the fifth sub I/O device 843) as a speaker, and may deactivate the other sub I/O devices (e.g., the first, third, fourth, and sixth sub I/O devices 831, 835, 841, and 845). For example, the electronic device may use at least one I/O device (e.g., a sub I/O device) that may transmit a sound efficiently to avoid a portion of the electronic device, which is held by the user.

For example, when the user holds a portion of the first area 805 and a portion of the second area 806 of the electronic device (e.g., a portion of the first I/O device (e.g., the first to third sub I/O devices 831, 833, and 835) and a portion of the second I/O device (e.g., the fourth to sixth sub I/O devices 841, 843, and 845)) by both hands while using the electronic device, the electronic device may perform a control such that the sound can be output to avoid the user's hands that are recognized through touch keys (e.g., the first touch keys 143) of the frames (e.g., the frames 837 and 839) in the first area 805 and the second area 806.

For example, when it is determined through the frames that the user's hands hide the sub I/O devices 831 and the sub I/O device 835, the electronic device 830 (e.g., the I/O control module 780) may use the sub I/O device 833 as a speaker. For example, when it is determined that the user's hands hide the fourth sub I/O device 841 and the sixth sub I/O device 845, the electronic device may use the fifth sub I/O device 843 as a speaker.

On the contrary, when the user's hands do not hide the fourth or sixth sub I/O device 841 or 845, the electronic device may also use the fourth or sixth sub I/O device 841 or 845 as a speaker. According to an embodiment of the present disclosure, even if the user's hands do not hide the fourth or sixth sub I/O device 841 or 845, the electronic device may not use the fourth or sixth sub I/O device 841 or 845 at least partially based on the situation information, such as a volume that is currently set by the user or a location in which a function is currently being executed.

According to an embodiment of the present disclosure, at least partially based on the user's situation information for the electronic device, the electronic device 810 or 830 (e.g., the I/O control module 780) may adjust the voltage that is applied to the sub I/O devices (e.g., the first to sixth sub I/O devices 811 to 845) of the I/O device (e.g., the first I/O device 793 or the second I/O device 795) so as to make an I/O device operate as a receiver or a speaker. For example, the electronic device 810 may apply a low voltage (e.g., 20Vp-p) 851 to at least one sub I/O device (e.g., the second or third sub I/O device 813 or 815) so as to use the at least one sub I/O device 813 or 815 as a receiver. For example, the electronic device 830 may apply a high voltage (e.g., 40Vp-p) 853 to at least one sub I/O device (e.g., the second or fifth sub I/O device 833 or 843) so as to use the sub I/O device as a speaker.

According to an embodiment of the present disclosure, the electronic device (e.g., the electronic device 701) may adjust the voltage that is applied to an I/O device (e.g., the sub I/O devices of the first I/O device 793) or the second I/O device 795 (e.g., the first to sixth sub I/O device 811 to 845) so as to adjust the output (e.g., the sound volume) when the I/O device is used as a speaker or a receiver. In addition, according to an embodiment of the present disclosure, the electronic device may adjust the frequency of the power that is applied to the I/O device so as to use the sub I/O device as a vibration element that merely transmits a vibration.

FIG. 9 illustrates user interfaces that correspond to I/O devices of an electronic device (e.g., the electronic device 601) according to various embodiments of the present disclosure.

Referring to FIG. 9, when a phone call function is executed through an electronic device 910, a user interface 913 that corresponds to the phone call function may be displayed. According to an embodiment of the present disclosure, a first electronic device 910 and a second electronic device 930 may display at least one of a function and a position that correspond to an I/O device (e.g., the I/O device 790) through a display 911 (e.g., the display 660). For example, the first electronic device 910 may display a first user interface 912 that indicates the function of the I/O device that is operated as a receiver (e.g., the first or second I/O device 793 or 795) or a second user interface 915 that indicates the position of the receiver.

According to an embodiment of the present disclosure, the first electronic device 910 may perform an additional function through the first user interface 912 or the second user interface 915. For example, when the user pushes the first user interface 912 that indicates the receiver function, the corresponding I/O device may be operated in a function that is different from the receiver function (e.g., a speaker function or a microphone function). According to an embodiment of the present disclosure, when the user moves the second user interface 915 that indicates the receiver position from a first position to a second position, the electronic device 910 may control the I/O device such that the I/O device is operated in the receiver function that corresponds to the second position according to the movement.

The frame 933 of the second electronic device 930 may include a first input means 955 and a second input means 975. According to an embodiment of the present disclosure, the second electronic device 930 may display the first to fourth user interfaces 951, 953, 971, and 973 that indicate the function and positon of the first and second input means 955 and 975 (e.g., the first touch key 143) through the display 931.

For example, based on the user's grip (e.g., the state in which the user holds the electronic device), the second electronic device 930 may activate the first input means 955 or the second input means 975 that corresponds to the grip. The second electronic device 930 may display a first user interface 951 that indicates the position of the first input means 955 which is, for example, the input position of the activated through the display 931. In addition, the second electronic device 930 may display the second user interface 953 that indicates the function of the first input means.

According to an embodiment of the present disclosure, the second electronic device 930 may display a third user interface 971 that indicates the position of the second input means 957 which is, for example, the input position of the activated frame through the display 931. In addition, the second electronic device 930 may display a fourth user interface 973 that indicates the function of the second input means.

According to an embodiment of the present disclosure, the second electronic device 930 may indicate the positions that correspond to the activated first and second input means 955 and 975 through the frame 933. For example, the second electronic device 930 may indicate the positions of the first and second input means 955 and 975 to the user by turning ON/OFF an LED included (e.g., mounted) inside a cut-off area of the frame (e.g., the cut-off area 145).

According to an embodiment of the present disclosure, based on the user's input (e.g., the position of a finger), the second electronic device 930 may move at least one of the first to fourth user interfaces 951, 953, 971, and 973. For example, when the position of the user's finger that touches the frame 933 of the second electronic device 930, the second electronic device 930 may display a user interface that indicates the position or function of the input means that corresponds to the position of the finger. For example, when the user's finger moves from the first input means 955 to the second input means 975, the second electronic device 930 may display the second user interface that corresponds to the second input means without displaying the first user interface 951.

According to an embodiment of the present disclosure, the second electronic device 930 may execute a function that corresponds to the input means of the activated frame 933. The function that corresponds to the input means may include, for example, a function or an application that is executed when the input means is pushed. For example, when the user's finger (e.g., one finger) moves from the first input means 955 to the second input means 975, the second electronic device may cause a LOCK function that corresponds to the second input means 975, instead of a movie appreciation function that corresponds to the first input means 955.

According to an embodiment of the present disclosure, the second electronic device 930 may display the positional change or functional change of the input means to the user through the display (e.g., the display 911 or 931). For example, when the user's finger moves from the first input means 955 to the second input means 975, the second electronic device 930 may continuously display the positional movement of the input means on the display 931. The second electronic device 930 may continuously display, for example, the function that corresponds to the input means, on the display 931.

According to this, the user may recognize the change of the function that corresponds to the input means. For example, when the user's finger shifts from the first input means 955 to the second input means 975, the second electronic device 930 may continuously display (e.g., indicates) the process in which the position of the first user interface 953 that corresponds to the first input means 955 is changed to the position of the second user interface 973 that corresponds to the second input means 975.

According to an embodiment of the present disclosure, the function that corresponds to the input means may be set to correspond to a specific function under the whole situation, or may be set to correspond to different functions according to the function or the application. For example, in the first input means 955, a function may be set such that, when the first input means 955 is pushed, "media player" is pushed regardless of a specific situation. According to an embodiment of the present disclosure, in the first input means 955, according to a function or an application that is being executed in the second electronic device 930, at least one function among the functions such as, a volume control function, a forward/reward function, a menu key function or various additional function that is provided by the application may be set.

According to an embodiment of the present disclosure, the first and second electronic devices 910 and 930 may provide a setting function that is capable of setting a function that corresponds to each input means, to the user. According to this, the user may map and use a function or an application for each input means. According to an embodiment of the present disclosure, the input means may include a touch input device (e.g., the first touch key 143). Or, according to an embodiment of the present disclosure, the input means may include a touch pad, a touch electrode or the like that may sense the user's touch input.

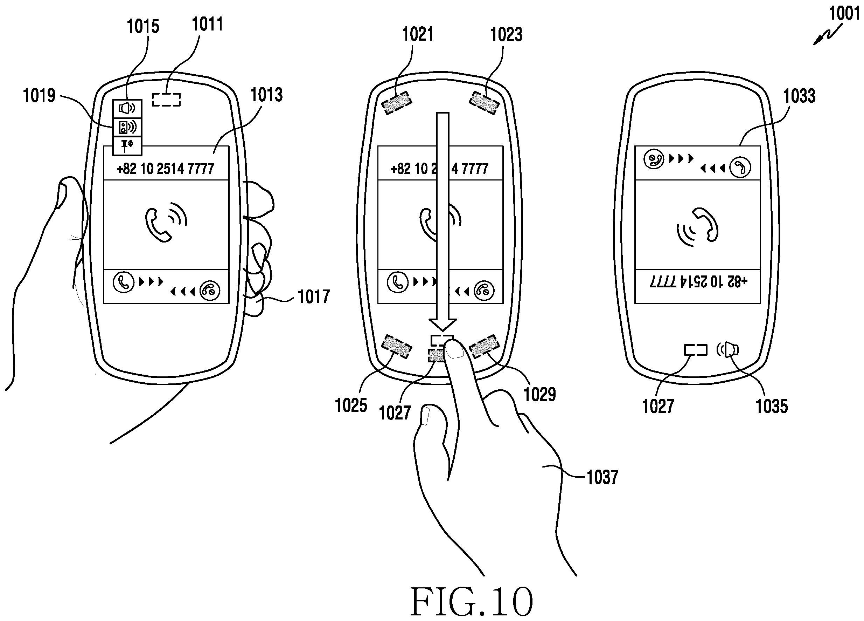

FIG. 10 illustrates user interfaces of an electronic device according to various embodiments of the present disclosure.

Referring to FIG. 10, for example, when a phone call function is executed through an electronic device 1001, a user interface 1013 that corresponds to the phone call function may be displayed. According to an embodiment of the present disclosure, based on the user's grip 1017, a first user interface 1011 that indicates the position of an I/O device that provides a receiver function may be displayed on the upper portion of the electronic device 1001. In an area adjacent to the first user interface 1011, a second user interface 1015 that indicates the receiver function may be displayed.

According to an embodiment of the present disclosure, when the user touches at least one of the first user interface 1011 and the second user interface 1015, the electronic device 1001 may display additional user interfaces (e.g., user interfaces 1019, 1021, 1023, 1025, 1027, and 1029) that are capable of controlling an I/O device 790 (e.g., an I/O device that provides the receiver function or the I/O device 790).

According to an embodiment of the present disclosure, based on a user input that is input to the additional user interfaces, the electronic device 1001 may change the position or the function of the I/O device (e.g., a sub I/O device). For example, when the user selects a speaker shape of the additional interface 1019, the electronic device 1001 may change the function of the I/O device to the speaker function.

According to an embodiment of the present disclosure, when the user selects the first user interface 1011 (e.g., long press), the electronic device 1001 may display at least one of the additional user interfaces 1021, 1023, 1025, 1027, and 1029 in at least a part of a display (e.g., the display 911) that corresponds to the position of another I/O device that is capable of performing the same function as the first I/O device (e.g., a sub I/O device) that corresponds to the first user interface 1011. For example, based on the user's input 1037 that shifts the first user interface 1011, the electronic device 1001 may cause the receiver function of the I/O device to be operated in another I/O device.

For example, based on the user's input 1037 that shifts (selects) the first user interface 1011 to the additional user interface 1027, the electronic device 1001 may execute the receiver function of the I/O device that corresponds to the first user interface 1011 through an I/O device that corresponds to the additional user interface 1027.

According to an embodiment of the present disclosure, when the position of the I/O device is changed based on the user's input 1037, the electronic device 1001 may control the I/O device or change the user interface based on the new situation information (e.g., the change of the function or position of the I/O device). For example, the electronic device 1001 may execute the receiver function through another I/O device that corresponds to the position of the additional user interface 1027, based on the user input 1037.

For example, the orientation of the electronic device 1001 may be changed from the first orientation to the second orientation. For example, the receiver that has been positioned in the upper portion of the electronic device 1001 may be moved to the lower portion of the electronic device 1001. Based on the change of the position of the receiver function, a user interface 1033 that corresponds to the phone call function may be changed from the first orientation to the second orientation. According to an embodiment of the present disclosure, a user interface 1035 that indicates the receiver function may be displayed in an area adjacent to the additional user interface 1027.

According to an embodiment of the present disclosure, the electronic device 1001 may not change the user interface (e.g., the user interface 1013) based on other sensor information other than the situation information. For example, when the user's direction (e.g., the first direction) in relation to the electronic device is not changed even though the user has changed the position of the receiver function through the first user interface 1011 (e.g., the I/O device that corresponds to the user interface 1023), the electronic device may not change the user interface 1013.

According to various embodiments of the present disclosure, an electronic device (e.g., the electronic device 101, 601, or 701) may include an electronic device that does not include a hole in the exterior thereof, as well as an electronic device that includes a hole in the exterior thereof. According to an embodiment of the present disclosure, the electronic device may display a user interface (e.g., the user interface 1013) that corresponds to at least one component of the electronic device through a display that is functionally connected with the electronic device. For example, the electronic device may display the user interface that corresponds to the position of the at least one component through the display. In still another example, the electronic device may display a user interface that corresponds to a function related to the at least one component through the display. According to an embodiment of the present disclosure, the at least one component may include, for example, a camera, a speaker, a microphone, or a PCB.

According to various embodiments of the present disclosure, an electronic device may include a housing that forms the exterior of the electronic device, a display that is positioned on at least one surface of the housing, and an I/O control module that is functionally connected with the display, and the I/O control module may include an electronic device that is set to display a user interface that corresponds to a function or a position related to at least one component that is positioned within the housing.

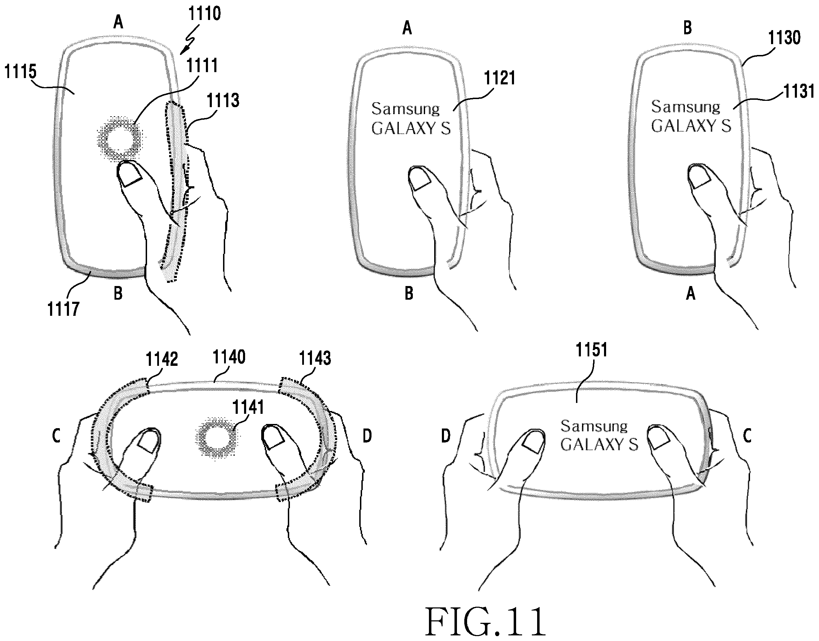

FIG. 11 illustrates a use of an electronic device (e.g., the electronic device 601) according to various embodiments of the present disclosure.

Referring to FIG. 11, the electronic device 1101 may change a user interface that is displayed by the electronic device according to a situation in which the user holds (e.g., grips) the electronic device.

The electronic device 1110 may be in, for example, a standby state (e.g., a sleep state). According to an embodiment of the present disclosure, the electronic device 1110 may provide a user interface to obtain a user input that is capable of switching the electronic device 1110 into the use state. For example, the electronic device 1110 may include, in at least one area thereof, a sensor that is capable of measuring biometric signals that include the user's fingerprint, heart rate, pulse rate, blood flow rate, or the like. For example, the sensor may be formed within, below, or on (or over) the display 1115. According to an embodiment of the present disclosure, the electronic device 1110 may display the user interface in order to indicate the area of the sensor.

For example, when the user's finger comes close to the electronic device 1110, the electronic device 1110 may display the user interface 1111 in the area of the display 1115, which corresponds to the sensor, so as to help the user to recognize the sensor. According to another embodiment of the present disclosure, the sensor that corresponds to the user interface 1111 may be used as a power key of the electronic device 1110.

According to an embodiment of the present disclosure, the electronic device 1110 may use at least one of various input device formed in the electronic device 1110 as the power key. For example, the electronic device 1110 may use at least a part of the frame 1117 (e.g., the frame 113) of the electronic device 1110 (e.g., the first touch key 143), at least one I/O device (e.g., the I/O device 790), or the like as the power key. In another example, the electronic device 1110 may use an action that shakes the electronic device 1110 in an intensity of a predetermined level or higher, a specific action that is performed by using the electronic device 1110 (e.g., an action of drawing a figure of eight (8) in the air using the electronic device 1110), an action of causing the user to be recognized through a camera or a proximity sensor, or the like as the power key (e.g., a power key that corresponds to the user interface 1111).

According to an embodiment of the present disclosure, the electronic device 1110 may set the power key by various methods according to the power state of the electronic device 1110. For example, the electronic device may set the position of the power key for each set state of battery power by various methods. According to an embodiment of the present disclosure, when the battery capacity is sufficient (e.g., about 80% or more of the battery power). The electronic device 1110 may allow one or more of the input devices of the electronic device 1110 (e.g., a sensor hub, a processor, a touch panel, and a frame) as a power key. According to an embodiment of the present disclosure, when the battery capacity is insufficient (e.g., about 30% or less of the battery power), the electronic device 1110 may use only some of the input devices of the electronic device 1110 as power keys.

For example, the electronic device may determine an orientation to display the user interface based on the situation information when it is switched from the standby state (e.g., sleep state) to the use state (e.g., idle state). The idle state may refer to, for example, a state in which the display is generally turned on. For example, the idle state may refer to a state in which the electronic device has come out of the sleep state and does not perform any function except the function of displaying a screen.

According to an embodiment of the present disclosure, at least partially based on the situation information (e.g., the user's grip 1113) that has been acquired through the frame of the electronic device (e.g., the frame 113), the electronic device 1110 (e.g., the electronic device 601) may display a user interface (e.g., the user interface 1121 to be suitable for the situation information when the user pushes the power key that corresponds to the user interface 1121. For example, when the user uses the electronic device 1110 such that the direction A is positioned at the upper end, the electronic device (e.g., the I/O control module 780) may display the user interface 1121. For example, when the user uses the electronic device 1130 such that the direction B is positioned in the upper end, the electronic device 1130 may display a user interface 1131 instead of the user interface 1121 to be suitable for the situation in which the direction B is positioned at the upper end.

According to an embodiment of the present disclosure, when the user uses the electronic device horizontally, the electronic device 1140 may determine the situation information (e.g., the state of grips 1142 and 1143) through the frame. For example, the electronic device may acquire the situation information (e.g., the grips 1142 and 1143) for the electronic device 1140, and may display the user interface 1151 suitable for the grips (e.g., the situation information) when the user pushes the power key (e.g., the power key that corresponds to the user interface 1141).

According to an embodiment of the present disclosure, at least partially based on the situation information, the electronic device 1140 may change the position of the power key to a position where the user may conveniently push the power key, and may provide the power key at the changed position. For example, upon recognizing the state of the grip 1143, the electronic device 1140 may move the power key toward the grip 1143, and may display the position of the corresponding power key (e.g., the user interface 1141) to the user through the display. According to an embodiment of the present disclosure, even when the direction C and the direction D are changed (e.g., when the user uses the electronic device 1140 in the reversed orientation), the electronic device 1140 may display a user interface that is suitable for the situation information of the electronic device 1140.

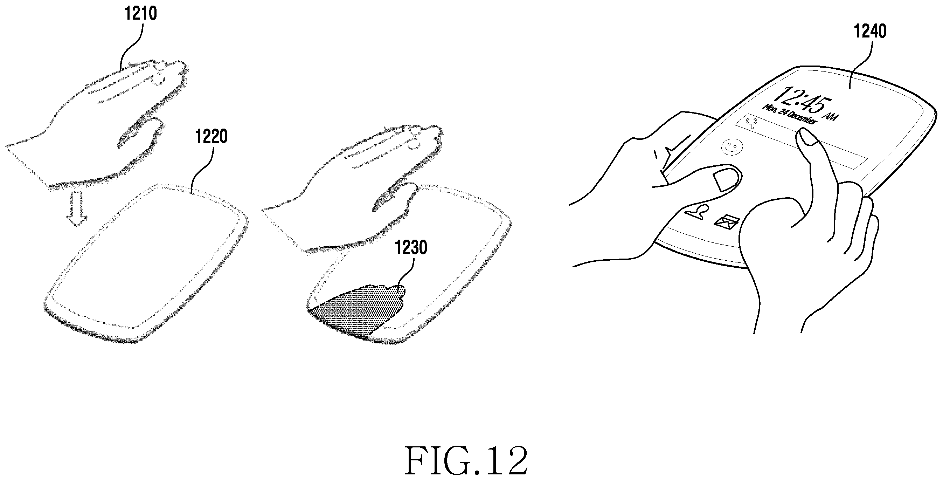

FIG. 12 illustrates a user interface according to various embodiments of the present disclosure.

Referring to FIG. 12, according to an embodiment of the present disclosure, the electronic device 1220 (e.g., the electronic device 601) may change the user interface to be provided to the user at least partially based on the situation information.

According to an embodiment of the present disclosure, when the electronic device 1220 is in the standby state, the electronic device 1220 may switch the electronic device 1220 into the use state based on a part of the user's body (e.g., the user's hand) 1210. For example, in the standby state of the electronic device 1220, when the user's hand 1210 comes close to the display of the electronic device 1220, the electronic device 1220 may switch the state of the electronic device 1220 into the use state depending on the user's proximity degree.

According to an embodiment of the present disclosure, when the user's hand 1210 comes close to the electronic device 1220 in the standby state, the electronic device 1220 may display a user interface 1230 as a shadow of the user's hand that is projected thereto through the display. In addition, the electronic device 1220 may authenticate the user through the shadow user interface that corresponds to the user's hand 1210. For example, when the shadow coincides with the designated user information (e.g., designated shadow information), the electronic device 1220 may display the home screen 1240 through the display by switching the state of the electronic device 1220 into the use state.

According to an embodiment of the present disclosure, in the standby state, the electronic device 1220 may acquire additional information from the user in order to determine the situation information. For example, based on the user's input, the electronic device 1220 may acquire additional information (hand proximity information 1230) through the user's hand 1210 when the electronic device 1220 is switched from the standby state to the user state (e.g., when the electronic device is switched from the sleep state to the idle state through the power key input).

According to an embodiment of the present disclosure, the electronic device 1220 (e.g., the I/O control module 780) may determine situation information to display the user interface by acquiring additional information to determine the proximity information of the user's hand 1210 as the additional information to determine the situation information through the display. For example, when the user uses the electronic device 1220 that is placed on a flat location (e.g., a table or a desk), it may be difficult for the electronic device 1220 to determine the user's current situation information that corresponds to the electronic device 1220 merely based on sensor information. For example, the sensor information may be insufficient for determining which side of the electronic device 1220 the user uses the electronic device 1220. In such a case, according to an embodiment of the present disclosure, the electronic device 1220 may additionally acquire the proximity information from the user's hand 1210 so as to determine the user's situation information that corresponds to the electronic device 1220.

According to an embodiment of the present disclosure, the electronic device 1220 may determine the situation information based on the user's input that is performed in various manners. For example, when the power key (e.g., the power key that corresponds to the user interface 1111) is pushed, the electronic device 1220 may acquire orientation information of the user's finger that is acquired around the power key. For example, when an input is acquired through the power key, the electronic device 1220 may also acquire information of the user's line of sight or face orientation through a camera. According to an embodiment of the present disclosure, based on the acquisition of the input related to the power key, the electronic device 1220 may additionally confirm the input orientation or intensity so as to determine the situation information.

FIG. 13 illustrates a user interface according to various embodiments of the present disclosure.

Referring to FIG. 13, according to an embodiment of the present disclosure, the electronic device 1301 (e.g., the electronic device 601) may display the first to third user interfaces 1303, 1313, and 1323 that correspond to connection portions 1307, 1317, and 1327) (e.g., the external interface 123), respectively, that are capable of being connected with external devices (e.g., external devices 1305, 1315, and 1325), through the display 1350.

For example, the first user interface 1303 may indicate information that is associated with the connection portion 1307 (e.g., the position or size of the connection portion 1307), which is formed on, for example, the rear surface of the electronic device 1301 (e.g., the rear cover 111). The second user interface 1313 may indicate information that is associated with the connection portion 1317 that is formed on, for example, the front surface of the electronic device 1301 (e.g., the display 1350). The third user interface 1323 may indicate information that is associated with the connection portion 1327 that is formed on, for example, a side surface of the electronic device 1301 (e.g., the frame 113).

According to an embodiment of the present disclosure, the electronic device 1301 may display the first to third user interfaces 1303, 1313, and 1323 differently according to at least one of the proximity degree and the proximity direction of the external devices 1305, 1315, and 1325, so that the user may easily recognize the connection portions 1307, 1317, and 1327 that correspond to the external devices 1305, 1315, and 1325, respectively. For example, when the first external devices 1305 does not move within the distance designated from the electronic device 1301 (e.g., the distance in which the electronic device 1301 may recognize the magnetic field of the first external devices 1305), the electronic device 1301 may display the first user interface 1303 at the position of the first connection portion 1307.

For example, as the second external connector 1315 gradually comes closer to the electronic device 1301, the electronic device 1301 may move the first user interface 1313 that is displayed at the first position of the display 150 more and more to a second position that corresponds to the connection portion 1317. According to an embodiment of the present disclosure, as the third external connector 1325 gradually comes closer to the side surface of the electronic device 1301, the electronic device 1301 may move the third user interface 1323 that is displayed on the central portion of the display 1350 more and more to the side surface of the electronic device 1301. According to an embodiment of the present disclosure, based on the proximity distance that is changed as the first to third external devices 1305, 1315, and 1325 move close to the electronic device 1301, the electronic device 1301 may display the first to third user interfaces 1303, 1313, and 1323 such that the sizes thereof increase or decrease more and more.

For example, the electronic device 1301 may display the third user interface 1323 in a small size when the external connector 1325 is initially recognized, and may then increase the size of the third user interface 1323 as the external connector 1325 comes close to the electronic device 1301. According to an embodiment of the present disclosure, the electronic device 1301 may inform the user of the position of the connection portion 1327 or the proximity degree of the external connector 1325 not only based on the size of the third user interface 1323, but also through the moving speed, the moving direction, the shape, the deepness shown in 3D, or the color change of the third user interface 1323.

According to an embodiment of the present disclosure, the electronic device 1301 may sense that the external connector 1315 comes close from the right side. In response to the sensing, the electronic device 1301 may move the second user interface 1313 for the connection portion 1317 toward the external connector 1315 so that the user may easily recognize the contact position 1317. According to an embodiment of the present disclosure, the electronic device 1301 may perform a control such that the user interface 1313 does not move over the position of the connection portion 1317 in order to help the user's understanding. According to an embodiment of the present disclosure, the electronic device 1301 may display the user interface 1313 three-dimensionally according to the direction of the external connector 1315.

According to an embodiment of the present disclosure, the first to third portions 1307, 1317, and 1327 may correspond to various kinds of external devices, respectively. For example, the first connection portion 1307 may be correspond to a USB cable, the second connection portion 1317 may correspond to a cable to connect another electronic device, and the third connection portion 1327 may correspond to an HDMI cable.

According to an embodiment of the present disclosure, the electronic device 1301 may display the first to third user interfaces 1303, 1313, and 1323 by icons that have different shapes or colors according to the kinds of first to third external devices 1305, 1315, and 1325. For example, the electronic device 1301 may determine which kind each of the first to third external devices 1305, 1315, and 1325 through a signal or magnetic force that is emitted from each of the first to third external devices 1305, 1315, and 1325 to a short distance. In addition, according to the kind, the electronic device 1301 may indicate the color, shape, size, movement, or the like of first to third user interfaces 1303, 1313, and 1323 that correspond to the first to third external devices 1305, 1315, 1325, respectively.

For example, the first user interface 1303 that corresponds to a USB cable for data communication may be indicated by a U-shaped icon, the second user interface 1313 that corresponds to a charge cable for charging may be indicated by a C-shaped icon, and the third user interface 1323 that corresponds to another electronic device may be indicated by a D-shaped icon or the like. According to an embodiment of the present disclosure, the connection portions 1307, 1317, and 1327 that correspond to the external devices 1305, 1315, and 1325, respectively, may be formed in different areas or in the same area of the electronic device 1301.

Although not illustrated, according to an embodiment of the present disclosure, in the case where the electronic device 1301 provides an image (e.g., image data that is provided through the display 1350), the electronic device 1301 may gradually change the size, color, position, resolution of the image or the area where the image is output as the external device 1305, 1315, or 1325 comes close thereto.

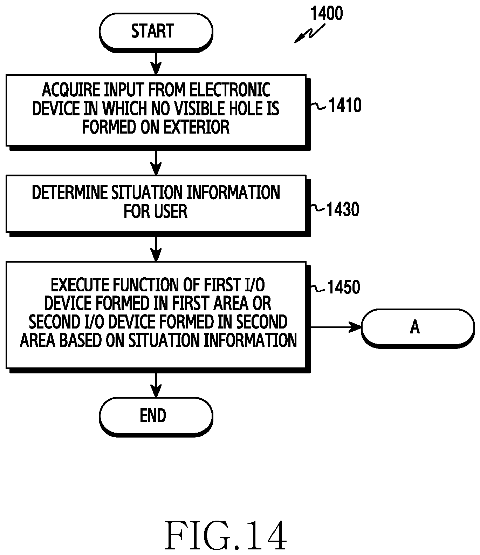

FIG. 14 illustrates a flowchart 1400 for an operation to control an I/O device of an electronic device (e.g., the electronic device 601) according to various embodiments of the present disclosure.

Referring to FIG. 14, according to an embodiment of the present disclosure, in operation 1410, the electronic device (e.g., the acquisition module 781) may acquire an input that is associated with a function or an application of the electronic device from the user. For example, the electronic device may acquire an input (e.g., an icon selection or a command input) as to which function or application is to be executed from the user. According to an embodiment of the present disclosure, the function or the application may include various functions or applications that can be performed by the electronic device, such as a wake up operation, a phone call operation, a messenger, a camera, a game, scheduling, or navigation. The electronic device may be an electronic device in which no visible hole is formed on the exterior of the electronic device.

According to an embodiment of the present disclosure, in operation 1430, the electronic device (e.g., the determination module 783) may determine the user's situation information for the electronic device. For example, based on sensor information, the electronic device may determine the user's situation information. According to an embodiment of the present disclosure, the situation information may include, for example, the orientation of the electronic device, the power state of the electronic device, the user's line of sight for the electronic device, the user's grip state for the electronic device, the orientation of the electronic device in relation to the user, or the like.

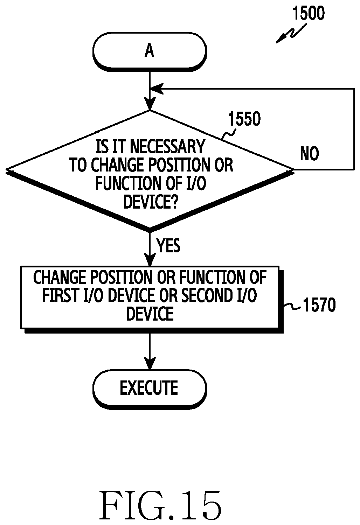

According to an embodiment of the present disclosure, in operation 1450, the electronic device (e.g., the execution module 785) may execute a function of an I/O device that is formed in the first area of the electronic device or a function of a second I/O device that is formed in a second area at least partially based on the situation information. For example, based on situation information in which the user holds the first area of the electronic device (e.g., the lower end of the electronic device) and the function that is being executed by the electronic device is a phone call function, the electronic device may cause the first I/O device that is positioned in the upper end of the electronic device to execute the speaker function, and the second I/O device that is positioned in the lower end of the electronic device to execute the microphone function. Additional operations associated with operation 1450 will be described with reference to FIG. 15.

FIG. 15 illustrates a flowchart 1500 for an operation of controlling an I/O device of an electronic device (e.g., the electronic device 601) according to various embodiments of the present disclosure.

Referring to FIG. 15, according to an embodiment of the present disclosure, in operation 1550, based on situation information, the electronic device (e.g., the execution module 785) may determine whether it is necessary to change the functions of the first and second I/O devices that are formed in the electronic device. For example, as the situation information is changed from the first situation information to the second situation information in response to the user's input, the electronic device may determine whether there is an I/O device (e.g., the I/O device 790) that requires the change of function or the change of position.

According to an embodiment of the present disclosure, even if the situation information has been changed from the first situation information to the second situation information, a situation in which it is not necessary to change a function or position or the I/O device may occur. For example, when the operation of the electronic device that corresponds to the second situation information does not use the function of an I/O device (e.g., a sub I/O device), the electronic device may not change the function or position of the I/O device.

In another example, when the user cannot recognize the operation of the electronic device as the operation of the electronic device that corresponds to the second situation information occurs very transiently, the electronic device may not change the function or position of the I/O device. In another example, the electronic device may not change the function or position of the I/O device when it is highly probable that the operation of the electronic device after the operation of the electronic device that corresponds to the second situation information has been terminated is the same as or similar to the operation of the electronic device that corresponds to the first situation information.

For example, when the electronic device receives a message from another electronic device while the user enjoys a movie through the electronic device, the situation information indicating that the user confirms the message may be transient situation information. In such a case, the electronic device may hold or may not execute the change of the function of the I/O device based on the situation information.

According to an embodiment of the present disclosure, in operation 1570, the electronic device (e.g., the execution module 785) may change the function of an I/O device that is formed in the electronic device (e.g., the first I/O device 793 or the second I/O device 795) at least partially based on the situation information. For example, as the situation information is changed from the first situation information to the second situation information, the function of the I/O device of the electronic device may also be changed.

For example, in the first situation information, the first I/O device that is formed in the first area of the electronic device may provide a microphone function, and the second I/O device that is formed in the second area of the electronic device may provide a speaker function. On the contrary, in the second situation information, the first I/O device may provide the speaker function, and the second I/O device may provide the microphone function.

According to various embodiments of the present disclosure, an electronic device may include: a first I/O device that is formed in a first area of the electronic device; and a second I/O device that is formed in a second area of the electronic device. No substantially visible hole is formed on the exterior of the electronic device.

According to various embodiments of the present disclosure, the first I/O device and the second I/O device may be formed at substantially symmetric portions of the electronic device, respectively.

According to various embodiments of the present disclosure, the first I/O device and the second I/O device may be set to execute substantially the same functions.

According to various embodiments of the present disclosure, at least one I/O device among the first I/O device and the second I/O device may be set to transfer vibration through at least a part of a housing or a display of the electronic device.

According to various embodiments of the present disclosure, the at least one I/O device may include a piezo material that is configured to acquire or output a sound.

According to various embodiments of the present disclosure, the electronic device may further include an I/O control module, wherein the I/O control module is set to: determine situation information for a user who handles the electronic device; execute a function through the first I/O device in response to an input when the situation information is first situation information; and execute the function through the second I/O device when the situation information is second situation information.

According to various embodiments of the present disclosure, the I/O control module may be configured to determine the situation information at least partially based on information that is acquired through at least one sensor that is functionally connected with the electronic device. The situation information may be set to include: an orientation of the electronic direction, a power state of the electronic device, a user's line of sight for the electronic device, the user's grip state for the electronic device, an operation of the electronic device in relation to the user, the distance between the electronic device and the user, the user's position in relation to the electronic device, or the approaching/non-approaching of an external device.

According to various embodiments of the present disclosure, the first area and the second area may be configured to be substantially symmetric to each other in the electronic device, and I/O control module may be set to: deactivate the second I/O device in response to the input when the situation information is the first situation information; and deactivate the first I/O device in response to the input when the situation information is the second situation information.

According to various embodiments of the present disclosure, the electronic device may further include a touch input device that is formed on at least one side surface of the exterior.

According to various embodiments of the present disclosure, the at least one side surface may include a non-conductive area that is formed of a non-conductive material, and the touch input device may be formed of a conductive material, at least a part of which is substantially surrounded by the non-conductive material.

According to various embodiments of the present disclosure, the touch input device may be formed to operate as at least a part of an antenna of the electronic device.

According to various embodiments of the present disclosure, the electronic device may further include a terminal to be connected with an external device, in which the terminal is formed as substantially the same level as the exterior.

According to various embodiments of the present disclosure, the electronic device may include a gap that is formed between the display and the housing of the electronic device and forms a passage that transfers a sound between the first I/O device or the second I/O device and the outside of the electronic device.

According to various embodiments of the present disclosure, at least a part of the gap may be covered by a mesoporous material that forms at least a part of the exterior.

According to various embodiments of the present disclosure, there is provided a method of controlling a plurality of I/O devices. The method may include: acquiring an input through an electronic device that includes an exterior, on which no substantially visible hole is formed; determining situation information for a user who handles the electronic device; performing input/output through a first I/O device that is formed in a first area of the electronic device when the situation information is first situation information in response to the input; and performing input/output through a second I/O device that is formed in a second area of the electronic device when the situation information is second situation information in response to the input.

According to various embodiments of the present disclosure, the acquiring may include acquiring information related to an application or a function of the electronic device through at least a part of the input.

According to various embodiments of the present disclosure, the first I/O device or the second I/O device may include a piezo material, and the performing may include acquiring or outputting a sound using the piezo material, or outputting vibration through at least a part of a housing or a display of the electronic device.

According to various embodiments of the present disclosure, the performing may include displaying a representation that indicates a function or a position of a corresponding I/O device among the first I/O device and the second I/O device on a display that is functionally connected with the electronic device.

According to various embodiments of the present disclosure, the method may further include: acquiring a user's input through the representation; and changing the function or the position of the corresponding I/O device in response to the user's input.

According to various embodiment of the present disclosure, an electronic device may include: an exterior in which no substantially visible hole is formed; a first I/O device that is formed in a first area of the electronic device; a second I/O device that is formed in a second area of the electronic device; and an input output control module. The I/O control module may be set to: determine situation information for a user who handles the electronic device; execute at least one function through the first I/O device in response to an input when the situation information is first situation information; and execute the at least one function through the second I/O device when the situation information is second situation information in response to the input.

According to various embodiments of the present disclosure, the electronic device may further include an I/O device that executes a sound input, a sound output, or a vibration output as the at least one function.

Hereinafter, descriptions will be additionally made on an electronic device according to various embodiments of the present disclosure. Descriptions for the features that are the same as or similar to those illustrated in FIGS. 1 to 15 will be omitted. According to an embodiment of the present disclosure, an electronic device (e.g., the electronic device 101, 601, or 701) may include a housing that forms the exterior of electronic device (e.g., at least a part of the front cover 105, the rear cover 111, or the frame 113), and a sound output device (e.g., the speaker 430 or the receiver) that is not substantially visible to the outside of the electronic device. In such a case, the electronic device may include, for example, a hole that exposes any other component (e.g., at least one of a camera, a power button, an interface terminal, and a light emitting element) in addition to the sound output device. According to an embodiment of the present disclosure, the electronic device may include a receiver that is positioned in the upper end of the electronic device (e.g., the first area 127). The receiver may be, for example, a sound output device that includes a piezo material. According to an embodiment of the present disclosure, the electronic device (e.g., the electronic device 101) may include at least one microphone in the upper end (e.g., the first area 127) and the lower end (e.g., the second area 129) of the electronic device. Accordingly, the electronic device may support a function of the electronic device (e.g., a phone call function) based on, for example, various orientations by the user.

According to an embodiment of the present disclosure, the sound output device may be one of the I/O devices illustrated in FIGS. 1A-1C (e.g., the first I/O device 115 and the second I/O device 117). For example, the sound output device may be an I/O device that is set to execute a sound output function. According to an embodiment of the present disclosure, the sound output device may be replaced by another component, such as a microphone or a vibration element.

According to an embodiment of the present disclosure, an electronic device (e.g., electronic device 101) may control the sound output device (e.g., the speaker 430 or the receiver) based on the use orientation of the electronic device. For example, when the use orientation of the electronic device (e.g., the orientation of the electronic device in which the user uses the electronic device) is a first orientation (e.g., the orientation in which the first area 127 is in the upper end), the electronic device outputs the sound at a first volume through the sound output device, and when the use orientation of the electronic device is a second orientation (e.g., the orientation in which the second area 129 is in the upper end), the electronic device may output the sound at a second volume through the sound output device. According to an embodiment of the present disclosure, the second volume may be louder than the first volume.

According to an embodiment of the present disclosure, an electronic device (e.g., the electronic device 101) may output different volumes through the receiver included therein based on the use orientation of the electronic device so that the electronic device can execute a function (e.g., outputs a sound) that allows the user to hear the same or similar volumes or tones in relation to various use orientations. For example, when the use orientation of the electronic device is the second orientation, the electronic device may output the sound at the second volume through the receiver so that the sound can be output in the lower area (e.g., the second area 129) where the receiver does not exist. As a result, the electronic device may output the sounds that correspond to the use in various orientations by using one receiver.

According to an embodiment of the present disclosure, an electronic device (e.g., the electronic device 101) may indicate, to a user, a user interface (e.g., the first user interface 1011) that corresponds to the sound output device (e.g., the speaker 430 or the receiver), through a display of the electronic device (e.g., the display module 103). For example, when the use orientation of the electronic device is the first orientation, the electronic device may display the sound output position on the first area of the display (e.g., the first area 127). In another example, when the use orientation of the electronic device is the second orientation, the electronic device may display the sound output position in the second area of the display (e.g., the second area 129). Through this, the electronic device may allow the user to know the sound output position in relation to the sound output device that is not substantially visible on the exterior.

According to an embodiment of the present disclosure, an electronic device (e.g., the electronic device 101) may display the user interface corresponding to the sound output device in various forms through the display of the electronic device. For example, the user interface corresponding to the sound output device may additionally include a user interface corresponding to the volume of the sound output device (e.g., a bar graph that expresses the volume).

According to an embodiment of the present disclosure, the user interface corresponding to the sound output device may display the sound output position of the sound output device by user interfaces having various shapes (e.g., shapes of a human face, a lip, a thing, etc.) and may change the user interfaces in real time according to various situations. For example, the electronic device may display a lip-shaped image through the display such that the lip-shaped image is movable in real time according to the sound that is output through the sound output device.

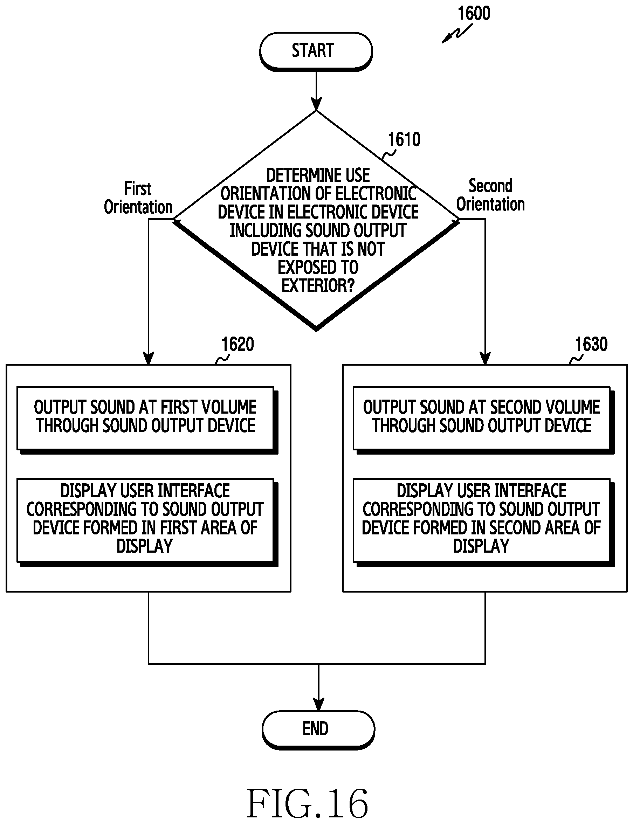

FIG. 16 illustrates a flowchart 1600 for an operation of controlling the sound output device of an electronic device (e.g., the electronic device 101, 601, or 70) according to various embodiments of the present disclosure.

Referring to FIG. 16, according to an embodiment of the present disclosure, in operation 1610, an electronic device (e.g., the electronic device 101), which includes a sound output device that is not exposed on the exterior, may determine the use orientation of the electronic device. For example, the electronic device may determine the orientation in which the user currently uses the electronic device, based on the information that is acquired through various input means of the electronic device (e.g., acquisition module 781).

Operation 1620 is an operation of controlling the sound output device when the use orientation of the electronic device is a first orientation, and operation 1630 is an operation of controlling the sound output device when the use orientation of the electronic device is a second orientation.

In operation 1620, an electronic device (e.g., the electronic device 101) may output a sound at a first volume through the sound output device of the electronic device (e.g., the speaker 430 or the receiver). In such a case, the electronic device may display a user interface corresponding to the sound output device in, for example, the first area of the display of the electronic device (e.g., the first display module 103).

In operation 1630, an electronic device (e.g., the electronic device 101) may output a sound at second volume through the sound output device of the electronic device. At this time, the electronic device may display a user interface corresponding to the sound output device in, for example, the second area of the display of the electronic device.

According to various embodiments of the present disclosure, an electronic device may include: a housing that forms an exterior of the electronic device; a sound output device that is positioned within the housing not to be exposed to the exterior; and a I/O control module that is functionally connected with the sound output device. The I/O control module may be set to: output a sound at a first volume through the sound output device when the use orientation of the electronic device is a first orientation, and output the sound at a second volume through the sound output device when the use orientation is a second orientation.

According to various embodiments of the present disclosure, the electronic device may further include a display that is functionally connected with the I/O control module. The display may set to: display a user interface, which corresponds to the sound output device, in a first area of the display when the use orientation is the first orientation, and display the user interface in a second area of the display when the use orientation is the second orientation.

FIG. 17 is a block diagram of an electronic device 1701 according to various embodiments of the present disclosure.

Referring to FIG. 17, the electronic device 1701 may include, for example, all or a part of the electronic device 601 illustrated in FIG. 6. The electronic device 1701 may include at least one application processor (AP) 1710, a communication module 1720, a subscriber identification module (SIM) card 1724, a memory 1730, a sensor module 1740, an input device 1750, a display 1760, an interface 1770, an audio module 1780, a camera module 1791, a power management module 1795, a battery 1796, an indicator 1797, and a motor 1798.

The AP 1710 may, for example, control a plurality of hardware or software elements connected thereto and perform a variety of data processing and calculations by driving an OS or application programs. The AP 1710 may be implemented as, for example, a system on chip (SoC). According to an embodiment of the present disclosure, the AP 1710 may further include a graphic processing unit (GPU) and/or an image signal processor (ISP). The AP 1710 may include at least some of the elements (e.g., a cellular module 1721) illustrated in FIG. 2. The AP 1710 may load commands or data, received from at least one other element (e.g., a non-volatile memory), in a volatile memory to process the loaded commands or data, and may store various types of data in the non-volatile memory.

The communication module 1720 may have a configuration that is the same as or similar to that of the communication interface 670 of FIG. 6. The communication module 1720 may include, for example, a cellular module 1721, a Wi-Fi module 1723, a BT module 1725, a GPS module 1727, an NFC module 1728, and a RF module 1729. The communication module 1720 provides a function of transmitting/receiving a signal. Accordingly, the communication module 1720 may be referred to as a "reception unit", a "transmission unit", a "transmission and reception unit", a "communication unit", or the like.

The cellular module 1721 may provide, for example, a voice call, a video call, a text message service, or an Internet service through a communication network. According to an embodiment of the present disclosure, the cellular module 1721 may distinguish and authenticate the electronic device 1701 in the communication network by using a SIM (e.g., the SIM card 1724). According to an embodiment of the present disclosure, the cellular module 221 may perform at least some of the functions that the AP 1710 may provide. According to an embodiment of the present disclosure, the cellular module 1721 may include a communication processor (CP).

The Wi-Fi module 1723, the BT module 1725, the GPS module 1727, or the NFC module 1728 may include, for example, a processor for processing data transmitted/received through the corresponding module. According to an embodiment of the present disclosure, at least some (e.g., two or more) of the cellular module 1721, the Wi-Fi module 1723, the BT module 1725, the GPS module 1727, and the NFC module 1728 may be included in a single integrated chip (IC) or IC package.

The RF module 1729 may, for example, transmit/receive a communication signal (e.g., an RF signal). The RF module 1729 may include, for example, a transceiver, a power amp module (PAM), a frequency filter, a low noise amplifier (LNA), or an antenna. According to another embodiment of the present disclosure, at least one of the cellular module 1721, the Wi-Fi module 1723, the BT module 1725, the GPS module 1727, and the NFC module 1728 may transmit/receive an RF signal through a separate RF module.

The SIM card 1724 may include, for example, a card including a SIM and/or an embedded SIM, and may further include unique identification information (e.g., an integrated circuit card identifier (ICCID)) or subscriber information (e.g., international mobile subscriber identity (IMSI)).

The memory 1730 may include, for example, an internal memory 1732 or an external memory 1734. The internal memory 1732 may include, for example, at least one of a volatile memory (e.g., a dynamic random access memory (DRAM), a static RAM (SRAM), a synchronous DRAM (SDRAM), or the like) and a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), a hard disc drive, or a solid state drive (SSD)).

The external memory 1734 may further include a flash drive, for example, a compact flash (CF), a secure digital (SD), a micro-SD, a mini-SD, an extreme digital (xD), a memory stick, or the like. The external memory 1734 may be functionally and/or physically connected to the electronic device 1701 through various interfaces.

The sensor module 1740 may, for example, measure a physical quantity or detect an operating state of the electronic device 1701, and may convert the measured or detected information into an electrical signal. The sensor module 1740 may include, for example, at least one of, a gesture sensor 1740A, a gyro sensor 1740B, an atmospheric pressure sensor 1740C, a magnetic sensor 1740D, an acceleration sensor 1740E, a grip sensor 1740F, a proximity sensor 1740G, a color sensor 1740H (e.g., red, green, and blue (RGB) sensor), a bio-sensor 1740I, a temperature/humidity sensor 1740J, an illumination sensor 1740K, and a ultra violet (UV) sensor 1740M. Additionally or alternatively, the sensor module 1740 may include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 1740 may further include a control circuit for controlling one or more sensors included therein. In an embodiment of the present disclosure, the electronic device 1701 may further include a processor that is configured as a part of the AP 1710 or a separate element from the AP 1710 in order to control the sensor module 1740, thereby controlling the sensor module 1740 while the AP 1710 is in a sleep state.

The input device 1750 may include, for example, a touch panel 1752, a (digital) pen sensor 1754, a key 1756, or an ultrasonic input device 1758. The touch panel 1752 may use at least one of, for example, a capacitive type, a resistive type, an infrared type, and an ultrasonic type. In addition, the touch panel 252 may further include a control circuit. The touch panel 1752 may further include a tactile layer to provide a tactile reaction to a user.

The (digital) pen sensor 1754 may be, for example, a part of the touch panel, or may include a separate recognition sheet. The key 1756 may include, for example, a physical button, an optical key, or a keypad. The ultrasonic input device 1758 may identify data by detecting acoustic waves with a microphone (e.g., a microphone 1788) of the electronic device 1701 through an input unit for generating an ultrasonic signal.

The display 1760 (e.g., the display 660) may include a panel 1762, a hologram device 1764, or a projector 1766. The panel 1762 may include a configuration that is the same as or similar to that of the display 660 of FIG. 6. The panel 1762 may be implemented to be, for example, flexible, transparent, or wearable. The panel 1762 may be configured as a single module integrated with the touch panel 1752. The hologram device 1764 may show a stereoscopic image in the air using interference of light. The projector 1766 may project light onto a screen to display an image. The screen may be located, for example, in the interior of or on the exterior of the electronic device 1701. According to an embodiment of the present disclosure, the display 1760 may further include a control circuit for controlling the panel 1762, the hologram device 1764, or the projector 1766.

The interface 1770 may include, for example, a HDMI 1772, a USB 1774, an optical interface 1776, or a D-subminiature (D-sub) 1778. The interface 1770 may be included in, for example, the communication interface 670 illustrated in FIG. 6. Additionally or alternatively, the interface 1770 may include, for example, a mobile high-definition link (MHL) interface, a SD card/multi-media card (MMC) interface, or an infrared data association (IrDA) standard interface.

The audio module 1780 may, for example, convert a sound into an electrical signal, and vice versa. At least some elements of the audio module 1780 may be included in, for example, the first and/or second I/O devices 115 and 117 illustrated in FIGS. 1A-1C. The audio module 1780 may, for example, process sound information that is input or output through the speaker 1782, the receiver 1784, the earphones 1786, the microphone 1788, or the like.

The camera module 1791 may be, for example, a device that can take a still image or a moving image, and according to an embodiment of the present disclosure, the camera module 1791 may include one or more image sensors (e.g., a front sensor or a rear sensor), a lens, an ISP, or a flash (e.g., an LED or a xenon lamp).

The power management module 1795 may, for example, manage power of the electronic device 1701. According to an embodiment of the present disclosure, the power management module 1795 may include a power management integrated circuit (PMIC), a charger integrated circuit (IC), or a battery or fuel gauge. The PMIC may have a wired and/or wireless charging scheme. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery gauge may measure, for example, a residual quantity of the battery 1796, and a voltage, a current, or a temperature while charging. The battery 1796 may include, for example, a rechargeable battery and/or a solar battery.

The indicator 1797 may indicate a specific state of the electronic device 1701 or a part thereof (e.g., the AP 1710), for example, a booting state, a message state, a charging state, or the like. The motor 1798 may convert an electrical signal into a mechanical vibration, and may generate a vibration or haptic effect. Although not illustrated, the electronic device 1701 may include a processing unit (e.g., a GPU) for mobile TV support. The processing device for mobile TV support may, for example, process media data according to a standard of digital multimedia broadcasting (DMB), digital video broadcasting (DVB), media flow, or the like.

Each of the components of the electronic device according to the present disclosure may be implemented by one or more components and the name of the corresponding component may vary depending on a type of the electronic device. In various embodiments of the present disclosure, the electronic device may include at least one of the above-described elements. Some of the above-described elements may be omitted from the electronic device, or the electronic device may further include additional elements. Further, some of the elements of the electronic device according to various embodiments of the present disclosure may be coupled to form a single entity while performing the same functions as those of the corresponding elements before the coupling.

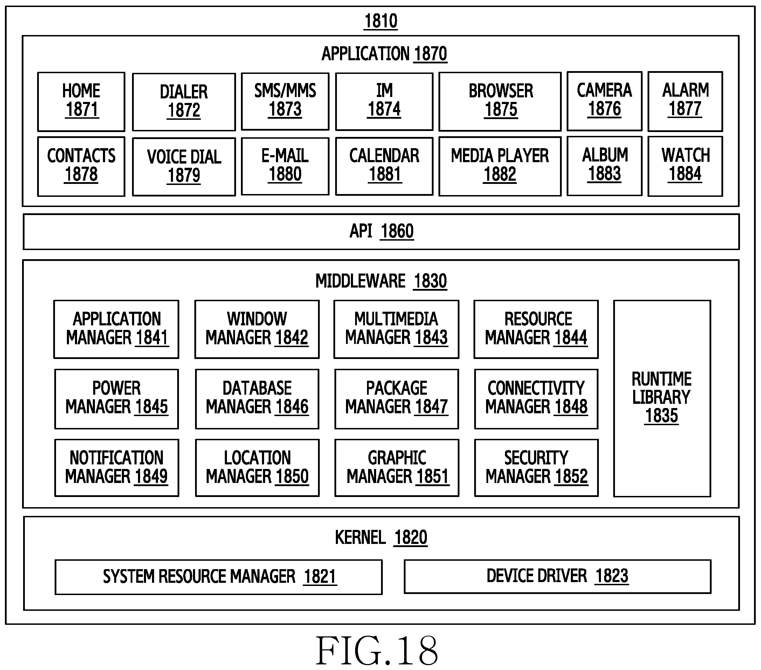

FIG. 18 is a block diagram of a program module 1810 according to various embodiments of the present disclosure.

Referring to FIG. 18, the program module 1810 (e.g., the program 640) may include an OS that controls resources relating to an electronic device (e.g., the electronic device 601) and/or various applications (e.g., the application programs 647) executed in the OS. The OS may be, for example, Android, iOS, Windows, Symbian, Tizen, Bada, or the like.

The program module 1810 may include a kernel 1820, middleware 1830, an application programming interface (API) 1860, and/or applications 1870. At least some of the program module 1810 may be preloaded in the electronic device, or may be downloaded from a server (e.g., the server 606).

The kernel 1820 (e.g., the kernel 641 of FIG. 6) may include, for example, a system resource manager 1821 or a device driver 1823. The system resource manager 1821 may control, allocate, or collect system resources. According to an embodiment of the present disclosure, the system resource manager 1821 may include a process management unit, a memory management unit, or a file system management unit. The device driver 1823 may include, for example, a display driver, a camera driver, a BT driver, a shared-memory driver, a USB driver, a keypad driver, a Wi-Fi driver, an audio driver, or an inter-process communication (IPC) driver.

The middleware 1830 may provide a function used by the applications 1870 in common, or may provide various functions to the applications 1870 through the API 1860 to enable the applications 1870 to efficiently use limited system resources in the electronic device. According to an embodiment of the present disclosure, the middleware 1830 (e.g., the middleware 643) may include at least one of a run time library 1835, an application manager 1841, a window manager 1842, a multimedia manager 1843, a resource manager 1844, a power manager 1845, a database manager 1846, a package manager 1847, a connectivity manager 1848, a notification manager 1849, a location manager 1850, a graphic manager 1851, and a security manager 1852.

The runtime library 1835 may include, for example, a library module used by a complier in order to add a new function through a programming language during the execution of the applications 1870. The run time library 1835 may perform input/output management, memory management, or a function for an arithmetic function.

The application manager 1841 may manage, for example, a life cycle of at least one of the applications 1870. The window manager 1842 may manage GUI resources used by a screen. The multimedia manager 1843 may identify a format used for reproducing various media files, and may encode or decode a media file using a codec suitable for the corresponding format. The resource manager 1844 may manage resources of at least one of the applications 1870, such as a source code, a memory, a storage space, and the like.

The power manager 1845 may operate together with, for example, a basic input/output system (BIOS) to manage a battery or power and provide power information used for an operation of the electronic device. The database manager 1846 may generate, search, or change a database to be used by at least one of the applications 1870. The package manager 1847 may manage installation or update of an application distributed in the format of a package file.

The connectivity manager 1848 may manage, for example, a wireless connection, such as Wi-Fi or BT. The notification manager 1849 may display or notify of an event, such as a received message, an appointment, and a proximity notification, in such a manner as not to disturb a user. The location manager 1850 may manage location information of the electronic device. The graphic manager 1851 may manage a graphic effect to be provided to a user, or a user interface related thereto. The security manager 1852 may provide all security functions used for system security or user authentication. According to an embodiment of the present disclosure, in cases where the electronic device (e.g., the electronic device 601) has a telephone call function, the middleware 1830 may further include a telephony manager for managing a voice or video call function of the electronic device.

The middleware 1830 may include a middleware module that forms combinations of various functions of the aforementioned elements. The middleware 1830 may provide specialized modules according to the types of OSs in order to provide differentiated functions. In addition, the middleware 1830 may dynamically delete some of the existing elements, or may add new elements.

The API 1860 (e.g., the API 645) may be, for example, a set of API programming functions, and may be provided with different configurations according to OSs. For example, in the case of Android or iOS, one API set may be provided for each platform, and in the case of Tizen, two or more API sets may be provided for each platform.

The applications 1870 (e.g., the application programs 647) may include, for example, one or more applications that can provide functions, such as home 1871, dialer 1872, short message service (SMS)/multimedia messaging service (MMS) 1873, instant message (IM) 1874, browser 1875, camera 1876, alarm 1877, contact 1878, voice dialer 1879, e-mail 1880, calendar 1881, media player 1882, album 1883, clock 1884, health care (e.g., to measure exercise quantity or blood sugar), or environment information (e.g., atmospheric pressure, humidity, or temperature information).

According to an embodiment of the present disclosure, the applications 1870 may include an application (hereinafter, referred to as an "information exchange application" for convenience of the description) that supports information exchange between the electronic device (e.g., the electronic device 601) and external electronic devices (e.g., the electronic devices 602 and 604). The information exchange application may include, for example, a notification relay application for transmitting specific information to the external electronic device, or a device management application for managing the external electronic device.

For example, the notification relay application may include a function of transferring, to an external electronic device (e.g., the electronic device 602 or 604), notification information generated from other applications of the electronic device (e.g., an SMS/MMS application, an e-mail application, a health management application, or an environmental information application). Furthermore, the notification relay application may, for example, receive notification information from an external electronic device and provide the received notification information to a user. The device management application may, for example, manage (e.g., install, delete, or update) at least one function of an external electronic device (e.g., the electronic device 604) communicating with the electronic device (for example, a function of turning on/off the external electronic device itself (or some elements thereof), or a function of adjusting luminance (or a resolution) of the display), applications operating in the external electronic device, or services provided by the external electronic device (e.g., a telephone call service or a message service).

According to an embodiment of the present disclosure, the applications 1870 may include an application (e.g., a health care application) specified according to attributes (e.g., attributes of the electronic device such as the type of electronic device which corresponds to a mobile medical device) of the external electronic device (e.g., the electronic device 602 or 604). According to an embodiment of the present disclosure, the applications 1870 may include an application received from an external electronic device (e.g., the server 606 or the electronic device 602 or 604). According to an embodiment of the present disclosure, the applications 1870 may include a preloaded application or a third party application that can be downloaded from a server. The names of the elements of the program module 1810, according to the embodiment of the present disclosure illustrated in the drawing, may vary according to the type of OS.

According to various embodiments of the present disclosure, at least a part of the program module 1810 may be implemented in software, firmware, hardware, or a combination of two or more thereof. At least some of the program module 1810 may be implemented (for example, executed) by, for example, the processor. At least some of the program module 1810 may include, for example, a module, program, routine, sets of instructions, process, or the like for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an application-specific integrated circuit (ASIC) chip, a Field-Programmable Gate Arrays (FPGA), and a programmable-logic device for performing operations which has been known or are to be developed hereinafter.

According to various embodiments of the present disclosure, at least some of the devices (for example, modules or functions thereof) or the method (for example, operations) according to the present disclosure may be implemented by a command stored in a computer-readable storage medium in a programming module form. The instruction, when executed by a processor (e.g., the processor 620), may cause the one or more processors to execute the function corresponding to the instruction. The computer-readable storage medium may be, for example, the memory.

The computer readable recoding medium may include a hard disk, a floppy disk, magnetic media (e.g., a magnetic tape), optical media (e.g., a compact disc ROM (CD-ROM) and a DVD), magneto-optical media (e.g., a floptical disk), a hardware device (e.g., a ROM, a RAM, a flash memory), and the like. In addition, the program instructions may include high class language codes, which can be executed in a computer by using an interpreter, as well as machine codes made by a compiler. Any of the hardware devices as described above may be configured to work as one or more software modules in order to perform the operations according to various embodiments of the present disclosure, and vice versa.

Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

An electronic device, according to various embodiments of the present disclosure, may transmit or receive proximity service data using a proximity service. Here, the proximity service data is advertisement content, and may include images, audio, videos, and the like. The proximity service means a service provided through communication between devices in a short range using low power. Here, the low power means power lower than or equal to a specific threshold value, and the short range means a distance shorter than or equal to a specific threshold value.

Furthermore, the proximity service data, according to the various embodiments of the present disclosure, is transmitted without association. In other words, the proximity service data may be transmitted based on non-association. Here, the transmitting of the proximity service data without association means transmitting/receiving the data only through a procedure of acquiring physical synchronization between a device for transmitting the proximity service data and a device for receiving the proximity service data and identifying the presence thereof, without a procedure of configuring logical association between the devices. For example, in the case of a wireless LAN system (e.g., institute of electrical and electronic engineers (IEEE) 802.11), the proximity service data may be transmitted and received without performing a registration procedure and an association procedure.

The proximity service is provided by a discovery based network. The discovery based network may be configured by periodically transmitting, by one transmitting device, a signal for which a receiver is not specified. Here, the periodically transmitted signal informs of the presence of the network or the transmitting device, and may be referred to as a 'beacon.' Namely, in various embodiments of the present disclosure which will be described below, proximity service data may be transmitted through a network that periodically transmits a nondirectional signal for which a receiver is not specified.

Although the terms "station (STA)", "access point (AP)", "requesting STA", "responding STA", "neighbor awareness networking (NAN) device", "device", "broadcasting device", "service providing device", "proximity service data providing device", "transmitting device", "receiving device", and the like are hereinafter used for convenience of description, the listed terms are employed for distinguishing between electronic devices according to roles thereof. Therefore, the present disclosure is not limited to the listed terms, and any type of electronic device may operate according to a procedure which will be described below.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (101) comprising:
a housing including a front cover (107), a rear cover (111) and a frame (113) positioned between the front cover and the rear cover;
a first input/output (I/O) device (115, 793) disposed in a first area of the electronic device;
a second I/O device (117, 795) disposed in a second area of the electronic device;
a gap formed between the frame and the front cover or the rear cover and forms a passage that transfers a sound from the first I/O device or the second I/O device to an outside of the electronic device;
an I/O control module (780); and a display that is functionally connected with the I/O control module;
wherein the I/O control module (780) is configured to:
determine situation information for a user who handles the electronic device;
execute a function through the first I/O device (115, 793) in response to an input when the situation information is first situation information;
execute the function through the second I/O device (117, 795) when the situation information is second situation information,
display a representation that indicates a function or a position of a corresponding I/O device among the first I/O device and the second I/O device on the display,
acquire an input from the user through the representation, and
change the function or the position of the corresponding I/O device in response to the input from the user;
wherein the front cover (107), the rear cover (111) and the frame (113) are directly exposed to the outside of the electronic device without a hole,
wherein at least a part of the gap is covered by a mesoporous material that forms at least a part of the exterior of the electronic device,
wherein the sound is transferred through the mesoporous material to the outside of the electronic device,
wherein the I/O control module (780) is configured to determine the situation information at least partially based on information that is acquired through at least one sensor that is functionally connected with the electronic device, and
wherein the situation information is set to include at least one of:
a distance between the electronic device and the user, an electronic device orientation with reference to the user, and one of approaching and non-approaching of an external device.

2. The electronic device (101) of claim 1, wherein the first I/O device and the second I/O device are disposed at substantially symmetric portions of the electronic device, respectively, and are set to execute substantially the same functions.

3. The electronic device (101) of claim 1, wherein at least one of the first I/O device and the second I/O device is set to transfer vibration through at least a part of the housing or the display of the electronic device, and includes a piezo material that is configured to acquire or output a sound.

4. The electronic device (101) of claim 1, wherein the first area and the second area are configured to be substantially symmetric to each other in the electronic device, and I/O control module is set to:
deactivate the second I/O device in response to the input when the situation information is the first situation information; and
deactivate the first I/O device in response to the input when the situation information is the second situation information.

5. The electronic device (101) of claim 1, further comprising:
a touch input device that is disposed on at least one side surface of the exterior.
wherein the at least one side surface includes a non-conductive area that is formed of a non-conductive material, and the touch input device is formed of a conductive material, at least a part of which is substantially surrounded by the non-conductive material.

6. The electronic device (101) of claim 5, wherein the touch input device is configured to operate as at least a part of an antenna of the electronic device.

7. The electronic device (101) of claim 1, further comprising a terminal to be connected with an external device, the terminal being formed at substantially the same height level as the surface that forms the exterior of the electronic device (105, 111, 113).

8. A method comprising 2. the steps of:
acquiring an input through an electronic device (101) comprising a housing including a front cover (107), a rear cover (111) and a frame (113) positioned between the front cover and the rear cover; a gap formed between the frame (113) and the front cover (107) or the rear cover (111) forming a passage that transfers a sound from a first I/O device or a second I/O device to an outside of the electronic device, wherein the front cover (107), the rear cover (111) and the frame (113) are directly exposed to the outside of the electronic device without a hole;
determining, by an I/O control module (780), functionally connected with a display, situation information for a user who handles the electronic device (101);
executing a function through the first I/O device (115, 793) in response to an input when the situation information is first situation information;
executing the function through the second I/O device (117, 795) when the situation information is second situation information,
displaying a representation that indicates a function or a position of a corresponding I/O device among the first I/O device and the second I/O device on a display that is functionally connected with the electronic device (101),
acquiring a user's input through the representation; and
changing the function or the position of the corresponding I/O device in response to the user's input,
wherein the determination of the situation information is at least partially based on information that is acquired through at least one sensor that is functionally connected with the electronic device (101);
wherein at least a part of the gap is covered by a mesoporous material that forms at least a part of the exterior of the electronic device (101),
wherein the sound is transferred through the mesoporous material to the outside of the electronic device (101), and
wherein the situation information is set to include:
a distance between the electronic device (101) and the user, an electronic device orientation with reference to the user, and one of approaching and non-approaching of an external device.

9. The method of claim 8, wherein the acquiring includes acquiring information related to an application or a function of the electronic device (101) through at least a part of the input.

10. The electronic device (101) of claim 1 or the method of claim 8, wherein the first I/O device (115, 793) or the second I/O device (117, 795) include a sound output device, and the I/O control module is functionally connected with the sound output device,
wherein the I/O control module (780) being further set to:
output a sound at a first volume through the sound output device when an orientation of the electronic device (101) in which the user uses the electronic device is a first orientation, and
output the sound at a second volume through the sound output device when the orientation of the electronic device (101) in which the user uses the electronic device is a second orientation.

11. The electronic device (101) or the method of claim 10,
wherein the display is set to:
display a user interface, which corresponds to the sound output device, in a first area of the display when the orientation of the electronic device (101) in which the user uses the electronic device is the first orientation, and
display the user interface in a second area of the display when the orientation of the electronic device (101) in which the user uses the electronic device is the second orientation.

12. The method of claim 8, wherein executing the function includes acquiring or outputting a sound using a piezo material through the gap or outputting a vibration through at least a part of the housing or the display of the electronic electronic device (101).

## Patentansprüche

1. Elektronische Vorrichtung (101), welche Folgendes umfasst:
ein Gehäuse, das eine vordere Abdeckung (107), eine hintere Abdeckung (111) und einen Rahmen (113) enthält, der zwischen der vorderen Abdeckung und der hinteren Abdeckung positioniert ist;
eine erste Eingabe/Ausgabe(I/O)-Vorrichtung (115, 793), die in einem ersten Bereich der elektronischen Vorrichtung angeordnet ist;
eine zweite I/O-Vorrichtung (117, 795), die in einem zweiten Bereich der elektronischen Vorrichtung angeordnet ist;
eine Lücke, die zwischen dem Rahmen und der vorderen Abdeckung oder der hinteren Abdeckung gebildet ist und einen Durchgang bildet, der einen Ton von der ersten I/O-Vorrichtung oder der zweiten I/O-Vorrichtung an eine Außenseite der elektronischen Vorrichtung überträgt;
ein I/O-Steuermodul (780);
und ein Display, das funktionell mit dem I/O-Steuermodul verbunden ist;
wobei das I/O-Steuermodul (780) konfiguriert ist zum:
Bestimmen von Situationsinformationen für einen Benutzer, der die elektronische Vorrichtung handhabt;
Ausführen einer Funktion durch die erste I/O-Vorrichtung (115, 793) als Antwort auf eine Eingabe, wenn die Situationsinformationen erste Situationsinformationen sind;
Ausführen der Funktion durch die zweite I/O-Vorrichtung (117, 795), wenn die Situationsinformationen zweite Situationsinformationen sind,
Anzeigen einer Darstellung, die eine Funktion oder eine Position einer entsprechenden I/O-Vorrichtung zwischen der ersten I/O-Vorrichtung und der zweiten I/O-Vorrichtung auf dem Display anzeigt,
Erhalten einer Eingabe von dem Benutzer durch die Darstellung, und
Verändern der Funktion oder der Position der entsprechenden I/O-Vorrichtung als Antwort auf die Eingabe von dem Benutzer;
wobei die vordere Abdeckung (107), die hintere Abdeckung (111) und der Rahmen (113) direkt der Außenseite der elektronischen Vorrichtung ohne Loch ausgesetzt sind,
wobei mindestens ein Teil der Lücke durch ein mesoporöses Material bedeckt wird, das mindestens einen Teil der Außenseite der elektronischen Vorrichtung bildet,
wobei der Ton durch das mesoporöse Material an die Außenseite der elektronischen Vorrichtung übertragen wird,
wobei das I/O-Steuermodul (780) konfiguriert ist, um die Situationsinformationen zumindest teilweise basierend auf Informationen zu bestimmen, die durch mindestens einen Sensor erfasst werden, der funktionell mit der elektronischen Vorrichtung verbunden ist, und
wobei die Situationsinformationen eingestellt sind, um mindestens eines von Folgendem zu enthalten:
eine Distanz zwischen der elektronischen Vorrichtung und dem Benutzer, eine elektronische Vorrichtungsausrichtung in Bezug auf den Benutzer und/oder ein Annähern und Nicht-Annähern einer externen Vorrichtung.

2. Elektronische Vorrichtung (101) nach Anspruch 1, wobei die erste I/O-Vorrichtung bzw. die zweite I/O-Vorrichtung an im Wesentlichen symmetrischen Teilen der elektronischen Vorrichtung angeordnet sind und eingestellt sind, um im Wesentlichen dieselben Funktionen auszuführen.

3. Elektronische Vorrichtung (101) nach Anspruch 1, wobei die erste I/O-Vorrichtung und/oder die zweite I/O-Vorrichtung eingestellt sind, um Vibration über mindestens einen Teil des Gehäuses oder des Displays der elektronischen Vorrichtung zu übertragen und ein Piezomaterial enthalten, das konfiguriert ist, um einen Ton zu erfassen oder auszugeben.

4. Elektronische Vorrichtung (101) nach Anspruch 1, wobei der erste Bereich und der zweite Bereich konfiguriert sind, um im Wesentlichen symmetrisch zueinander in der elektronischen Vorrichtung zu sein, und das I/O-Steuermodul eingestellt ist zum:
Deaktivieren der zweiten I/O-Vorrichtung als Antwort auf die Eingabe, wenn die Situationsinformationen die ersten Situationsinformationen sind; und
Deaktivieren der ersten I/O-Vorrichtung als Antwort auf die Eingabe, wenn die Situationsinformationen die zweiten Situationsinformationen sind.

5. Elektronische Vorrichtung (101) nach Anspruch 1, welche ferner umfasst:
eine Berührungseingabevorrichtung, die auf mindestens einer Seitenfläche der Außenseite angeordnet ist,
wobei die mindestens eine Seitenfläche einen nichtleitenden Bereich enthält, der aus einem nichtleitenden Material gebildet ist, und die Berührungseingabevorrichtung aus einem leitenden Material gebildet ist, von welchem mindestens ein Teil im Wesentlichen von dem nichtleitenden Material umgeben ist.

6. Elektronische Vorrichtung (101) nach Anspruch 5, wobei die Berührungseingabevorrichtung konfiguriert ist, um als mindestens ein Teil einer Antenne der elektronischen Vorrichtung zu arbeiten.

7. Elektronische Vorrichtung (101) nach Anspruch 1, welche ferner ein Endgerät umfasst, das mit einer externen Vorrichtung zu verbinden ist, wobei das Endgerät im Wesentlichen auf derselben Höhenebene wie die Oberfläche gebildet ist, die die Außenseite der elektronischen Vorrichtung (105, 111, 113) bildet.

8. Verfahren, welches folgende Schritte umfasst:
Erhalten einer Eingabe durch eine elektronische Vorrichtung (101), die ein Gehäuse umfasst, das eine vordere Abdeckung (107), eine hintere Abdeckung (111) und einen Rahmen (113) enthält, der zwischen der vorderen Abdeckung und der hinteren Abdeckung positioniert ist; wobei eine Lücke, die zwischen dem Rahmen (113) und der vorderen Abdeckung (107) oder der hinteren Abdeckung (111) gebildet ist, einen Durchgang bildet, der einen Ton von einer ersten I/O-Vorrichtung oder einer zweiten I/O-Vorrichtung an eine Außenseite der elektronischen Vorrichtung überträgt, wobei die vordere Abdeckung (107), die hintere Abdeckung (111) und der Rahmen (113) direkt der Außenseite der elektronischen Vorrichtung ohne Loch ausgesetzt sind;
Bestimmen von Situationsinformationen für einen Benutzer, der die elektronische Vorrichtung (101) handhabt, durch ein I/O-Steuermodul (780), das funktionell mit einem Display verbunden ist;
Ausführen einer Funktion durch die erste I/O-Vorrichtung (115, 793) als Antwort auf eine Eingabe, wenn die Situationsinformationen erste Situationsinformationen sind;
Ausführen der Funktion durch die zweite I/O-Vorrichtung (117, 795), wenn die Situationsinformationen zweite Situationsinformationen sind,
Anzeigen einer Darstellung, die eine Funktion oder eine Position einer entsprechenden I/O-Vorrichtung zwischen der ersten I/O-Vorrichtung und der zweiten I/O-Vorrichtung auf einem Display anzeigt, das funktionell mit der elektronischen Vorrichtung (101) verbunden ist,
Erfassen einer Benutzereingabe durch die Darstellung; und
Ändern der Funktion oder der Position der entsprechenden I/O-Vorrichtung als Antwort auf die Benutzereingabe,
wobei das Bestimmen der Situationsinformationen zumindest teilweise auf Informationen basiert, die durch mindestens einen Sensor erfasst werden, der funktionell mit der elektronischen Vorrichtung (101) verbunden ist;
wobei mindestens ein Teil der Lücke durch ein mesoporöses Material bedeckt wird, das mindestens einen Teil der Außenseite der elektronischen Vorrichtung (101) bildet,
wobei der Ton durch das mesoporöse Material an die Außenseite der elektronischen Vorrichtung (101) übertragen wird, und
wobei die Situationsinformationen eingestellt sind, um Folgendes zu enthalten:
eine Distanz zwischen der elektronischen Vorrichtung (101) und dem Benutzer, eine elektronische Vorrichtungsausrichtung in Bezug auf den Benutzer und ein Annähern oder Nichtannähern einer externen Vorrichtung.

9. Verfahren nach Anspruch 8, wobei das Erfassen das Erfassen von Informationen in Bezug auf eine Anwendung oder eine Funktion der elektronischen Vorrichtung (101) durch mindestens einen Teil der Eingabe enthält.

10. Elektronische Vorrichtung (101) nach Anspruch 1 oder Verfahren nach Anspruch 8, wobei die erste I/O-Vorrichtung (115, 793) oder die zweite I/O-Vorrichtung (117, 795) eine Tonausgabevorrichtung enthalten und das I/O-Steuermodul funktionell mit der Tonausgabevorrichtung verbunden ist,
wobei das I/O-Steuermodul (780) ferner eingestellt ist zum:
Ausgeben eines Tons mit einer ersten Lautstärke durch die Tonausgabevorrichtung, wenn eine Ausrichtung der elektronischen Vorrichtung (101), in der der Benutzer die elektronische Vorrichtung verwendet, eine erste Ausrichtung ist, und
Ausgeben des Tons mit einer zweiten Lautstärke durch die Tonausgabevorrichtung, wenn die Ausrichtung der elektronischen Vorrichtung (101), in der der Benutzer die elektronische Vorrichtung verwendet, eine zweite Ausrichtung ist.

11. Elektronische Vorrichtung (101) oder Verfahren nach Anspruch 10,
wobei das Display eingestellt ist zum:
Anzeigen einer Bedienoberfläche, die der Tonausgabevorrichtung entspricht, in einem ersten Bereich des Displays, wenn die Ausrichtung der elektronischen Vorrichtung (101), in der der Benutzer die elektronische Vorrichtung verwendet, die erste Ausrichtung ist, und
Anzeigen der Bedienoberfläche in einem zweiten Bereich des Displays, wenn die Ausrichtung der elektronischen Vorrichtung (101), in der der Benutzer die elektronische Vorrichtung verwendet, die zweite Ausrichtung ist.

12. Verfahren nach Anspruch 8, wobei das Ausführen der Funktion das Erfassen oder Ausgeben eines Tons unter Verwenden eines Piezomaterials durch die Lücke oder das Ausgeben einer Vibration durch mindestens einen Teil des Gehäuses oder des Displays der elektronischen Vorrichtung (101) einschließt.

## Revendications

1. Dispositif électronique (101) comprenant :
un boîtier incluant un couvercle avant (107), un couvercle arrière (111) et un cadre (113) positionné entre le couvercle avant et le couvercle arrière ;
un premier dispositif d'entrée/sortie (I/O) (115, 793) disposé dans une première zone du dispositif électronique ;
un deuxième dispositif I/O (117, 795) disposé dans une deuxième zone du dispositif électronique ;
un espace formé entre le cadre et le couvercle avant ou le couvercle arrière et créant un passage qui transfère un son en provenance du premier dispositif I/O ou du deuxième dispositif I/O vers l'extérieur du dispositif électronique ;
un module de commande I/O (780) ;
et une unité d'affichage qui est connectée fonctionnellement au module de commande I/O ;
où le module de commande I/O (780) est configuré pour :
déterminer des informations de situation pour un utilisateur qui manipule le dispositif électronique ;
exécuter une fonction par l'intermédiaire du premier dispositif I/O (115, 793) en réponse à une entrée lorsque les informations de situation sont des premières informations de situation ;
exécuter la fonction par l'intermédiaire du deuxième dispositif I/O (117, 795) lorsque les informations de situation sont des deuxièmes informations de situation,
afficher une représentation qui indique une fonction ou une position d'un dispositif I/O correspondant parmi le premier dispositif I/O et le deuxième dispositif I/O sur l'unité d'affichage,
acquérir une entrée de l'utilisateur par l'intermédiaire de la représentation, et
changer la fonction ou la position du dispositif I/O correspondant en réponse à l'entrée de l'utilisateur ;
où le couvercle avant (107), le couvercle arrière (111) et le cadre (113) sont directement exposés à l'extérieur du dispositif électronique sans ouverture,
où au moins une partie de l'espace est recouverte par un matériau mésoporeux qui forme au moins une partie de l'extérieur du dispositif électronique,
où le son est transféré à travers le matériau mésoporeux à l'extérieur du dispositif électronique,
où le module de commande I/O (780) est configuré pour déterminer les informations de situation au moins partiellement sur la base d'informations qui sont acquises par l'intermédiaire d'au moins un capteur qui est connecté fonctionnellement au dispositif électronique, et
où les informations de situation sont définies pour comprendre au moins l'un parmi :
une distance entre le dispositif électronique et l'utilisateur, une orientation du dispositif électronique par rapport à l'utilisateur et l'une parmi l'approche et la non-approche d'un dispositif externe.

2. Dispositif électronique (101) selon la revendication 1, où le premier dispositif I/O et le deuxième dispositif I/O sont disposés à des parties substantiellement symétriques du dispositif électronique, respectivement, et sont configurés pour exécuter substantiellement les mêmes fonctions.

3. Dispositif électronique (101) selon la revendication 1, où au moins l'un parmi le premier dispositif I/O et le deuxième dispositif I/O est réglé pour transférer une vibration à travers au moins une partie du boîtier ou de l'unité d'affichage du dispositif électronique, et comprend un matériau piézoélectrique qui est configuré pour acquérir ou délivrer en sortie un son.

4. Dispositif électronique (101) selon la revendication 1, où la première zone et la deuxième zone sont configurées pour être substantiellement symétriques l'une par rapport à l'autre dans le dispositif électronique, et un module de commande I/O est réglé pour :
désactiver le deuxième dispositif I/O en réponse à l'entrée lorsque les informations de situation sont les premières informations de situation ; et
désactiver le premier dispositif I/O en réponse à l'entrée lorsque les informations de situation sont les deuxièmes informations de situation.

5. Dispositif électronique (101) selon la revendication 1, comprenant en outre :
un dispositif d'entrée tactile qui est disposé sur au moins une surface latérale de l'extérieur,
où l'au moins une surface latérale comprend une zone non conductrice qui est formée d'un matériau non conducteur, et le dispositif d'entrée tactile est formé d'un matériau conducteur, dont au moins une partie est entourée largement par le matériau non conducteur.

6. Dispositif électronique (101) selon la revendication 5, où le dispositif d'entrée tactile est configuré pour fonctionner en tant qu'au moins une partie d'une antenne du dispositif électronique.

7. Dispositif électronique (101) selon la revendication 1, comprenant en outre un terminal destiné à être connecté à un dispositif externe, le terminal étant formé substantiellement au même niveau de hauteur que la surface qui forme l'extérieur du dispositif électronique (105, 111, 113).

8. Procédé comprenant les étapes consistant à :
acquérir une entrée par l'intermédiaire d'un dispositif électronique (101) comprenant un boîtier incluant un couvercle avant (107), un couvercle arrière (111) et un cadre (113) positionné entre le couvercle avant et le couvercle arrière ; un espace formé entre le cadre (113) et le couvercle avant (107) ou le couvercle arrière (111) créant un passage qui transfère un son en provenance d'un premier dispositif I/O ou d'un deuxième dispositif I/O vers l'extérieur du dispositif électronique, où le couvercle avant (107), le couvercle arrière (111) et le cadre (113) sont directement exposés à l'extérieur du dispositif électronique sans ouverture ;
déterminer, par un module de commande I/O (780), connecté fonctionnellement à une unité d'affichage, des informations de situation pour un utilisateur qui manipule le dispositif électronique (101) ;
exécuter une fonction par l'intermédiaire du premier dispositif I/O (115, 793) en réponse à une entrée lorsque les informations de situation sont des premières informations de situation ;
exécuter la fonction par l'intermédiaire du deuxième dispositif I/O (117, 795) lorsque les informations de situation sont des deuxièmes informations de situation,
afficher une représentation qui indique une fonction ou une position d'un dispositif I/O correspondant parmi le premier dispositif I/O et le deuxième dispositif I/O sur une unité d'affichage qui est connectée fonctionnellement au dispositif électronique (101),
acquérir une entrée de l'utilisateur par l'intermédiaire de la représentation ; et
changer la fonction ou la position du dispositif I/O correspondant en réponse à l'entrée de l'utilisateur,
où la détermination des informations de situation est au moins partiellement basée sur des informations qui sont acquises par l'intermédiaire d'au moins un capteur qui est connecté fonctionnellement au dispositif électronique (101) ;
où au moins une partie de l'espace est recouverte par un matériau mésoporeux qui forme au moins une partie de l'extérieur du dispositif électronique (101),
où le son est transféré à travers le matériau mésoporeux à l'extérieur du dispositif électronique (101), et
où les informations de situation sont définies pour comprendre :
une distance entre le dispositif électronique (101) et l'utilisateur, une orientation du dispositif électronique par rapport à l'utilisateur et l'une parmi l'approche et la non-approche d'un dispositif externe.

9. Procédé selon la revendication 8, où l'acquisition comprend l'acquisition d'informations relatives à une application ou à une fonction du dispositif électronique (101) par l'intermédiaire d'au moins une partie de l'entrée.

10. Dispositif électronique (101) selon la revendication 1 ou procédé selon la revendication 8,
où le premier dispositif I/O (115, 793) ou le deuxième dispositif I/O (117, 795) comprend un périphérique de sortie audio, et le module de commande I/O est connecté fonctionnellement au périphérique de sortie audio,
où le module de commande I/O (780) est configuré en outre pour :
délivrer en sortie un son à un premier volume à travers le périphérique de sortie audio lorsqu'une orientation du dispositif électronique (101) où l'utilisateur utilise le dispositif électronique est une première orientation, et
délivrer en sortie le son à un deuxième volume à travers le périphérique de sortie audio lorsque l'orientation du dispositif électronique (101) où l'utilisateur utilise le dispositif électronique est une deuxième orientation.

11. Dispositif électronique (101) ou procédé selon la revendication 10,
où l'unité d'affichage est configurée pour :
afficher une interface utilisateur, qui correspond au périphérique de sortie audio, dans une première zone de l'unité d'affichage lorsque l'orientation du dispositif électronique (101) où l'utilisateur utilise le dispositif électronique est la première orientation, et
afficher l'interface utilisateur dans une deuxième zone de l'unité d'affichage lorsque l'orientation du dispositif électronique (101) où l'utilisateur utilise le dispositif électronique est la deuxième orientation.

12. Procédé selon la revendication 8, où l'exécution de la fonction comprend acquérir ou délivrer en sortie un son en utilisant un matériau piézoélectrique à travers l'espace ou délivrer en sortie une vibration à travers au moins une partie du boîtier ou de l'unité d'affichage du dispositif électronique (101).
